# EUROPÄISCHE PATENTSCHRIFT

(11) **EP 4 523 529 B1**
(45) Veröffentlichungstag und Bekanntmachung des Hinweises auf die Patenterteilung: **28.10.2026**
(21) Anmeldenummer: 24223291.6
(22) Anmeldetag: 09.02.2021
(51) Int. Cl.: A01K 85/01, A01K 97/04, A01K 85/00, H01F 7/14, H01F 7/08, A01K 85/16, A01K 91/06

(54) **ELEKTROMAGNETISCHER PENDELANTRIEB**
ELECTROMAGNETIC PENDULUM DRIVE
ENTRAÎNEMENT ÉLECTROMAGNÉTIQUE PENDULAIRE

(30) Priorität: 10.02.2020 DE 102020103347; 10.03.2020 DE 202020101329 U; 10.01.2021 DE 202021100073 U
(43) Veröffentlichungstag der Anmeldung: 19.03.2025
(62) Dokumentnummer(n) der früheren Anmeldung(en) nach Art. 76 EPÜ: 21707610.8 / 4 102 964
(73) Patentinhaber: HeiPoe Schutzrechtsverwertung UG (haftungsbeschränkt), 86343 Königsbrunn (DE)
(72) Erfinder: Pötsch, Edmund, 86343 Königsbrunn (DE)
(74) Vertreter: Hehn, Christian Michael

(56) Entgegenhaltungen:
- CH-A- 445 186
- KR-A- 20160 013 735
- US-A1- 2015 128 474

## Beschreibung

### Technisches Gebiet

Die vorliegende Erfindung betrifft einen elektromagnetischen Pendelantrieb gemäß dem Oberbegriff des unabhängigen Anspruches 1.

### Stand der Technik

Im Angelsport werden eine Vielzahl von künstlichen Ködern eingesetzt, um den verbotenen Einsatz von lebenden Angelködern zu ersetzen. Ferner werden tote natürliche Angelköder mit einem elektromagnetischen Antrieb bewegt, um Bewegungen einer lebenden Beute nachzuahmen. Dabei kommt es darauf an, den für den Fang auf Raubfische verwendeten künstlichen Angelköder oder einen toten natürlichen Angelköder möglichst naturgetreu bewegt anzubieten.

Aus dem Stand der Technik ist die deutsche Patentanmeldung DE 10 2018 117 801 B3 bekannt, die einen elektromagnetischen Pendelantrieb mit einem relativ zu einem selbstbewegbaren künstlichen Köderfisch beweglichen Dauermagneten offenbart, der geeignet ist, einen künstlichen Angelköder körper- und schwanzseitig zu bewegen. Die Ausrichtung der Erregerspule des Elektromagneten ist so ausgerichtet, dass eine Polachse seines Magnetfeldes quer zu einer Längsachse des selbstbewegbaren künstlichen Köderfisches verläuft und der bewegliche Dauermagnet ist aufgrund einer magnetischen Krafteinwirkung durch ein magnetisches Kraftfeld des Elektromagneten quer zur Längsachse des selbstbewegbaren künstlichen Köderfisches bewegbar.

Die offenbarte Anordnung der elektromagnetischen Komponenten, insbesondere der elektromagnetischen Spule, erfordert einen ausreichend großen Bewegungsraum zur Aufnahme der quer zur Längsachse des selbstbewegbaren künstlichen Köderfisches liegenden Erregerspule, was eine ausreichend große Körperhülle erfordert. Eine für kleine Körperhüllen erforderliche miniaturisierte Ausführung, um auch in kleineren Angelködern wie beispielsweise künstlichen oder natürlichen Köderfischen Platz zu finden, reduziert das verfügbare Bewegungsmoment und die maximal mögliche Auslenkung der Schwanzflosse.

US 2017/0181 417 Al offenbart einen motorisierten Angelköder mit einer oder mehreren Schwenkvorrichtungen an einer Antriebseinheit. Die Antriebseinheit bewirkt, dass sich die Schwanz- und/oder Kopfteile der Angelköder bewegen und Raubfische anziehen soll. Unter dieser Bewegung wird allgemein verstanden, dass Kopf- und Schwanzteile des Köders sich von Seite zu Seite bewegen, um einen schwimmenden Fisch oder alternativ einen Fisch in Not nachzuahmen. Die Antriebseinheit wird von einer Stromquelle zur Bereitstellung elektrischer Energie versorgt. Eine an eine Stromquelle angeschlossene Steuerung mit wenigstens einem an die Steuerung angeschlossenen elektromagnetischen Aktormotor oder einem nicht näher spezifizierten elektromagnetischen Spulenmotor zur Umwandlung der elektrischen Energie in mechanische Energie und ein gelenkiges Scharnier, das an den elektromagnetischen Aktormotor oder den elektromagnetischen Spulenmotor gekoppelt ist, um die mechanische Energie in die Bewegung des Angelköders umzuwandeln. Nachteilig ist dabei, dass der elektromagnetische Aktormotor und das gelenkige Scharnier eine hohe Energieaufnahme erfordern und dass die Anordnung bei der Bewegung unnatürliche Drehgeräusche und mechanische Umklappgeräusche erzeugt, welche ein Raubfisch über sein empfindliches Seitenlinienorgan aufnimmt und ihn abschrecken kann. Der elektromagnetische Spulenmotor ist begrifflich als "electro-magnetic coil motor" erwähnt und ist zur Realisierung eines Elektromotors, welcher bekannterweise rotierende elektromagnetische Spulen umfasst, geeignet.

WO 2016 187 007 A1 beschreibt eine bewegungserzeugende Vorrichtung mit einem Antrieb, der funktional mit einer ablenkbaren Struktur verbunden ist, die derart konstruiert und angeordnet ist, um in das Maul eines Köderfisches eingesetzt zu werden. Der Antrieb und die ablenkbare Struktur sind geeignet, eine Ablenkung eines Teils des Köderfisches von mindestens 5 Grad zu verursachen. Es wird eine Vorrichtung, umfassend ein Gehäuse mit einem beweglichen Teil und einem Antrieb beschrieben, der den beweglichen Teil relativ zum Gehäuse bewegt. Gehäuse, beweglicher Teil und Antrieb sind so dimensioniert und geformt, dass sie zumindest teilweise in einen Köderfisch passen. Weiterhin bewegen der Antrieb und der bewegliche Teil, wenn sie im Köderfisch positioniert sind, einen ersten Teil des Köderfisches relativ zu einem zweiten Teil des Köderfisches.

Der Antrieb erzeugt eine kontinuierliche oder intermittierende Drehbewegung, um ein mechanisches Gestänge oder ein exzentrisches Antriebselement anzutreiben und erzeugt eine lineare Bewegung, wie sie von einem Kolben erzeugt wird. Dabei kann ein Antrieb einen oder mehrere von einem Elektromotor, elektroaktive Polymere, piezoelektrische Materialien, einen Hydraulikmotor, Getriebeteile, Kolben, nicht näher spezifizierte elektromagnetische Spulen und magnetische Materialien, Federn, exzentrisch gedrehte Stifte, Schlitze, Joche umfassen. Elektromagnetische Spulen und magnetische Materialien sind zwar als Teil des Antriebs erwähnt, jedoch wird dem Fachmann lediglich die Verwendung dieser Komponenten in einem Elektromotor oder in einem elektromagnetischen Getriebemotor offenbart. Der Antrieb umfasst einen Elektromotor, insbesondere einen elektromagnetischen Getriebemotor, der mit einem exzentrischen Stift oder einer Kugel gekoppelt ist, die um eine Achse gedreht werden, um über ein Joch oder durch einen Schlitz zu fahren, mit dem eine Hubbewegung erzeugt wird.

Nachteilig ist dabei, dass der elektromagnetische Motor und die exzentrische Mechanik einen hohen Platzbedarf und eine hohe Energieaufnahme erfordern und dass die Anordnung bei der Bewegung unnatürliche Drehgeräusche und mechanische Umsteuerungsgeräusche erzeugt, welche ein Raubfisch über sein empfindliches Seitenlinienorgan aufnimmt und die ihn abschrecken können.

WO 2014 194 397 A1 beschreibt einen Angelköder, der für selbsterzeugte Bewegungen in Wasser geeignet ist, um die natürliche Bewegung lebender Fischbeute nachzuahmen. Der Angelköder umfasst einen wasserdichten Köderkörper mit einem Motor und eine Schwanzanordnung, die mit dem Köderkörper durch eine vom Motor angetriebene Heckwelle verbunden ist, um die Schwanzanordnung zum Schwingen zu bringen. Als Antrieb wird unter anderem eine Spule beschrieben, welche relativ zu einem feststehenden Magneten positioniert ist, wobei die Spule hin und her schwingt, als Reaktion auf magnetische Pol-Wechselwirkungen zwischen der Spule und dem Magneten, welche in der Spule durch einen Controller definiert abwechselnd erzeugt wird.

Nachteilig ist dabei, dass die Spule, welche im Köderkörper über dem feststehenden Permanentmagneten hin und her schwingt, dabei in seiner Endposition jeweils mechanisch auf eine Halterung auffährt und dabei Umsteuerungsgeräusche erzeugt, welche ein Raubfisch über sein empfindliches Seitenlinienorgan aufnimmt und die ihn abschrecken können. Ferner erfordert die elektrische Verbindung zwischen der bewegten Spule und dem Controller eine bewegliche Zuleitung, welche durch die anhaltende mechanische Bewegung der Spule mechanisch belastet ist und deshalb eine weitere Geräuschquelle darstellt und zusätzlich aufgrund von Materialermüdung störungsanfällig ist. Die querliegende Spule erfordert einen ausreichend großen Bewegungsraum zwischen den Seitenwänden des Köderkörpers oder eine entsprechende miniaturisierte Ausführung, um auch in kleineren Angelködern untergebracht werden zu können. Dadurch reduziert sich das verfügbare Bewegungsmoment und die maximal mögliche Auslenkung der Schwanzflosse.

Es ist deshalb Aufgabe der vorliegenden Erfindung einen effektiven elektromagnetischen Pendelantrieb bereitzustellen, der die Nachteile des Standes der Technik nicht aufweist, platzsparend und kostengünstig auch in kleinen Vorrichtungen integrierbar ist, dabei mit einem geringen Energiebedarf einen möglichst kraftvollen Antrieb zur Bewegung eines Pendelaktors oder Pendelmotors ermöglicht und einen definiert steuerbaren oder einstellbaren Bewegungsablauf ermöglicht.

### Zusammenfassung der Erfindung

Die vorliegende Erfindung löst die Aufgabe durch einen elektromagnetischen Pendelantrieb gemäß den Merkmalen des unabhängigen Anspruchs. Bevorzugte Ausgestaltungen und Ausführungsformen der vorliegenden Erfindung finden sich in den abhängigen Ansprüchen.

Ein Angelköder im Sinne dieser Erfindung ist entweder ein künstlicher Angelköder, der die möglichst naturgetreue Nachbildung einer natürlichen Beute, vorzugsweise eines Fisches, ist oder eine tote natürliche Beute in Form eines toten natürlichen Angelköders, vorzugsweise ein toter Fisch. Als natürliche Beute kommen auch andere Tiere, wie beispielsweise ein Frosch, eine Kröte oder eine Maus oder andere Beutetiere oder Insekten in Betracht.

Unter einer von einem elektromagnetischen Angelköderantrieb anzutreibenden Bewegung im Sinne der Erfindung wird verstanden, dass der Körper und/oder der Schwanzteil des künstlichen Angelköders oder des toten natürlichen Angelköders sich entlang seiner Längsachse von Seite zu Seite bewegen, um einen schwimmenden oder verendenden Fisch oder alternativ eine andere natürliche Beute in Not nachzuahmen. Vorteilhaft kann die Bewegung des elektromagnetischen Angelköderantriebs zusätzlich eine den Angelköder vorwärts antreibende Kraftwirkung erzeugen.

Der elektromagnetische Angelköderantrieb umfasst einen Köderkörper und einen elektromagnetischen Pendelantrieb.

Der Köderkörper im Sinne dieser Erfindung umfasst einen wasserdicht abgeschlossenen Tauchkörper, der entweder in dem künstlichen Angelköder oder in dem toten natürlichen Angelköder integrierbar ist. Der Köderkörper weist ein vorderes Ende auf, welches in dem künstlichen Angelköder oder in dem toten natürlichen Angelköder kopfseitig ausgerichtet integrierbar ist. Der Köderkörper weist ferner ein seitliches Profil auf, welches die Seitenwände des Köderkörpers bildet. Vorzugsweise ist der Köderkörper zylindrisch geformt und weist im Querschnitt ein rohrförmiges Profil auf, welches rund oder oval geformt ist. Es sind aber auch andere Querschnittsprofile anwendbar, beispielsweise ein quadratischer, rechteckförmiger, mehreckiger, nierenförmiger Rohrquerschnitt oder ein Querschnitt mit beliebigem im Umfang rohrförmig geschlossenen Profilverlauf. Vorteilhaft weist der Köderkörper alternativ zu einem entlang einer Längsachse des Köderkörpers Y konstanten Querschnitt einen entlang der Längsachse des Köderkörpers Y variierenden Querschnitt, beispielsweise einen ovalen, tropfenförmigen oder zigarrenförmigen Verlauf auf, um die Stromlinienform eines künstlichen Angelköders oder eines toten natürlichen Angelköders abzubilden und zu unterstützen. Der Köderkörper weist ein hinteres Ende auf, welches in dem künstlichen Angelköder oder in dem toten natürlichen Angelköder schwanzseitig ausgerichtet integrierbar ist. Der Köderkörper ist langgestreckt in dem künstlichen Angelköder oder in dem toten natürlichen Angelköder integrierbar. Das Seitenverhältnis zwischen der Länge des Köderkörpers und der maximalen Breite des Köderkörpers ist größer 1, insbesondere größer 2 und ist bevorzugt größer 5. Die Längsachse des Köderkörpers Y verläuft im Köderkörper jeweils zentral durch das vordere Ende und das hintere Ende des Köderkörpers.

Eine Körperhülle des Angelköders im Sinne dieser Anmeldung umfasst den umhüllenden Körper des künstlichen Angelköders oder den Körper des toten natürlichen Angelköders.

Der elektromagnetische Angelköderantrieb kann alternativ bei Verwendung im künstlichen Angelköder auch realisiert werden, indem die Komponenten des elektromagnetischen Angelköderantriebs wasserdicht in der Körperhülle des künstlichen Angelköders integriert werden. Der Köderkörper umfasst in diesem Fall die Körperhülle des künstlichen Angelköders.

Der elektromagnetische Pendelantrieb umfasst eine elektrische Energiequelle, einen Elektromagneten, umfassend eine Erregerspule, eine elektronische Steuerungseinheit und einen Pendelaktor, umfassend einen Dauermagneten und einen Pendelhebel, auf dem in einem Pendelradius Rp um ein Pendellager der Dauermagnet gelagert ist und eine oszillierende Bewegung des Schwanzes und/oder des Körpers des toten natürlichen Angelköders oder des künstlichen Angelköders mit einer definierten Auslenkung sm quer zur Längsachse des Köderkörpers Y erzeugt. Vorteilhaft können mehrere Dauermagneten sich gegenseitig anziehend gestapelt aneinandergereiht angeordnet werden, um die geometrischen Abmaße des Dauermagneten anzupassen und/oder um die magnetische Kraft des Dauermagneten zu verändern. Besonders vorteilhaft ist es, wenn ein oder mehrere gestapelte würfelförmige Dauermagneten mit jeweils einer Kantenlänge von ca. 5 mm, einer Remanenz von 1,3T bis 1,4T und einer Koerzitivfeldstärke von 860 kA/m bis 955kA/m und von >=955kA/m eingesetzt werden. In der Folge wird auch bei gestapelten Dauermagneten der Begriff eines Dauermagneten verwendet. Es können jedoch auch einzelne oder mehrere Dauermagneten mit weitgehend anderen Körperformen, Abmaßen und magnetischen Daten eingesetzt werden. So kommen je nach Größe des zu bewegenden Angelköders Kantenlängen oder Zylinderlängen von 1 mm bis zu 50 mm pro Dauermagnet oder Durchmesser von 1 mm bis zu 50 mm in Betracht. Ein Dauermagnet ist vorteilhaft würfelförmig, quaderförmig, scheibenförmig, zylindrisch, stabförmig, konkav oder konvex tonnenförmig oder prismenförmig gestaltet.

Bei einer erfindungsgemäß vorwiegend gewählten Anordnung eines würfel-, quader-, oder zylinderförmigen Dauermagneten geht die wirksame magnetische Kraftkomponente des Dauermagneten von der dem Elektromagneten nächstgelegenen Kante des Dauermagneten in Abhängigkeit der Auslenkung sm aus.

Eine erste Polachse P1 ist im Sinne dieser Erfindung die Achse durch die Erregerspule, die bei fließendem Erregerstrom die beiden entgegengesetzten magnetischen Pole der Erregerspule verbindet. Die erste Polachse P1 verläuft in der Erregerspule in der direkten Verbindungslinie ihrer Pole.

In einer ersten alternativen Ausführungsform weist die erste Polachse P1 zur Längsachse des Köderkörpers Y bevorzugt einen Winkel im Bereich von 0° +/-30°, vorzugsweise von 0° +/- 10°, insbesondere im Bereich von 0° +/5° auf und verläuft deshalb im Wesentlichen parallel zur Längsachse des Köderkörpers Y. Die Erregerspule mit der ersten Polachse P1 ist zur Längsachse des Köderkörpers Y in einen Winkel im Bereich von 0° +/- 30° angeordnet.

Eine Spulenlänge LC im Sinne dieser Erfindung ist die Länge des Spulenwickels der Erregerspule in axialer Richtung entlang der ersten Polachse P1.

Eine Spulenhöhe HC im Sinne dieser Erfindung ist die Höhe des Spulenwickels der Erregerspule in radialer Richtung zur ersten Polachse P1.

Vorteilhafter Weise weist in der ersten alternativen Ausführungsform die Erregerspule eine Spulenlänge bzw. Wickellänge LC von 1 mm bis 50mm, vorzugsweise von 3 mm bis 30 mm, insbesondere von 5 mm bis 20 mm und eine Spulenhöhe HC von 0,5mm bis 20mm, vorzugsweise von 1mm bis 10mm, insbesondere von 2mm bis 4mm auf.

Eine Drahtstärke DW des Wickeldrahtes zur Realisierung der Erregerspule weist dabei unter Verwendung von Feindraht oder von Feinstdraht einen Durchmesser im Bereich von DW = 0,01 mm bis 0,5 mm, vorzugsweise von DW = 0,03 mm bis DW= 0,15 mm, insbesondere von 0,05 mm bis 0,1 mm auf.

Um eine hohe magnetische Induktion bei geringer Masse der Erregerspule und geringem Erregerstrom ie zu erreichen, kann in einer zweiten alternativen Ausführungsform eine flache und breite Spule mit einer niederen Spulenlänge LC und einer vergleichsweise hohen Wickelhöhe HC realisiert werden. Dabei weist die Spulenlänge LC ein definiertes Verhältnis zur Spulenhöhe HC auf.

Eine Drahtstärke DW des Wickeldrahtes zur Realisierung der Erregerspule weist dabei unter Verwendung von Feindraht oder von Feinstdraht einen Durchmesser im Bereich von DW = 0,01 mm bis 0,25 mm, vorzugsweise von DW = 0,01 mm bis DW= 0,15 mm, insbesondere von 0,05 mm bis 0,1 mm auf.

Vorteilhafter Weise weist in der zweiten alternativen Ausführungsform die Erregerspule eine Spulenlänge bzw. Wickellänge LC von 0,1 mm bis 15mm, vorzugsweise von 0,3 mm bis 10 mm, insbesondere von 1 mm und 4 mm, auf. Ferner weist die Erregerspule eine Spulenhöhe bzw. Wickelhöhe HC von 0,5 mm bis 60 mm, vorzugsweise von 1 mm bis 10 mm, insbesondere von 2 mm bis 5 mm, auf. Des Weiteren weist die Erregerspule ein Verhältnis von Spulenhöhe zu Spulenlänge HC/LC von 1 bis zu 60, vorzugsweise von 1,5 bis 20, insbesondere von 2 bis 10, auf.

Auch durch eine flache Spule mit einer geringen Wickellänge LC und einer relativ großen Wickelhöhe HC kann bei geringer Gesamtmasse der Erregerspule eine hohe magnetische Induktion und damit eine hohe magnetische Kraftwirkung erzeugt werden. Da eine durch den Angelköderantrieb erzielbare Beschleunigung des Angelköders mit a = F/m umgekehrt proportional zur Masse des Angelköders ist und die Masse der Erregerspule einen hohen Anteil an der Gesamtmasse des Angelköderantriebs hat, ist die Synergie aus den gewählten Parametern des Drahtdurchmessers DW, der Spulenlänge LC und der Spulenhöhe HC von großer Bedeutung für einen erzielbaren Bewegungseffekt durch den Angelköderantrieb.

Dabei kann es je nach den gewählten Größenverhältnissen der Erregerspule in einem Ausführungsbeispiel gemäß der zweiten alternativen Ausführungsform vorteilhaft sein, die erste Polachse P1 quer zur Längsachse des Köderkörpers Y anzuordnen, um das Volumen eines im Höhenquerschnittovalen Angelköders optimal nutzen zu können. Der Wickelkörper kann entlang einer Windung einen kreisrunden, ovalen, rechteckigen oder einen anderen Verlauf aufweisen, um den Wickelkörper unter Ausnutzung des verfügbaren Volumens optimal feststehend in den Köderkörper einpassbar auszuführen.

Vorteilhaft können mehrere derartiger Spulen auf einen gemeinsamen Kern gewickelt und die Wicklungen kaskadiert werden und können so bei günstiger Ausnutzung des verfügbaren Volumens im Angelköder den erzielbaren Bewegungseffekt des Angelköders verstärken.

Vorteilhaft kann bei kaskadierten Spulen ein magnetischer Abgriff zwischen den Spulen vorgesehen sein, um so einen E-förmigen Polschuh oder ein E-förmiges Joch auszubilden.

In der zweiten alternativen Ausführungsform ist die erste Polachse P1 über wenigstens einen Polschuh oder ein Joch aus ferromagnetischem Material schwanzseitig nach hinten geführt und bildet eine weitere erste Polachse P1' des Polschuhes oder des Jochs aus ferromagnetischem Material aus, welche zur Längsachse des Köderkörpers Y bevorzugt einen Winkel im Bereich von 0° +/-30°, vorzugsweise von 0° +/- 10°, insbesondere im Bereich von 0° +/5° auf und verläuft deshalb im Wesentlichen parallel zur Längsachse des Köderkörpers Y.

Die weitere erste Polachse P1' in der zweiten Ausführungsform ist wie die erste Polachse P1 in der ersten Ausführungsform zur Längsachse des Köderkörpers Y in einen Winkel im Bereich von 0° +/-30° angeordnet.

Vorteilhaft kann ferner optional auch in diesem alternativen Ausführungsbeispiel der zweiten Ausführungsform der Gegenpol des Elektromagneten über einen Polschuh oder ein Joch ausferromagnetischem Material vom Gegenpol des Kerns aus ferromagnetischem Material als Polschuh oder Joch nach hinten zum Dauermagneten geführt werden, wo die beiden Enden des Polschuhs oder Jochs einen Luftspalt zum Dauermagneten ausbilden.

Eine zweite Polachse P2 im Sinne dieser Erfindung ist die Achse durch den Dauermagneten, welche die beiden entgegengesetzten magnetischen Pole des Dauermagneten verbindet. Die zweite Polachse P2 verläuft im Dauermagneten in der direkten Verbindungslinie seiner Pole.

Der Pendelaktor ist in je einem Ausführungsbeispiel der ersten oder der zweiten Ausführungsform in Bezug auf die Längsachse des Köderkörpers so angeordnet, dass die zweite Polachse P2 zur Längsachse des Köderkörpers Y einen definierten Winkel, vorzugsweise einen Winkel von 90° oder einen Winkel in einem Winkelbereich von 90°+/- 40°, insbesondere von 90°+/- 25° aufweist.

Der Winkelbereich von 90° +/- 40° unterstützt die für eine besonders schnelle Flossenpropulsion erforderliche Auslenkung einer Schwanzflosse, während der Winkelbereich von 90° +/-25° den Bereich der üblichen effektiven Flossenbewegung bei einer Vorwärtsbewegung repräsentiert und ein weiterer vorteilhafter Bereich von 90° +/- 15° neben dem Bereich der üblichen Flossenbewegung bei einer Vorwärtsbewegung auch den Bereich der typischen Bewegungen einer kranken oder der in Not befindlichen natürlichen Beute umfasst.

In diesen Ausführungsbeispielen ist der Dauermagnet mit der zweiten Polachse P2 zur Längsachse des Köderkörpers Y innerhalb eines Winkelbereichs von 90°+/- 40° angeordnet.

In einem weiteren Ausführungsbeispiel der ersten alternativen Ausführungsform verläuft die zweite Polachse P2 innerhalb eines definierten Winkelbereichs von 0° +/-40° zur Längsachse des Köderkörpers Y, vorzugsweise von 0° +/- 25° zur Längsachse des Köderkörpers Y. Der Winkelbereich von 0° +/- 40° zur Längsachse des Köderkörpers Y unterstützt die für eine besonders schnelle Flossenpropulsion erforderliche Auslenkung der Schwanzflosse, während der Winkelbereich von 0° +/-25° zur Längsachse des Köderkörpers Y den Bereich der üblichen effektiven Flossenbewegung bei einer Vorwärtsbewegung repräsentiert und ein weiterer vorteilhafter Bereich von 0° +/- 15° zur Längsachse des Köderkörpers Y neben dem Bereich der üblichen Flossenbewegung bei einer Vorwärtsbewegung auch den Bereich der typischen Bewegungen einer kranken oder der in Not befindlichen natürlichen Beute umfasst. In dieser Ausführungsform ist der Dauermagnet mit der zweiten Polachse P2 zur Längsachse des Köderkörpers Y innerhalb eines Winkelbereichs von 0° +/- 40° angeordnet.

Eine Ausgangslage des Pendelhebels bezüglich der Längsachse Y des Köderkörpers in der noch keine Erregung des Elektromagneten stattfindet wird in der Folge als eine Nulllage bezeichnet.

Der Dauermagnet ist in einem Ausführungsbeispiel der ersten alternativen Ausführungsform mit der zweiten Polachse P2 zur Längsachse des Köderkörpers Y innerhalb eines Winkelbereichs von 0° +/-40° angeordnet und schneidet in der Nulllage des Pendelhebels die Projektion der ersten Polachse oder die weitere Polachse weist von der zweiten Polachse im Schnittpunkt der Projektion der Polachsen (P1, P2) aufeinander einen Abstand von maximal 5 mm auf.

Sowohl in der ersten Ausführungsform als auch in der zweiten alternativen Ausführungsform schneidet sich die erste Polachse P1 oder die weitere erste Polachse P1'vorzugsweise mit der zweiten Polachse P2, um eine Kraftwirkung auszuüben. Alternativ weist die erste Polachse P1 oder die weitere erste Polachse P1' von der zweiten Polachse P2 im Schnittpunkt der Projektion der Polachsen aufeinander einen Abstand von maximal 5 mm, vorzugsweise von maximal 2 mm, auf. Die erste Polachse P1 oder die weitere erste Polachse P1' schneidet sich in der Nulllage des Pendelhebels mit der zweiten Polachse P2 oder die erste Polachse P1 oder die weitere erste Polachse P1' weist von der zweiten Polachse P2 im Schnittpunkt der Projektion der Polachsen P1, P2 aufeinander einen Abstand von maximal 5 mm auf.

Die Erregerspule des Elektromagneten ist in der ersten alternativen Ausführungsform im Köderkörper so angeordnet, dass die erste Polachse P1 im Wesentlichen parallel oder in einem Winkelbereich von 0° +/-30°, vorzugsweise von 0° +/- 10°, insbesondere von 0° +/- 5° zur Längsachse des Köderkörpers verläuft. Dadurch kann vorteilhaft eine Wicklung der Erregerspule des Elektromagneten entlang der Längsachse des Köderkörpers und um diese herum ausgeführt werden, wodurch auch bei schmalem Köderkörper eine optimale Ausnutzung des verfügbaren Volumens innerhalb des Köderkörpers möglich ist. So können auch bei kleinen künstlichen Angelködern oder bei toten natürlichen Angelködern auf engem Raum möglichst viele Windungen der Erregerspule untergebracht werden. Die vom Elektromagneten erzeugbare Kraftwirkung ist proportional zum Produkt aus dem Erregerstrom ie und der Windungszahl N der Erregerwicklung. Mithin kann durch eine höhere Anzahl von pro Volumeneinheit des Köderkörpers unterbringbaren Windungen der Erregerspule bei gleichbleibender Kraftwirkung der Erregerstrom ie reduziert werden, wodurch die aus der elektrischen Energiequelle entnommene Ladung sinkt. Dadurch erreicht der elektromagnetische Angelköderantrieb vorteilhaft bei kleineren Abmessungen der elektrischen Energiequelle eine längere Laufzeit des elektromagnetischen Angelköderantriebs.

Die Ansteuerung des Elektromagneten erfolgt besonders vorteilhaft mit wechselnder Polarität umfassend eine elektrisch bipolare Wechselspannung als Ansteuerspannung ue an der Erregerspule und einen bipolar fließenden Wechselstrom als Erregerstrom ie durch die Erregerspule des Elektromagneten. Die Wechselspannung beziehungsweise der Wechselstrom können dabei in positiver und in negativer Richtung symmetrischen Signalverlauf aufweisen, das heißt die Integrale über der Zeit sind in positiver Richtung gleich den Integralen über der Zeit in negativer Richtung.

Die Wechselspannung beziehungsweise der Wechselstrom können alternativ in positiver und in negativer Richtung asymmetrischen Signalverlauf aufweisen, das heißt beispielsweise, die Integrale über der Zeit sind in positiver Richtung ungleich den Integralen über der Zeit in negativer Richtung. Asymmetrische Ansteuerung kann beispielsweise vorteilhaft im Fall eines zur Fortbewegung des Köderkörpers verwendeten Antriebs zur Richtungssteuerung oder auch zur Simulation eines Bewegungsablaufs eines kranken Beutetiers verwendet werden.

Optional und besonders vorteilhaft umfasst die Erregerspule des Elektromagneten zusätzlich einen Kern aus ferromagnetischem Material zur Verstärkung der magnetischen Wirkung des Elektromagneten. Der Kern aus ferromagnetischem Material konzentriert aufgrund seiner hohen magnetischen Leitfähigkeit die magnetischen Feldlinien der Erregerspule und verstärkt damit die magnetische Kraft im Luftspalt des Elektromagneten.

In einer vorteilhaften Ausführungsform der ersten alternativen Ausführungsform ist ein mittlerer Kern aus ferromagnetischem Material innerhalb der Erregerspule angeordnet und ist über ferromagnetisches Material außerhalb an der Erregerspule vorbei von einem ersten Polende des mittleren Kerns aus ferromagnetischem Material zu einem zweiten Polende des mittleren Kerns aus ferromagnetischem Material geführt und es ist ein Polschuh oder ein Joch aus ferromagnetischem Material ausgebildet, welches am zweiten Polende des mittleren Kerns aus ferromagnetischem Material einen Luftspalt zum mittleren Kern aus ferromagnetischem Material aufweist in welchem der Dauermagnet beweglich derart angeordnet ist, dass sich die Projektion der ersten Polachse P1 durch die Erregerspule und der zweiten Polachse P2 durch den Dauermagneten in wenigstens einer Position in einem definierten Winkel schneiden.

Das außerhalb der Erregerspule vorbeigeführte ferromagnetische Material bildet dabei einen Polschuh oder ein Joch aus ferromagnetischem Material aus, welches den magnetischen Gegenpol des mittleren Kerns zum Dauermagneten führt, in dessen Luftspalt er sich bewegt und so über den Pendelhebel und das Pendellager das Antriebsmoment für die Schwanzflosse erzeugt.

Der Polschuh oder das Joch aus ferromagnetischem Material ist vorteilhaft U-förmig oder E-förmig und/oder wenigstens teilweise topfförmig ausgebildet. Der Polschuh oder das Joch aus ferromagnetischem Material kann alternativ auch vollständig topfförmig ausgebildet sein. Im Fall eines teilweise oder eines vollständig topfförmig ausgebildeten Polschuhs oder Jochs weist der Polschuh oder das Joch am ersten Polende des Kerns aus ferromagnetischem Material einen Boden aus ferromagnetischem Material auf und führt rohrförmig als Zylinder außen an der Erregerspule vorbei zum zweiten Polende des mittleren Kerns aus ferromagnetischem Material, wo es einen Luftspalt zum mittleren Kern aus ferromagnetischem Material bildet in welchem der Dauermagnet beweglich derart angeordnet ist, dass sich die Projektion der ersten Polachse P1 durch die Erregerspule und der zweiten Polachse P2 durch den Dauermagneten in wenigstens einer Position in einem definierten Winkel schneiden.

Besonders vorteilhaft ist der topfförmig ausgebildete Polschuh oder das Joch aus ferromagnetischem Material am zweiten Polende des mittleren Kerns entsprechend der Form des Dauermagneten ausgeschnitten und bildet einen möglichst homogenen Luftspalt zur Kante des Dauermagneten aus.

Dadurch wird vorteilhaft die vom Dauermagneten erzeugte Anziehung verstärkt, weil dessen Kraft auf dem mittleren Kern und auf den Polschuh oder das Joch aus ferromagnetischem Material wirkt und gleichzeitig wird das magnetische Feld beziehungsweise die magnetische Flussdichte für die Umsteuerung durch den Polschuh oder das Joch aus ferromagnetischem Material verstärkt.

In einem besonders vorteilhaften Ausführungsbeispiel ist der Polschuh oder das Joch aus ferromagnetischem Material U-förmig, E-förmig und/oder wenigstens teilweise topfförmig ausgebildet.

Der Pendelradius Rp ist in beiden alternativen Ausführungsformen vorteilhaft so gewählt, dass sich bei Verwendung des Kerns aus ferromagnetischem Material bei Nennauslenkung des Pendelhebels in einer Endposition smE ein minimaler kritischer Luftspalt hE zum Kern aus ferromagnetischem Material mit einer zusätzlichen magnetischen Kraftkomponente des Dauermagneten auf den Kern aus ferromagnetischem Material ergibt. Daraus resultiert eine maximale Kraftwirkung Fm in der Endposition und es erfolgt in der Endposition eine anschlagslose und deshalb geräuschfreie Begrenzung der Auslenkung sm, weil die Anziehung zwischen dem Dauermagneten und dem Kern aus ferromagnetischem Material in der Endposition ein kritisches Maximum erreicht.

Zur Begrenzung des Pendelausschlags kann optional ein elastischer Anschlag vorgesehen werden. Das Maximum ist deshalb kritisch, weil bei diesem Wert eine Kompensation des Magnetfeldes und damit eine Umpolung der Bewegung durch die Erregung des Elektromagneten noch möglich ist. Bei zu geringem Radius Rp oder zu geringem Luftspalt h besteht die Gefahr, dass der Dauermagnet sich nicht mehr vom Kern aus ferromagnetischem Material des Elektromagneten wegbewegen lässt. Es muss deshalb in diesem Fall der Abstand des Pendellagers vom Elektromagneten L vergrößert werden, wodurch magnetische Kraftwirkung und deshalb Bewegungsmoment verloren geht.

Durch die vorteilhafte Anordnung mit einem Kern aus ferromagnetischem Material und einem Polschuh oder Joch aus ferromagnetischem Material wird einerseits die hohe magnetische Haltekraft des Dauermagneten zum Erzeugen eines hohen Bewegungsmoments in Synergie mit der kompensierenden Wirkung des elektromagnetischen Kraftfeldes des Elektromagneten genutzt, um mit möglichst geringem Erregerstrom und damit energiesparend hinsichtlich der mitgeführten Energiequelle eine energiesparende Kompensation des Magnetfeldes zu bewirken und eine energiesparende Umsteuerung des Pendelaktors von einer Endposition in die andere Endposition einzuleiten.

Die elektrische Energiequelle, die Erregerspule des Elektromagneten und die elektronische Steuerungseinheit sind innerhalb des wasserdichten Köderkörpers integriert. Der Dauermagnet kann innerhalb des Köderkörpers oder außerhalb des Köderkörpers angeordnet sein. Vorteilhaft ist in beiden Fällen, dass zwischen dem Elektromagneten und dem Dauermagneten keine mechanische Verbindung zur Übertragung einer Kraft angeordnet ist. Die Kraftübertragung und die Erzeugung der Pendelbewegung erfolgen durch ein magnetisches Kraftfeld.

Der elektromagnetische Pendelantrieb operiert berührungslos ohne wesentliche mechanische Reibung der antreibenden Elemente und kann mit elastischen Anschlägen oder vorzugsweise auch ohne Anschläge betrieben werden und ist deshalb praktisch geräuschlos, was ein wesentliches Merkmal für den erfolgreichen Einsatz beim Fang ist.

Die Erregerspule umfasst eine Spule mit N Windungen, welche nach Anlegen einer bipolaren Spannung ue von einem wechselnden Erregerstrom ie durchflossen wird und dabei ein in der Polarität wechselndes Magnetfeld erzeugt.

Die magnetische Kraft in einem Luftspalt h eines magnetischen Kreises des Magnetfeldes wird gemäß folgendem Zusammenhang als proportional betrachtet $Fm ∼ K * {\left(ie*N/h\right)}^{2} ,$ wobei K eine Konstante repräsentiert, welche die magnetischen Eigenschaften der verwendeten Materialien und den geometrischen Aufbau des magnetischen Kreises umfasst und ie der in der Erregerspule fließende Erregerstrom und N die Windungszahl der Erregerspule ist.

Am Pendelhebel ist optional ein elastisches Rückstellelement angeordnet, welches eine Rückstellkraft Fr des Pendelhebels in Richtung der Nulllage ausübt.

Vorteilhaft umfasst das Pendellager des Pendelhebels das optionale elastische Rückstellelement, welches ohne Erregerstrom ie oder bei geringem Erregerstrom ie in der Erregerspule eine Rückstellkraft Fr des Pendelhebels in Richtung der Nulllage ausübt und dadurch die Bewegungen des Pendelhebels unterstützt oder dämpft. Die dämpfende Rückstellkraft nimmt Bewegungsenergie des elektromagnetischen Angelköderantriebs auf und reduziert das zur Bewegung des Angelköders verfügbare Bewegungsmoment. Die Rückstellkraft des Rückstellelements ist deshalb möglichst darauf reduziert, eine dämpfende Wirkung zu erzeugen. Da bei der Bewegung im Wasser eine relativ zur Flossenbewegung geschwindigkeitsproportionale Dämpfung und eine Rückstellkraft erzeugt wird, kann optional auf ein Rückstellelement und auf eine Dämpfung verzichtet werden. Der Elektromagnet überträgt beim Einsatz des Angelköders im umgebenden Wasser von der bewegten und durch das umgebende Wasser gedämpften Schwanzflosse teilweise entweder über den Köderkörper auf die Körperhülle des Angelköders oder direkt auf die Körperhülle des Angelköders elektromagnetische Bewegungsenergie. Vorteilhaft umfasst die Körperhülle oben und unten an der Körperhülle Flossen zur Stabilisierung der seitlichen Querbewegung der Körperhülle auf ein definiertes Maß, welches zusammen mit der vorwärts gerichteten Flossenpropulsion der Schwanzflosse eine realistische Umsetzung des Bewegungsmoments des elektromagnetischen Angelköderantriebs in eine Bewegungsfolge des vorderen stromlinienförmigen Teils der Körperhülle bis zum Übergangsbereich der Schwanzflosse im Verhältnis zur Bewegung des Übergangsbereichs zur Schwanzflosse und der Schwanzflosse ermöglicht. Dadurch entsteht eine natürliche Bewegungsfolge, bei der sich der vordere stromlinienförmige Teil der Körperhülle bis zum Übergangsbereich der Schwanzflosse leicht und entgegengesetzt zur Schwanzflosse bewegt. Dieses Bewegungsmuster simuliert das natürliche Bewegungsmuster einer sich schlängelnden Bewegung wie sie bei Fischen typisch ist. Das elastische Rückstellelement umfasst beispielsweise ein Elastomer, einen Gummi oder ein Silikon und/oder eine oder mehrere dauerelastische Federn aus Metall oder aus Kunststoff. Das Rückstellelement kann beispielsweise in einer Durchführung des Pendelhebels durch die Körperhülle des Angelköders bereitgestellt werden. Zusätzlich kann eine auf die Schwanzflosse wirkende Kraft eines vorbeiströmenden Wassers eine dynamische Rückstellkraft Fr in Bezug auf die Körperhülle des künstlichen Angelköders oder in Bezug auf den Körper des toten natürlichen Angelköders bewirken, welche in Bezug auf den Köderkörper vorteilhaft zusätzlich zur Rückstellung des Pendelhebels genutzt wird.

Vorteilhafter Weise umfasst das Material der elastischen Körperhülle und des Übergangsbereichs der Schwanzflosse selbst den Pendelhebel, wodurch kein separater Pendelhebel erforderlich ist. Weiterhin vorteilhaft kann der Dauermagnet innerhalb der Körperhülle, des Übergangsbereichs der Schwanzflosse oder in der Schwanzflosse angeordnet sein.

Im Falle der Anordnung eines separaten Pendelhebels umfasst dieser bevorzugter Weise ein federndes Material oder ein elastisches Material mit einem höheren Elastizitätsmodul beziehungsweise einer härteren Federkonstante als der des gewählten Materials der Schwanzflosse und/oder des Materials der umgebenden Hülle des künstlichen Angelköders oder des Körpers des toten natürlichen Angelköders, womit die Schwanzflosse eine nachführende elastische Kraftübertragung mit der bionischen Wirkung einer rückwärtsgerichteten Impulsübertragung, einer sogenannten Flossenpropulsion, und damit über einen sogenannten Jet vom Antrieb auf das umgebende Wasser ausführt. Um diese Wirkung hervorrufen zu können, bedarf es der Synergie zwischen der Schwanzflosse und dem erfindungsgemäßen kraftvollen Antrieb mit einem Bewegungsmoment, welches durch den dynamischen Luftspalt der erfindungsgemäßen Vorrichtung erzeugt wird. Die mit zunehmender Auslenkung sm des Pendelhebels verbundene Zunahme des Bewegungsmomentes unterstützt eine Flossenpropulsion wirksam, weil das Bewegungsmoment bis zum Erreichen des Endpunktes des Pendelausschlags exponentiell zunimmt und im Endpunkt des Pendelausschlags augenblicklich festgehalten wird, bis die Umsteuerung in der Gegenrichtung erfolgt. Dadurch entstehen vorteilhaft gegenläufig drehende Wasserwirbel, so genannte unstetige Jets, an denen sich die Schwanzflosse bei der Gegenbewegung abstößt und damit eine natürliche Vorwärtsbewegung des Angelköders erzeugt.

Dadurch entsteht eine direkte natürliche Bewegung des künstlichen Angelköders oder des toten natürlichen Angelköders, ohne dass es dabei zu unnatürlichen mechanischen Schwingungen aufgrund von Drehbewegung, Kommutierung, Lagerung eines Antriebsmotors oder von einem Getriebe, beziehungsweise von einer Exzentermechanik oder dergleichen käme. Der Antrieb ist weitgehend geräuschlos und emittiert bei der Bewegung der Schwanzflosse im Wasser die gleichen Schwingungen wie ein lebender Fisch in seinen natürlichen Bewegungssituationen vom Stehen im Wasser bis hin zur Fluchtbewegung oder bei Bewegungen im verletzten oder kranken Zustand.

Ein Luftspalt h im Sinne dieser Erfindung ist in beiden alternativen Ausführungsformen der Erfindung der kürzeste Abstand zwischen dem Dauermagneten des dauermagnetischen Pendelaktors und dem nächstliegenden Pol des Elektromagneten des elektromagnetischen Pendelantriebs. Ein dynamischer Luftspalt ist die Funktion des Luftspalts bei einer Bewegung des dauermagnetischen Pendelaktors in Abhängigkeit von der Auslenkung sm des Pendelhebels aus seiner Ruhelage.

Zwischen dem Elektromagneten und dem Dauermagneten ist ein Luftspalt h angeordnet, wobei der Luftspalt h bei einer Auslenkung des Pendelhebels in Abhängigkeit von der Auslenkung des Pendelhebels aus seiner Nulllage kleiner wird, in einer Endposition ein Minimum erreicht und beim Überschreiten einer Endposition größer wird.

Der Luftspalt h variiert vorteilhaft im Bereich zwischen 20 mm und 0,01 mm, insbesondere zwischen 5mm und 0,05 mm und bevorzugt zwischen 2 mm und 0,5 mm.

Je kleiner der Luftspalt h in Synergie zum Pendelradius, dem elastischen und dynamischen Rückstellmoment, der Windungszahl N und der Höhe des Erregerstromes ie gewählt wird, desto größer ist das dabei erreichbare Bewegungsmoment des dauermagnetischen Pendelaktors und damit das Bewegungsmoment des elektromagnetischen Angelköderantriebs.

Der künstliche Angelköder ist eine möglichst naturgetreue Nachbildung der natürlichen Beute, insbesondere eines Fisches. Er umfasst die Körperhülle, welche den Köderkörper umhüllt. Die Körperhülle des künstlichen Angelköders umfasst vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A.

Beim toten natürlichen Angelköder bildet das tote Beutetier oder der tote Beutefisch die Körperhülle.

Der Dauermagnet kann innerhalb des Köderkörpers angeordnet sein. In diesem Fall ist der Pendelhebel innerhalb des Köderkörpers oder an dessen hinterer Außenwand gelagert und wird berührungslos vom wechselnden Magnetfeld der Erregerspule hin und her bewegt. Der dauermagnetische Pendelaktor ist dabei beweglich und gegen Eindringen von Wasser abgedichtet aus dem hinteren Ende des Köderkörpers durchgeführt und geht in die Schwanzflosse über, die er in mechanisch oszillierende Bewegung versetzen kann. Vorteilhaft umfasst die Durchführung des Pendelhebels durch die hintere Wand des Köderkörpers ein dauerelastisches Dichtmittel, beispielsweise aus Gummi oder Silikon oder einem anderen Elastomer und bildet vorteilhaft das Pendellager, um welches der Pendelhebel des dauermagnetischen Pendelaktors drehbar gelagert bewegbar ist. Das Pendellager und die Abdichtung umfasst vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A.

Der Dauermagnet kann vorteilhaft alternativ außerhalb des Köderkörpers angeordnet sein. In diesem Fall ist der Pendelhebel beweglich außerhalb des Köderkörpers gelagert, und ist berührungslos vom wechselnden Magnetfeld der Erregerspule hin und her bewegbar. Der Pendelhebel geht in die Schwanzflosse über, die er in mechanisch oszillierende Bewegung versetzt. Der Dauermagnet kann entweder an einem außerhalb des Köderkörpers angeordneten Pendelhebel des dauermagnetischen Pendelaktors angebracht sein oder der Dauermagnet kann im Bereich der Schwanzflosse in den elastischen Körper des künstlichen Angelköders oder im Bereich der Schwanzflosse des toten Angelköders integrierbar sein. Das Pendellager befindet sich in diesen Ausführungsbeispielen außerhalb des Köderkörpers in der Körperhülle des künstlichen Angelköders oder des toten natürlichen Angelköders. Das Pendellager umfasst vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A.

In Versuchsreihen beider alternativer Ausführungsformen wurde festgestellt, dass gegenüber einer als vorteilhaft erwarteten Ausrichtung der Polachse P2 parallel zur Längsachse Y des Köderkörpers und einer quer zur Längsachse Y ausgerichteten ersten Polachse P1 oder einer weiteren ersten Polachse P1' eine umgekehrte Ausrichtung, nämlich eine parallel zur Längsachse ausgerichtete erste Polachse P1 oder eine weitere erste Polachse P1' und die Ausrichtung der Polachse P2 in einem definierten Winkel zur Längsachse L, vorzugsweise rechtwinklig zueinander, eine überraschende Erhöhung der Effizienz des Antriebs ergibt, wobei die Parameter des Erregerstroms ie, der Windungszahl N und eines vorteilhaft dynamisch wirksamen Luftspalts h, der sich mit zunehmender Auslenkung sm des Pendelhebels verringert, in der Endposition ein relatives Minimum einnimmt und bei weiterer Auslenkung sm wieder zunimmt, zusammen mit einer optionalen elastischen und/oder federnden Lagerung des dauermagnetischen Pendelaktors in Synergie mit einem zum Magnetfeld der Erregerspule des Elektromagneten quer stehenden Magnetfeld des Dauermagneten eine Erhöhung des Bewegungsmoments bei einer gleichzeitigen Reduzierung des erforderlichen Erregerstromes ie ermöglichen. Eine optionale elastische Lagerung umfasst beispielsweise ein Elastomer, Gummi oder Silikon oder eine oder mehrere dauerelastische Federn aus Metall oder aus Kunststoff.

Der Wert des dynamisch wirksamen Luftspalts h zwischen dem Elektromagneten und dem Dauermagneten verringert sich in Abhängigkeit von einer Auslenkung sm des Pendelhebels, wenn der Pendelantrieb seiner jeweiligen Endposition smE zustrebt und nimmt in der Endposition smE ein relatives Minimum ein und die magnetische Kraftwirkung Fm erreicht ein relatives Maximum. Beim Überschreiten der jeweiligen Endposition nimmt der wirksame Luftspalt h wieder zu, die magnetische Kraftwirkung Fm auf den dauermagnetischen Pendelaktor nimmt ab und die Richtung des Kraftvektors Fmd kehrt sich um, wodurch das Pendel wieder zurück in die Endposition smE gelenkt wird, in welcher die magnetische Kraftwirkung Fm ein relatives Maximum aufweist. Der Abstand h und die magnetische Kraftwirkung Fm sind deshalb relativ, weil der Pendelradius und der Abstand L des Pendeldrehpunkts vom Elektromagneten, beziehungsweise vom Kern des Elektromagneten in unterschiedlichen Ausführungsbeispielen unterschiedlich gewählt werden kann.

Der Pendelhebel des Pendelaktors wird optional von einer elastischen Lagerung und/oder von einer Feder aus einer potenziellen vorherigen Ablenkung in seine Nulllage übergeführt, wenn der Elektromagnet nicht erregt ist, das heißt, wenn kein Erregerstrom ie durch die Erregerspule des Elektromagneten fließt. Die elastische Lagerung umfasst beispielsweise ein Elastomer, Gummi oder Silikon oder eine oder mehrere dauerelastische Federn aus Metall oder aus Kunststoff.

In einer neutralen Position, insbesondere in der Nulllage der Auslenkung des Pendelhebels befindet sich zunächst die magnetische Mitte des Dauermagneten im Abstand h0 von der elektromagnetischen Antriebsspule und ist ausgerichtet auf die Polachse des Elektromagneten oder ist vorteilhaft ausgerichtet auf die Mittelachse eines ferromagnetischen Kerns der elektromagnetischen Erregerspule. In dieser Position übt der Dauermagnet keine Kraftwirkung auf eine nicht stromdurchflossene Luftspule des Elektromagneten oder eine minimale Kraft auf einen im Abstand h0 von der magnetischen Mitte des Dauermagneten beabstandeten Kerns aus ferromagnetischem Material der elektromagnetischen Erregerspule aus. Der Pendelantrieb befindet sich in einer labilen bis leicht stabilen Gleichgewichtsposition und kann bereits mit einem schwachen elektromagnetischen Impuls in die positive Richtung sm+ oder in die negative Richtung sm- abgelenkt werden. Einmal abgelenkt beginnt das Magnetfeld des Dauermagneten seine Kraftwirkung Fm auf das Magnetfeld der Luftspule und/oder das Magnetfeld des Kerns aus ferromagnetischem Material der elektromagnetischen Erregerspule zu entfalten und bewirkt eine zunehmende Ablenkung des Pendelantriebes, bis dieser eine erste positive Endposition smE+ oder eine zweite negative Endposition smE- erreicht, bei der der Luftspalt hE ein Minimum erreicht und damit die Kraftwirkung Fm des Magnetfeldes des Dauermagneten auf das Magnetfeld der Luftspule und/oder auf das Magnetfeld des ferromagnetischen Kerns der elektromagnetischen Erregerspule ein Maximum erreicht. Die Endposition des Pendels, beispielsweise die erste positive Endposition smE+ wird dabei je nach einer Dämpfungswirkung eines elastischen Pendellagers und/oder der auf die Schwanzflosse wirkenden Strömungskräfte beim Einsatz im Wasser entweder gedämpft einer e-Funktion folgend, aperiodisch einschwingend oder nach einem gedämpften Einschwingvorgang erreicht.

Die erste Endposition kann dabei anschlagslos erreicht werden und erzeugt dabei kein mechanisches Geräusch, was einen potenziellen Beutefisch abschrecken würde. Der erfindungsgemäße Pendelantrieb arbeitet äußerst geräuscharm. Zur Begrenzung des Pendelausschlags kann optional ein elastischer Anschlag vorgesehen werden.

Dabei wird vorteilhaft zusätzlich zur Rückstellkraft der Schwanzflosse im relativ zur Körperhülle bewegten Wasser eine geschwindigkeitsabhängige, von der Relativbewegung der Schwanzflosse zum umgebenden Wasser resultierende Dämpfung und/oder durch eine optionale elastische Lagerung eine Rückstellkraft Fr erzeugt, welche den Pendelausschlag dämpft und/oder das Pendel bei ausstehender Erregung in seine neutrale Position oder in die Nulllage zurückstellt und so den Umpolungsvorgang unterstützt.

Aus dieser ersten Endposition wird der Pendelantrieb umgesteuert, indem durch Umpolen der an der Erregerspule des Elektromagneten angelegten Spannung durch die Erregerspule des Elektromagneten ein entgegengesetzter Strom fließt und dadurch die Polarität des Elektromagneten umgekehrt wird. Das damit erzeugte entgegengesetzt polarisierte magnetische Kraftfeld wirkt dem magnetischen Kraftfeld des Dauermagneten entgegen und unterstützt die durch die elastische und/oder federnde Lagerung des Pendelantriebs verursachte Rückstellkraft eine Beschleunigung des Pendels in Richtung der entgegengesetzten zweiten Endposition. Dabei wird das Pendel über die Nulllage hinaus vom Kraftfeld des Elektromagneten und des Dauermagneten abgelenkt. Dabei beginnt das Magnetfeld des Dauermagneten erneut seine Kraftwirkung auf das Magnetfeld der Luftspule und/oder das Magnetfeld des Kerns aus ferromagnetischem Material zu entfalten und bewirkt eine zunehmende Ablenkung des Pendelantriebes, bis dieser eine negative Endposition smE- erreicht, bei der der Luftspalt hE ein Minimum erreicht und damit die Kraftwirkung Fm des Magnetfeldes des Dauermagneten auf das Magnetfeld der Luftspule und/oder auf das Magnetfeld des Kerns aus ferromagnetischem Material ein Maximum erreicht. Die zweite Endposition des Pendels wird dabei je nach Dämpfungswirkung des elastischen Pendellagers und/oder der auf die Schwanzflosse wirkenden Strömungskräfte beim Einsatz im Wasser entweder gedämpft einer e-Funktion folgend, aperiodisch einschwingend oder nach einem gedämpften Einschwingvorgang erreicht.

Die zweite Endposition kann dabei anschlagslos erreicht werden und erzeugt deshalb dort kein mechanisches Geräusch, was einen potenziellen Beutefisch abschrecken würde. Der erfindungsgemäße Pendelantrieb arbeitet äußerst geräuscharm. Zur Begrenzung des Pendelausschlags kann optional ein elastischer Anschlag vorgesehen werden.

Der Umsteuervorgang wird vorteilhaft durch die sich schneidenden Polachsen des Elektromagneten und des Dauermagneten unterstützt. Dabei ist eine geringere Umsteuerenergie erforderlich als bei einer parallelen Anordnung der Polachsen. Dadurch kommt der elektromagnetische Angelköderantrieb mit einem geringeren Erregerstrom des Elektromagneten aus, was einen geringeren elektrischen Energiebedarf aus der elektrischen Energiequelle bedeutet. Dadurch erreicht der elektromagnetische Angelköderantrieb bei kleineren Abmessungen der elektrischen Energiequelle eine längere Laufzeit des elektromagnetischen Angelköderantriebs.

Die Masse des Pendelaktors bildet zusammen mit dem elastischen Pendellager ein mechanisch schwingfähiges Feder/Masse-System mit von dessen Federkonstante und Masse abhängigen mechanischen Resonanzfrequenz. Vorteilhaft weist die elektrische Ansteuerung der Erregerspule eine periodische Erregerspannung ue und einen periodischen Erregerstrom ie mit etwa der gleichen Frequenz auf, wie die mechanische Resonanzfrequenz des schwingfähigen Feder/Masse-Systems. Dadurch wird vorteilhaft die mechanische Resonanz des Pendelaktors zusätzlich zum Erzeugen eines Bewegungsmomentes genutzt.

Bei der besonders vorteilhaften bipolaren Ansteuerung erfolgt bei gegenpoliger Erregung durch den Erregerstrom ie im Elektromagneten bezüglich der Polarität des Dauermagneten eine Anziehung des Dauermagneten hin zum Pol des Elektromagneten, wodurch der Pendelhebel aus seiner Nulllage wegbewegt wird. Besonders vorteilhaft ist, wenn eine Erregerspule mit dem Kern aus ferromagnetischem Material angeordnet ist, weil der Dauermagnet auf den Kern aus ferromagnetischem Material im Luftspalt eine dauermagnetische Anziehungskraft und damit eine zusätzliche magnetische Kraftwirkung ausübt. Umgekehrt erfolgt bei gleichpoliger Erregung durch den Erregerstrom ie im Elektromagneten bezüglich der Polarität des Dauermagneten eine Abstoßung des Dauermagneten weg vom Pol des Elektromagneten, wodurch der Pendelhebel in Richtung seiner Nulllage zurückbewegt wird. Wenn eine Erregerspule mit dem Kern aus ferromagnetischem Material angeordnet ist, muss dabei die zusätzliche magnetische Kraftwirkung des Dauermagneten überwunden werden, welche der Dauermagnet auf den Kern aus ferromagnetischem Material im Luftspalt ausübt.

Vorteilhaft wird die Beschleunigung aus einer Endposition in Richtung der anderen Endposition durch einen Stromimpuls eingeleitet, der gegenüber der Antriebsfrequenz bzw. der Periodendauer des Pendelantriebs ein definiertes Tastverhältnis aufweist. Der dabei zur Erregung der Erregerspule eingetragene Stromimpuls ie weist dabei optional und vorteilhaft über die Zeit ein kleineres Integral auf als jeweils bei symmetrischer oder asymmetrischer Ansteuerung. Das Integral des Stroms über der Zeit repräsentiert die Ladung, welche der mitgeführten elektrischen Energiequelle zur Ansteuerung zu entnehmen ist. Durch eine reduzierte Impulsbreite kann entweder bei gleicher Ladungsmenge der Stromimpuls ie und damit das Rückstellmoment erhöht werden, was das Bewegungsmoment des Antriebs erhöht, oder es kann bei gleichbleibendem Bewegungsmoment die der elektrischen Energiequelle zu entnehmende Ladung reduziert werden, was die Laufzeit einer bestimmten elektrischen Energiequelle erhöht oder es gestattet, dass bei vergleichbarer Laufzeit eine kleinere elektrische Energiequelle zum Einsatz kommen kann. Der zur Umsteuerung des Pendelhebels erforderliche Stromimpuls für den Erregerstrom ie ist nur in dem Maß erforderlich, wie ihn der Pendelhebel bis zum Erreichen einer definierten Position zwischen den Endpositionen, bevorzugt zwischen einer der Endpositionen und der Nulllage, benötigt.

Die Impedanz der Erregerspule ist abhängig vom Luftspalt zwischen dem Kern aus ferromagnetischem Material und dem Dauermagneten am Pendelhebel. Da der Luftspalt sich dynamisch mit der Position des Pendelhebels verändert, kann vorteilhaft die Impedanz der Erregerspule zur Bestimmung der Position des Pendelhebels herangezogen werden, beispielsweise indem der Verlauf des Erregerstromes ie durch einen Stromsensor, beispielsweise einem Strommesswiderstand ausgewertet wird und an die elektronische Steuerungseinheit zur weiteren Verarbeitung weitergeleitet wird.

Alternativ oder zusätzlich kann durch einen Magnetfeldsensor, beispielsweise einen magnetfeldabhängigen Widerstand oder einen Hall-Sensor die magnetische Feldstärke im Luftspalt erfasst und an die elektronische Steuerungseinheit zur weiteren Verarbeitung weitergeleitet werden. Die gemessene magnetische Feldstärke ist ein Maß für den Luftspalt und damit für die Position des Pendelhebels. Weitere Sensoren sind zur Erfassung der Position des Pendelhebels möglich.

Vorteilhaft sind optional Mittel angeordnet, welche die aktuelle Position des Pendelantriebs erfassen und ein elektrisches Positionssignal an die elektronische Steuerungseinheit weitergeben. Die elektronische Steuerungseinheit bestimmt aus der aktuellen Position des Pendelantriebs, ob oder in welcher Höhe ein Erregerstrom ie des Elektromagneten zur Umsteuerung erforderlich ist, das heißt, ob und in welcher Richtung der Erregerstrom ie erforderlich ist oder ob der Erregerstrom ie reduziert oder abgeschaltet werden kann, ohne den Umsteuerungsvorgang zu behindern.

Der Umsteuerungsvorgang des Pendelhebels von einer Endposition smE+, smE- erfolgt durch den Erregerstrom ie durch die Erregerspule des Elektromagneten, wobei der Erregerstrom ie abgeschaltet oder reduziert wird, wenn der Pendelhebel eine definierte Position zwischen den Endpositionen smE+; smE- erreicht hat.

Vorteilhaft liegt die definierte Position zwischen einer der Endpositionen smE+, smE- und der Nulllage des Pendelhebels.

Mittel zur Erfassung der Position des Pendelhebels sind optional angeordnet, wobei die Mittel über die elektronische Steuerungseinheit eine Abschaltung oder Reduzierung des Erregerstroms ie veranlassen. Die Mittel zur Erfassung der Position des Pendelhebels umfassen magnetische Positionssensoren oder kapazitive Positionssensoren oder elektrooptische Positionssensoren oder induktive Positionssensoren und/oder es wird der luftspaltabhängige Erregerstromverlauf ie erfasst und zur Positionserfassung ausgewertet.

Alternativ oder zusätzlich kann die Ansteuerung der Erregerspule des Elektromagneten über einen elektrischen Hochpass, beispielsweise durch einen in Reihe zur Impedanz der Erregerspule liegenden Kondensator, erfolgen, der dynamisch hohe Erregerstromimpulse in der Erregerspule des Elektromagneten erzeugt und dadurch die aus der elektrischen Energiequelle entnommene elektrische Ladung begrenzt. Im Umschaltvorgang der Ansteuerung wird durch den aus der vorhergehenden Ansteuerungsphase geladenen Kondensator zunächst und dynamisch nach eine e-Funktion abnehmend die an der Erregerspule anliegende Erregerspannung ue verdoppelt und durch die Höhe des so erzeugten Stromimpulses kann bei verringerter Ladungsentnahme aus der elektrischen Energiequelle die magnetische Induktion des Elektromagneten zur Umsteuerung erhöht werden, wodurch der Luftspalt geringer wählbar ist und dadurch das Bewegungsmoment des Pendelantriebs erhöht wird.

Alternativ kann die Erregerspule mit einem parallel oder in Serie liegenden Kondensator als Resonanzkreis betrieben werden, um dadurch einen besonders geringen Energieverbrauch des Antriebs zu erzielen, weil in Resonanz nur die Verlustenergie nachgeschoben werden muss, um das Bewegungsmoment aufrecht zu erhalten. Vorteilhaft weist die von der schwingenden Masse des Pendelaktors mit von dessen Federkonstante abhängigen mechanischen Resonanzfrequenz etwa die gleiche Frequenz auf, wie die elektrische Resonanzfrequenz des Resonanzkreises. Die mechanische Frequenz des Pendelaktors und die elektrische Frequenz des Resonanzkreises der Ansteuerung sind in einem Bereich von 0 bis 30%, vorteilhaft von 0 bis 10% und insbesondere von 0 bis 5% aufeinander abgestimmt.

Die Ansteuerung der Erregerspule des Elektromagneten erfolgt in diesem Fall über einen elektrischen Schwingkreis, der periodisch mit einem Impuls des Erregerstroms ie angestoßen wird, wodurch die aus der elektrischen Energiequelle entnommene elektrische Ladung begrenzt wird.

Vorteilhaft ist zwischen der elektrischen Energiequelle und der elektronischen Steuerungseinheit und dem Antrieb ein Gleichspannungswandler angeordnet, der die Spannung der elektrischen Energiequelle auf eine höhere Spannung zur Versorgung der elektronischen Steuerungseinheit und des Antriebs anpasst.

Alternativ kann weniger vorteilhaft, weil mit geringerer elektromagnetischer und auch mechanischer Umsteuerenergie als bei bipolarer Ansteuerung die Ansteuerung des Elektromagneten statt der bipolaren Ansteuerung auch durch eine unipolare Ansteuerung, vorzugsweise umfassend eine periodische elektrisch unipolare Ansteuerung erfolgen. Bei der unipolaren Ansteuerung ist ein Kern beim Abschalten und vor der nächsten periodischen Magnetisierung zu entmagnetisieren und es sind entsprechende Mittel vorzusehen. Diese Mittel verbrauchen magnetische Energie und senken den Wirkungsgrad des Antriebs. Eine bipolare Ansteuerung des Elektromagneten erfolgt dagegen vorteilhaft über eine bipolare Stromversorgung oder bei unipolarer Stromversorgung über eine Vollbrücke mit oder ohne Koppelkondensator in Reihe zur Erregerspule oder über eine Halbbrücke mit Koppelkondensator in Reihe zur Erregerspule. Wegen eines erforderlichen Rückstellmoments einer elastischen Lagerung und/oder einer Feder ist Energie zur mechanischen Verformung aufzubringen und es geht Antriebsenergie verloren. Die bipolare Ansteuerung steuert dagegen vorteilhaft die Ummagnetisierung des Kerns ohne dass dabei Nachteile der unipolaren Ansteuerung auftreten. Die bipolare Ansteuerung ist damit effektiver und kann eine höhere Antriebsleistung bei umsetzen. Bei unipolarer Ansteuerung befindet sich die Nulllage in einer der Endpositionen und wird von einer elastischen Lagerung und/oder von einer Feder aus einer potenziellen vorherigen Ablenkung in seine Nulllage übergeführt, wenn der Elektromagnet nicht erregt ist, das heißt, wenn kein Strom durch die Erregerspule des Elektromagneten fließt. Die elastische Lagerung umfasst beispielsweise ein Elastomer, einen Gummi oder ein Silikon oder eine oder mehrere dauerelastische Federn aus Metall oder aus Kunststoff.

Zur sicheren Befestigung des Köderkörpers an der Verbindungsschnur zum Angler ist in beiden alternativen Ausführungsformen bevorzugter Weise wenigstens ein Befestigungsmittel wie beispielsweise eine Öse oder eine Klemme oder ein Schnurwirbel oder ein Karabinerhaken am Köderkörper angeordnet. Alternativ kann das Befestigungsmittel unabhängig vom Köderkörper an der Körperhülle des Angelköders angebracht sein. Optional können mehrere Befestigungsmittel an unterschiedlichen Positionen vorgesehen sein, um die Position der Befestigung der Verbindungsschnur zum Angler an unterschiedliche Steuerungssituationen anzupassen. Optional kann wenigstens ein Befestigungsmittel verstellbar und feststellbar am Köderkörper angeordnet sein. An einem der Befestigungsmittel ist die Verbindungsschnur zum Angler anhand von bekannten Verbindungstechniken wie beispielsweise Knoten oder Schnurklemmen befestigt. Die Verbindungsschnur zum Angler kann mehrere Komponenten wie beispielsweise ein Vorfach, eine Hauptschnur und gegebenenfalls ein Backing hinter der Hauptschnur umfassen. Die Verbindungsschnur ist anglerseitig vorzugsweise von der Spitze einer Angelrute durch die Ösen der Angelrute bis hin zu einer Aufrolleinrichtung geführt, welche vom Angler bedienbar sind.

Am Befestigungsmittel zur Befestigung des Köderkörpers oder der Körperhülle des Angelköders an der Verbindungsschnur zum Angler wirkt bei Bewegung des künstlichen oder des toten Angelköders, beispielsweise beim Einholen des künstlichen Angelköders oder des toten Angelköders und/oder beim Anschlagen der Angelrute eine von der Verbindungsschnur zum Angler verursachte, träge Kraftkomponente Fyr. Der Angler kann den künstlichen Angelköder, in welchen der Köderkörper integriert ist oder den toten natürlichen Angelköder, in welchen der Köderkörper integriert ist, wie gewohnt auswerfen oder vom Ufer oder vom Boot aus ins Wasser lassen und auf einen von ihm beabsichtigten Punkt im Gewässer hinsteuern, wo er den zu fangenden Raubfisch vermutet und kann dort durch Bewegungen des künstlichen Angelköders, in welchen der Köderkörper integriert ist oder des toten natürlichen Angelköders, in welchen der Köderkörper integriert ist, den zu fangenden Raubfisch anlocken.

Optional können zusätzliche Steuerungsmittel zur Steuerung von im Köderkörper angeordneten Komponenten vorgesehen sein.

Zur Steuerung der Komponenten des Köderkörpers können dabei bevorzugter Weise Nachrichtenerfassungsmittel im Köderkörper vorgesehen sein, welche definierte Veränderungen in der trägen Kraftkomponente Fyr im Befestigungspunkt des Köderkörpers der Verbindungsschnur vom Köderkörper zum Angler oder in der Geschwindigkeit v beziehungsweise einer trägen negativen Beschleunigung des Köderkörpers, insbesondere kurze ruckartige Veränderungen oder länger gezogene Veränderungen in elektrische Signale umwandeln, welche von der elektronischen Steuerungseinheit dekodiert werden und in elektrische Steuerungsbefehle zur Steuerung der Steuerungsaktoren und/oder der Erregung der Erregerspule des Elektromagneten des Pendelantriebes umgewandelt werden. Nachrichtenerfassungsmittel können beispielsweise einen Beschleunigungssensor, beispielsweise einen integrierten MEMS-Sensor oder einen Schnursensor, umfassen. Der Beschleunigungssensor ist insbesondere vorteilhaft, wenn das Befestigungsmittel nicht am Köderkörper angebracht ist, kann aber auch eingesetzt werden, wenn das Befestigungsmittel am Köderkörper angebracht ist. Der Schnursensor ist vorteilhaft angeordnet, wenn das Befestigungsmittel am Köderkörper angebracht ist. Der Schnursensor umfasst entweder einen Schalter mit kraftspezifisch definiertem Schaltpunkt oder einen Sensor zur analogen Umwandlung von Kraft in einen elektrischen Wert, wie beispielsweise ein Piezoelement, einen Dehnmesstreifen, einen optoelektronischen Sensor, einen induktiven Sensor oder einen kapazitiven Sensor oder einen Drucksensor.

Der Angler kann auf diese Weise unter Verwendung seiner herkömmlichen Angelmontage beispielsweise durch ruckartiges Zurückziehen beziehungsweise durch teilweises Anschlagen der Spitze der Angelrute unterschiedliche mechanische Signale oder zeitlich definierte Impulse erzeugen, welche mechanisch über die Verbindungsschnur zum Köderkörper übertragen werden und vom Nachrichtenerfassungsmittel durch zeitlich definierte und/oder ruckartige Veränderungen als Signal empfangen werden. Auf diese Weise kann vorteilhafter Weise der Angler durch einzelne Signale oder durch eine zeitliche Folge von Signalen eine Steuerungsnachricht oder mehrere kodierte Steuerungsnachrichten zur Steuerung des Köderkörpers aussenden. Die Signale können sich vorteilhaft auch in der Länge unterscheiden, um dadurch vergleichbar mit dem Morsealphabet einzelne Zeichen und/oder ganze Worte zur Steuerung der Steuerungsaktoren und/oder des elektromagnetischen Pendelantriebs an den Köderkörper zu senden. Vorteilhaft wird optional wenigstens ein Startzeichen und/oder wenigstens ein Stoppzeichen vereinbart, wobei eine dazwischenliegende Folge von Zeichen mit oder ohne Start oder Stoppzeichen als Nachricht interpretiert wird. Zusätzlich oder alternativ kann ein Zeitfenster ab dem ersten Zeichen vereinbart werden, innerhalb dessen eine Folge von Zeichen als Nachricht interpretiert wird.

Die elektronische Steuerungseinheit umfasst eine elektronische Schaltung, vorteilhaft einen programmierbaren Mikrocontroller mit Programmspeicher, Datenspeicher und entsprechenden Treibern zur Steuerung der Steuerungsaktoren und/oder des elektromechanischen Pendelantriebs. Die elektronische Steuerungseinheit umfasst vorteilhaft einen Dekoder zum Dekodieren der elektrischen Signale, welche von einem Nachrichtenerfassungsmittel umgewandelt wurden. Die semantische Zuordnung oder Bedeutung der Kodierung von Nachrichten kann vorteilhaft fest im Dekoder eingestellt sein oder optional vom Angler über eine Schnittstelle zur elektronischen Steuerungseinheit programmiert werden.

Als Schnittstelle kann eine drahtgebundene Schnittstelle wie beispielsweise eine USB- Schnittstelle oder eine RS232-Schnittstelle am Köderkörper mit abdichtbaren Kontakten oder eine drahtlose Schnittstelle im Köderkörper wie beispielsweise eine Bluetooth-Schnittstelle oder eine WiFi-Schnittstelle vorgesehen sein. Zur Programmierung der elektronischen Steuerungseinheit kann anglerseits ein Computer wie beispielsweise ein stationärer oder tragbarer Computer, ein Tablet oder ein Smartphone oder ein anderes Telekommunikationsmittel verwendet werden. Vorteilhaft verfügt dieser Computer über eine weitere Schnittstelle zu einem entfernten Computer oder einem Internet, um sich von dort fertige Programme oder Updates zur Programmierung der elektronischen Steuerungseinheit des Köderkörpers herunterladen zu können. Vorteilhaft können dabei besonders erfolgreiche Bewegungsmuster zur Steuerung des Antriebs angeboten und von dort heruntergeladen werden.

Der elektromagnetische Angelköderantrieb kann in Reaktion auf eine dekodierte Nachricht vom Angler oder aufgrund einer bei Inbetriebnahme des elektromagnetischen Angelköderantriebs voreingestellten Programmwahl gesteuert werden.

Vorteilhafter Weise können Mittel vorgesehen sein, welche den erfindungsgemäßen elektromagnetischen Pendelantrieb hinsichtlich der Frequenz und/oder der Amplitude steuern und/oder zeitweise aus- oder einschalten kann. Durch die Frequenz wird die Anzahl der Ausschläge pro Zeiteinheit der Schwanzflosse bestimmt. Damit können einerseits die Geschwindigkeit der Bewegungen und andererseits die Art der Bewegung bestimmt werden. Bei schwanzseitigem Antrieb mit magnetisch bewegter oszillierender Schwanzflosse kann über die Amplitude der Schwanzflossenausschläge die Stärke der Bewegungen bestimmt werden. So kann beispielsweise zwischen der Steuerung einer normalen Bewegung und einem Muster einer kranken Bewegung unterschieden werden.

Beispielsweise kann der elektromagnetische Angelköder so gesteuert werden, dass die periodische elektrische Ansteuerung der Antriebserregung mit einem zeitlich asymmetrischen Kurvenverlauf erfolgt und die Schwanzflosse des schwanzseitigen Antriebs kann in asymmetrische oszillierende Bewegung versetzt werden.

Dadurch werden die Amplituden Ausschläge über der Zeit, also das Integral der erzeugten Kraft und damit der verrichteten Arbeit, in positiver und in negativer Richtung bezüglich einer neutralen Mittelstellung der Schwanzflosse verschoben, beziehungsweise es wird die richtungsvorgebende zeitabhängige Position der Schwanzflosse und dadurch eine Richtungssteuerung über eine asymmetrische oszillierende Bewegung der Schwanzflosse erzielt. Je nach vertikaler oder horizontaler Ausrichtung der Schwanzflosse in neutraler Position kann auf diese Weise eine Steuerung der Bewegung des künstlichen Angelköders, in welchen der Köderkörper integriert ist oder des toten natürlichen Angelköders, in welchen der Köderkörper integriert ist, bewirkt werden.

Als elektrische Energiequelle zur Versorgung der elektronischen Steuerungseinheit der Steuerungsaktoren und des Antriebes kann eine Batterie oder können wiederaufladbare elektrische Energiequellen wie beispielsweise ein Akkumulator oder ein Kondensator, beispielsweise ein so genannter "Supercap", vorgesehen sein. Im Fall einer wiederaufladbaren elektrischen Energiequelle kann der Ladevorgang über eine externe elektrische Energiequelle wie beispielsweise über den Zigarettenanzünder von einer Autobatterie oder von einem externen Akkumulator wie einem "Powerpack" und über die drahtgebundene Schnittstelle erfolgen.

Alternativ ist ein drahtloser Ladevorgang vergleichbar mit einer elektrischen Zahnbürste möglich, bei dem die elektrische Energie induktiv oder kapazitiv an eine Empfangseinheit im Köderkörper übertragen wird und von dort in dessen wiederaufladbare elektrische Energiequelle übertragen wird.

Um optional den wasserdichten Zugang zum Auswechseln einer Batterie oder als Zugang zu einer drahtgebundenen Schnittstelle zu ermöglichen, ist vorteilhafter Weise am Köderkörper ein Schraubverschluss mit Dichtung oder ein elastisches Verschlussmittel, wie beispielsweise ein Verschlusspfropfen, vorgesehen, welche entfernbar und wieder schließbar den Zugang zur Batterie und/oder zur drahtgebundenen Schnittstelle freigeben und wieder wasserdicht verschließen.

Die Steuerungsmittel umfassen ferner optional eine von außerhalb des Köderkörpers bedienbare, abgedichtete Schalteinrichtung zum Herstellen und Unterbrechen einer elektrischen Verbindung zwischen der elektrischen Energiequelle und den elektrischen Verbrauchern wie beispielsweise der Erregerspule des elektromagnetischen Pendelantriebs, der elektronischen Steuerungseinheit, dem Antriebstreiber zur Ansteuerung der Erregerspule des elektromagnetischen Pendelantriebs sowie den optionalen Sensoren und den Steuerungsaktoren innerhalb des Köderkörpers. Alternativ erfolgt das Herstellen und Unterbrechen einer elektrischen Verbindung zwischen der elektrischen Energiequelle und den elektrischen Verbrauchern durch Einlegen oder Entnahme der elektrischen Energiequelle in den Köderkörper oder über einen entsprechenden Verbindungskontakt (Jumper) am Köderkörper.

Optional können weitere manuell bedienbare Steuerungsaktoren beispielsweise Mittel wie Schalter oder Potentiometer zum Einstellen der Frequenz und/oder der Amplitude und/oder des Tastverhältnisses beziehungsweise einem zeitlich symmetrischen oder asymmetrischen Kurvenverlauf des elektromagnetischen Pendelantriebs und/oder gewünschte Steuerungsprogrammversion und/oder zur Verlagerung des Formschwerpunktes und/oder des Gewichtsschwerpunktes und/oder von Strömungskörpern wie einem oder mehreren Höhen- und/oder Seitenrudern vorgesehen sein. Manuell bedienbare Steuerungsmittel werden vom Angler je nach einer gewünschten Steuerungsoption eingestellt, bevor er den Köderkörper oder die Körperhülle zu Wasser lässt. So stellt der Angler eine elektrische Verbindung von der elektrischen Energiequelle zu den elektrischen Komponenten des elektromagnetischen Pendelantriebs her, bevor er den Köderkörper oder die Körperhülle zu Wasser lässt.

Vorteilhafter Weise ist im Köderkörper optional wenigstens ein Mittel zur Ortung vorgesehen. Als Mittel zur Ortung sind insbesondere GPS-Ortungsmittel oder akustische und oder optische Ortungsmittel, beispielsweise Ultraschallgeber und/oder LED vorgesehen. Mittel zur Ortung dienen bevorzugt dem Wiederauffinden eines eventuell verloren gegangenen Köderkörpers.

Die Erregerspule des Elektromagneten ist in der ersten alternativen Ausführungsform vorteilhaft längsgerichtet und vorwiegend rotationssymmetrisch innerhalb des Köderkörpers entlang seiner Längsachse ausgebildet. Die Polachse des Elektromagneten P1 verläuft dabei im Wesentlichen parallel zur Längsachse des Köderkörpers. Vorteilhaft umfasst die Erregerspule einen Kern aus ferromagnetischem Material, welcher entweder innerhalb des Köderkörpers an dessen hinterer Außenwand endet oder wasserdicht durch diese nach hinten aus dem Köderkörper heraussteht, um von dort aus die wechselseitige Krafteinwirkung auf den daraufhin quer hin und her pendelnden Dauermagneten mit dynamischem Luftspalt auszuüben. Dadurch sind auch schmale langgestreckte Köderkörper mit hohem Bewegungsmoment realisierbar.

In der zweiten alternativen Ausführungsform ist wenigstens ein längs gerichteter Polschuh oder ein Joch aus ferromagnetischem Material einer quer zur Längsachse des Köderkörpers Y orientierten Erregerspule angeordnet und unterstützt vorteilhaft und in Synergie mit den Anforderungen zur Realisierung eines hohen Bewegungsmoments bei möglichst geringem elektrischen Energieverbrauch eine stromlinienförmige Gestaltung der Körperhülle des Angelköders.

In beiden alternativen Ausführungsformen verstärkt der wenigstens eine Polschuh oder das Joch aus ferromagnetischem Material des Kerns aus ferromagnetischem Material vorteilhaft die in der Polarität wechselnde Feldlinienkonzentration. Der Polschuh oder das Joch aus ferromagnetischem Material des Kerns aus ferromagnetischem Material unterstützt ferner die berührungslose Endposition des Pendelaktors, da sich ein Gleichgewicht aus abstoßender und ferromagnetisch anziehender Kraft einstellt, welches den Winkelausschlag auch ohne Anschlag und deshalb geräuschlos begrenzt, was in Synergie mit dem durch Wasser gedämpften Flossenausschlag zu einer propulsionsartigen Flossenbeschleunigung führt. Zur Begrenzung des Pendelausschlags kann optional zusätzlich ein elastischer Anschlag vorgesehen werden.

Der wenigstens eine längsgerichtete Polschuh oder das Joch aus ferromagnetischem Material oder die längsgerichtete rotationssymmetrische Erregerspule unterstützt vorteilhaft und in Synergie mit den Anforderungen zur Realisierung eines hohen Bewegungsmoments bei möglichst geringem elektrischen Energieverbrauch eine stromlinienförmige Gestaltung der Körperhülle des Angelköders.

Der elektromagnetische Pendelantrieb ist kompakt und kostengünstig realisierbar und kann auf einfache Weise gesteuert und programmiert werden, indem die elektrische Erregerspannung und damit der durch die Erregerspule des Elektromagneten fließende elektrische Erregerstrom in seiner Kurvenform, seiner Frequenz, seiner Amplitude und seinem Tastverhältnis beziehungsweise einem zeitlich symmetrischen oder asymmetrischen Kurvenverlauf verändert wird.

Der elektromagnetische Angelköderantrieb ist damit platzsparend auch in kleinen natürlichen oder künstlichen Angelködern integrierbar, er arbeitet mit hoher Effizienz, indem durch Ausnutzung eines dynamischen Luftspalts die Kraftwirkung des Dauermagneten dahingehend vorteilhaft ausgenutzt wird, dass mit geringem Erregerstrom in der elektromagnetischen Erregerspule ein hohes Bewegungsmoment erzeugt wird, wodurch die Größe der elektrischen Energiequelle reduzierbar ist und die Laufzeit einer Batteriezelle oder eine Ladung einer Akkumulatorzelle erhöht werden kann. Dabei erzeugt der elektromagnetische Angelköderantrieb praktisch keine unnatürlichen Dreh-, Anschlag- oder Umsteuerungsgeräusche. Damit ist der elektromagnetische Angelköderantrieb für einen breiten Markt des Angelzubehörs eine kostengünstige und fängige Ergänzung für künstliche Angelköder und bietet die Möglichkeit, tote natürliche Angelköder in einer für den Raubfisch anziehenden Weise zu bewegen.

Der Antrieb erzeugt neben einer oszillierenden seitlichen Bewegung des Angelköders eine in einem Antriebspunkt vorwärts in y-Richtung gerichtete Summe von Kraftkomponenten Fyv im Antriebspunkt. Die Position des Antriebspunktes ist abhängig von der Form, der Fläche und dem Material der Schwanzflosse und von der strömungstechnischen Gestaltung des Köderkörpers. Der Antriebspunkt stellt sich in der hinteren Hälfte des Angelköders vorzugsweise im Bereich des Übergangsbereichs der Schwanzflosse, insbesondere im Bereich einer Pendellagerdrehachse ein.

Optional ist zur Erzeugung einer zusätzlich zum Auftrieb des Köderkörpers nach oben gerichteten Auftriebskomponente Fa ein Schwimmkörper am Köderkörper befestigbar. Der Schwimmkörper kann an einem oder an einem von mehreren vorderen ersten Befestigungsmitteln definiert am Köderkörper befestigt werden. Alternativ ist die Position des vorderen ersten Befestigungsmittels zur Befestigung des Schwimmkörpers verstellbar und dauerhaft in einer Position verbleibend oder feststellbar angeordnet. Alternativ ist das vordere erste Befestigungsmittel zur Befestigung des Schwimmkörpers über ein vorderes erstes Verlängerungselement mit dem Köderkörper verbunden. Vorteilhaft umfasst das vordere erste Verlängerungselement elastisch verformbares Material, beispielsweise Metall oder Kunststoff und verbleibt bis zur nächsten Verformung in der eingestellten Form. Durch diese Maßnahmen ist der Angelköder in seiner Neigung bezüglich der Lotachse in Synergie mit der Gewichtskraft des Antriebs und der Komponenten des Angelköders, wie beispielsweise der Energiequelle, der Ansteuerelektronik, der Befestigungsmittel statisch und in Synergie mit der vom Antrieb erzeugten vorwärts in y-Richtung gerichteten Summe von Kraftkomponenten Fyv in seiner Neigung bezüglich der Lotachse dynamisch trimmbar und der Angelköder ist in seiner Position in der Tiefe bezüglich der Oberfläche des umgebenden Wassers vom Angler definiert einstellbar.

Ein natürlicher seitlicher und/oder vorwärts gerichteter Bewegungsablauf aufgrund der vom Antrieb erzeugten vorwärts in y-Richtung gerichteten Summe von Kraftkomponenten Fyv hängt dabei ab von der Masse des Antriebs des Angelköders im Verhältnis zur Masse der restlichen Komponenten des Angelköders und der dadurch im umgebenden Wasser nach unten gerichteten Gewichtskraft, den nach oben gerichteten Auftriebskräften, der strömungstechnischen Gestaltung des Köderkörpers und der Schwanzflosse und der Anbindung der Verbindungsschnur zum Angler und der Anbindung eines optional eingesetzten Schwimmkörpers zur Erzeugung einer zusätzlichen nach oben gerichteten Auftriebskomponente.

Die vom Antrieb erzeugte möglichst natürliche seitliche und/oder vorwärts gerichtete Bewegung des Köderfisches und optional dessen Steuerbarkeit bezüglich der Bewegungsrichtung v und der Tiefe des Angelköders im umgebenden Wasser durch einen Angler wird durch die Position des vorderen ersten Befestigungsmittels und des hinteren zweiten Befestigungsmittels sowie des vorderen ersten Umlenkpunktes und des hinteren zweiten Umlenkpunktes der Verbindungsschnur zum Angler bestimmt. Die Position der Befestigungsmittel und deren Umlenkpunkten bildet zusammen mit dem Antrieb eine Synergie, welche die Aufgabenstellung der Erzeugung eines natürlichen Bewegungsablaufs des Angelköders unterstützt.

Die Verbindungsschnur zum Angler kann je nach gewünschter seitlicher und/oder vorwärts gerichteter Bewegung v im umgebenden Wasser an einer beliebigen Stelle des Köderkörpers befestigt werden. Wenn eine definiert steuerbare Vorwärtsbewegung v, weggerichtet vom Angler mit natürlichem Bewegungsablauf des Köderkörpers erzielt werden soll, ist die Verbindungsschnur zum Angler hinter dem Antriebspunkt zu befestigen, vorzugsweise hinter dem Pendellager oder einer Hilfsgeraden, der Pendellagerdrehachse, welche axial innerhalb des Pendellagers verläuft.

In einem bevorzugten Ausführungsbeispiel ist deshalb die Verbindungsschnur zum Angler vom Kopfende des Köderkörpers aus gesehen hinter der Pendellagerdrehachse des Antriebs befestigt.

Bei Verwendung eines Schwimmkörpers wird die Position des vorderen ersten Befestigungsmittels zur Befestigung des Schwimmkörpers am Köderkörper vorteilhaft so gewählt, dass die Längsachse Y des Köderkörpers im Wesentlichen waagrecht oder in einem definierten, vom Angler gewünschten Winkel im umgebenden Wasser steht. Die Distanz zwischen dem vorderen ersten Befestigungsmittel zur Befestigung des Schwimmkörpers am Köderkörper und dem an der Oberfläche des umgebenden Wassers schwimmenden Schwimmkörper bestimmt die Tiefe, in welcher sich der Angelköder aufgrund seines Antriebs bewegt.

Der Schwimmkörper wird entweder unabhängig von der Verbindungsschnur zum Angler am Köderkörper befestigt oder vorteilhaft wird die Verbindungsschnur zum Angler beweglich durch ein hinteres zweites Befestigungsmittel am Köderkörper, welches einen hinteren zweiten Umlenkpunkt bildet zu einem vorderen ersten Befestigungsmittel am Köderkörper, welches einen ersten vorderen ersten Umlenkpunkt bildet geschleift, durch welchen die Verbindungsschnur zum Angler ebenfalls beweglich weitergeschleift wird und bis zum Schwimmkörper geführt wird, an welchem die Verbindungsschnur zum Angler befestigbar ist.

Vorteilhaft ist in einem Ausführungsbeispiel innerhalb des Köderkörpers ein Verbindungsrohr angeordnet, durch welches die Verbindungsschnur zum Angler geschleift werden kann und dessen hintere zweite Öffnung einen hinteren zweiten Umlenkpunkt bildet und dessen vordere erste Öffnung einen vorderen ersten Umlenkpunkt bildet.

Zur Begrenzung der Relativbewegung der Verbindungsschnur zum Angler zu den Befestigungsmitteln in den Umlenkpunkten ist zwischen dem Angler und dem Angelköder ein Schnurstopper an der Verbindungsschnur zum Angler verstellbar und an der Verbindungsschnur zum Angler bis zur nächsten Verstellung haftend feststellbar befestigt.

Durch die Gewichtskraft gleitet der Angelköder entlang der Verbindungsschnur zum Angler zunächst im umgebenden Wasser nach unten, bis er am hinteren zweiten Umlenkpunkt des hinteren zweiten Befestigungsmittels die Position des Schnurstoppers erreicht. Eine vom Antrieb erzeugte vorwärts in y-Richtung gerichtete Summe der Kraftkomponenten Fyv bewirkt zunächst, dass der Angelköder diese Position wieder verlässt, bis die vom Antrieb erzeugte Bewegung über den zwischen Angelköder und Schwimmkörper liegenden Teil der Verbindungsschnur zum Angler den Schwimmkörper in Bewegung setzt und dadurch eine nach oben gerichtete Kraftkomponente im Gleichgewicht zu einer nach unten gerichteten Gewichtskraft erfährt, welche den Schnurstopper wieder an den hinteren zweiten Umlenkpunkt des hinteren zweiten Befestigungsmittels am Köderkörper heranzieht und die Position des Angelköders an der Verbindungsschnur zum Angler und damit die Tiefe, in welcher sich der Angelköder bewegt stabilisiert.

Durch diese Art der Montage wird vorteilhaft in Synergie zusammen mit dem Antrieb eine definierte natürliche Vorwärtsbewegung mit einer Geschwindigkeit v in Bewegungsrichtung y gemäß Aufgabenstellung erreicht.

Bei einer alternativ möglichen klassischen Montage des Schwimmkörpers am Köderkörper wird vorteilhaft in Synergie zusammen mit dem Antrieb eine definierte natürliche Bewegung vorwiegend durch Querbewegungen des Angelköders im Bereich der Platzierung des Angelköders im umgebenden Wasser gemäß Aufgabenstellung erreicht.

Der Antrieb ist darüber hinaus auch für Einsatzbereiche eines Pendelantriebs geeignet in denen begrenzte Größe und Kapazität der elektrischen Energiequelle begrenzende Merkmale sind. So ist der Einsatz des Antriebs beispielsweise für Spielzeug oder technische Pendelanwendungen mit begrenzter elektrischer Antriebsenergie, beispielsweise in automotiven Anwendungen in der Luft- und Raumfahrt oder für solarbetriebene Pendelantriebe oder Pendelmotoren zum dauerhaften Einsatz auch bei geringer Lichtstärke, für Tauchroboter, für eigengeräuscharme Antriebe oder Aktoren, beispielsweise in Uhren, oder in der Robotik als Pendelaktor oder Pendelmotor zur geräuscharmen und effizienten Erzeugung dynamischer Kräfte, beispielsweise in Haushaltsgeräten wie Rasierapparaten, Zahnbürsten, Milchschäumern, Eirührern, Fächerventilatoren, Massagestäben oder in der Medizintechnik, beispielsweise in der Zahntechnik zur Reinigung, zum schonenden Entfernen von Zahnstein oder dem Schleifen oder Polieren von Zähnen, in der Chirurgie zum Antrieb von elektrischen Skalpellen oder zum Antrieb von Pumpen für Körperflüssigkeiten oder für die Nahrungszufuhr oder zur dauerhaften geräuscharmen Massage oder Therapie sensibler Körperteile, zur Kompensation oder zur Anregung von symmetrischen oder asymmetrischen Schwingungen in mechanischen oder akustischen Systemen oder dergleichen denkbar.

Zur Steuerung eines elektromagnetischen Angelköderantriebs können beispielhaft die folgenden Verfahrensschritte angewendet werden:
- Bereitstellung eines Köderkörpers eines erfindungsgemäßen elektromagnetischen Angelköderantriebs in einer Körperhülle eines künstlichen Angelköders oder in der Körperhülle eines toten natürlichen Angelköders,
- Anbringung einer Verbindungsschnur zum Angler an einem Befestigungsmittel des Köderkörpers und/oder der Körperhülle,
- Herstellen einer elektrischen Verbindung von der elektrischen Energiequelle zu den elektrischen Komponenten des elektromagnetischen Pendelantriebs,
- Ausbringen der Körperhülle in das umgebende Wasser.

Zur Steuerung des elektromagnetischen Angelköderantriebs können vorteilhaft optional zusätzlich die folgenden Verfahrensschritte angewendet werden:
- Bereitstellen einer elektronischen Steuerungseinheit, umfassend einen Dekoder innerhalb des Köderkörpers oder innerhalb der Körperhülle,
- Bereitstellen eines Nachrichtenerfassungsmittels, insbesondere eines Sensors, zur Erfassung von Zugkraftschwankungen zwischen dem Köderkörper oder der Körperhülle und der Verbindungsschnur zum Angler und/oder von Geschwindigkeitsschwankungen des Köderkörpers oder der Körperhülle,
- Kodieren einer Nachricht durch Hervorrufen von Zugkraftschwankungen auf der Verbindungsschnur zum Angler durch den Angler und/oder Geschwindigkeitsschwankungen des Köderkörpers oder der Körperhülle durch Hervorrufen von Zugkraftschwankungen auf der Verbindungsschnur zum Angler durch den Angler,
- Dekodieren der kodierten Nachricht durch den Dekoder im Köderkörper oder in der Körperhülle,
- Ausführen einer Steuerungsaktion als Reaktion gemäß der dekodierten Nachricht durch wenigstens einen Steuerungsaktor und/oder den elektromagnetischen Pendelantrieb.

Die Reihenfolge der Verfahrensschritte ist nicht zwingend wie dargestellt einzuhalten. Es können einzelne Verfahrensschritte vorgezogen oder nach hinten verschoben werden, ohne die Wirksamkeit der vorgeschlagenen Verfahrensbeispiele zu verändern.

### Kurze Beschreibung der begleitenden Figuren

Diese und andere Merkmale der vorliegenden Erfindung ergeben sich aus der folgenden Beschreibung von bevorzugten Ausführungsformen der vorliegenden Erfindung, die nicht einschränkende Beispiele darstellen, wobei auf die folgenden Figuren Bezug genommen wird. Es zeigen,
- Fig. 1: die Situation eines Anglers mit Angelmontage und einem in ein Gewässer eingebrachten Angelköder,
- Fig. 2: einen Angelköder mit einem schwanzseitigen Antrieb mit dem elektromagnetischen Angelköderantrieb in der Seitenansicht,
- Fig. 3: die Schnittebene A-B des Ausführungsbeispiels eines Angelköders aus Fig. 2,
- Fig. 4: eine Anordnung von Steuerungsmitteln und von Antriebsmitteln im Angelköder in der Darstellung der Schnittebene C-D einer Seitenansicht,
- Fig. 5: eine prinzipielle Anordnung von Antriebsmitteln im Angelköder in der Darstellung der Schnittebene A-B einer Draufsicht,
- Fig 6a: einen Querschnitt durch die Körperhülle und den Köderkörper des Angelköders in der Schnittebene E-F gemäß einer ersten alternativen Ausführungsform,
- Fig. 6b: einen Längsschnitt durch die Körperhülle und den Köderkörper des Angelköders gemäß einer ersten alternativen Ausführungsform,
- Fig.6c: als Detail des Schnitts G-H ausschnittsweise den Elektromagneten und die Komponenten des Pendelaktors gemäß einer ersten alternativen Ausführungsform,

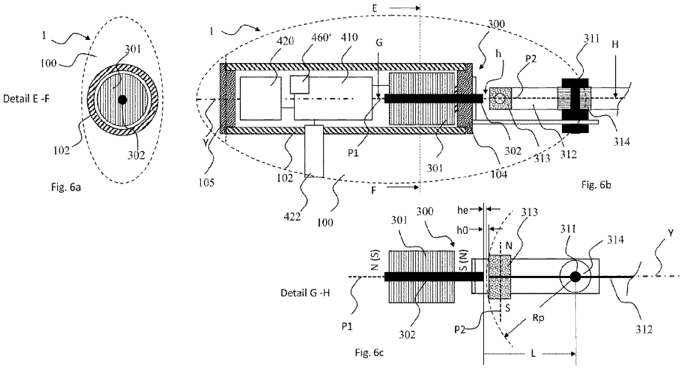

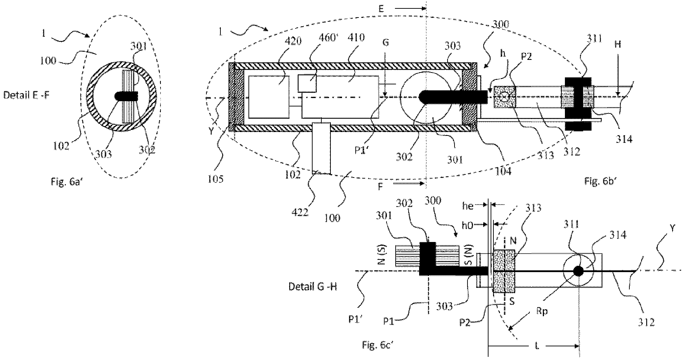

- Fig 6a' ,: einen Querschnitt durch die Körperhülle und den Köderkörper des Angelköders in der Schnittebene E-F, eines Ausführungsbeispiels gemäß einer zweiten alternativen Ausführungsform,
- Fig. 6b': einen Längsschnitt durch die Körperhülle und den Köderkörper des Angelköders eines Ausführungsbeispiels gemäß einer zweiten alternativen Ausführungsform,
- Fig.6c' ,: als Detail des Schnitts G-H ausschnittsweise den Elektromagneten und die Komponenten des Pendelaktors eines Ausführungsbeispiels gemäß einer zweiten alternativen Ausführungsform

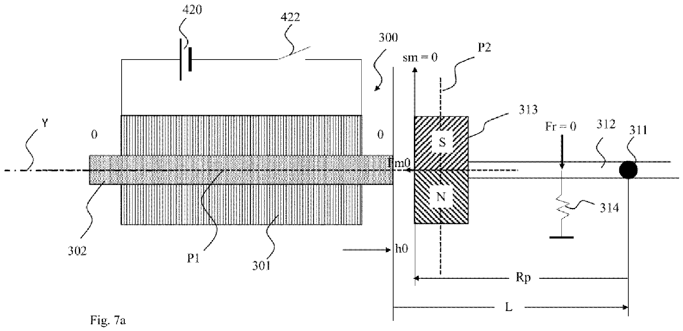

- Fig. 7a: schematisch den Elektromagneten und die Komponenten des Pendelaktors in einer Nulllage,

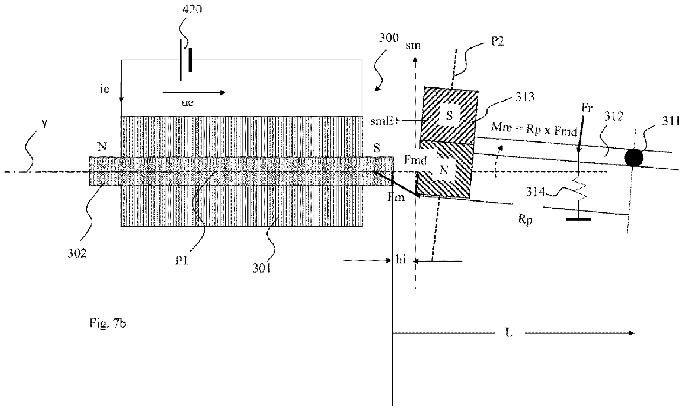

- Fig.7b: schematisch den Elektromagneten und die Komponenten des Pendelaktors gemäß einem Ausführungsbeispiel der ersten Ausführungsform in teilweise positiv ausgelenktem Zustand,

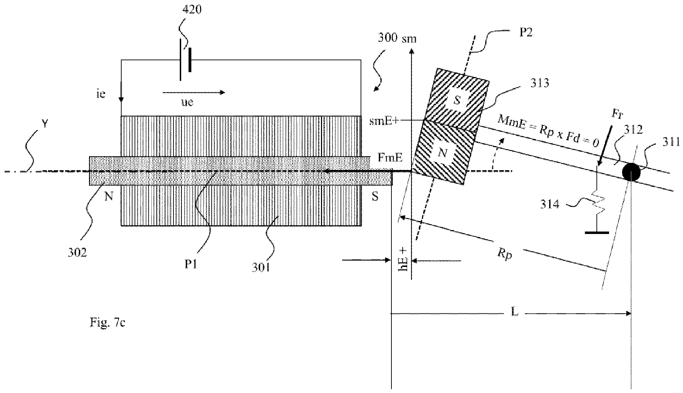

- Fig. 7c: schematisch den Elektromagneten und die Komponenten des Pendelaktors gemäß einem Ausführungsbeispiel der ersten Ausführungsform in seiner positiven Endposition der Auslenkung,

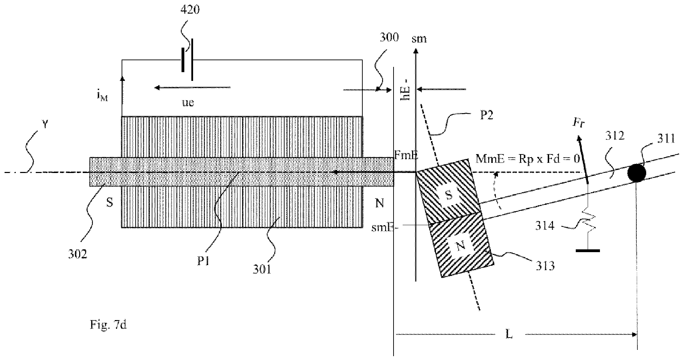

- Fig. 7d: schematisch den Elektromagneten und die Komponenten des Pendelaktors gemäß einem Ausführungsbeispiel der ersten Ausführungsform in seiner negativen Endposition der Auslenkung,

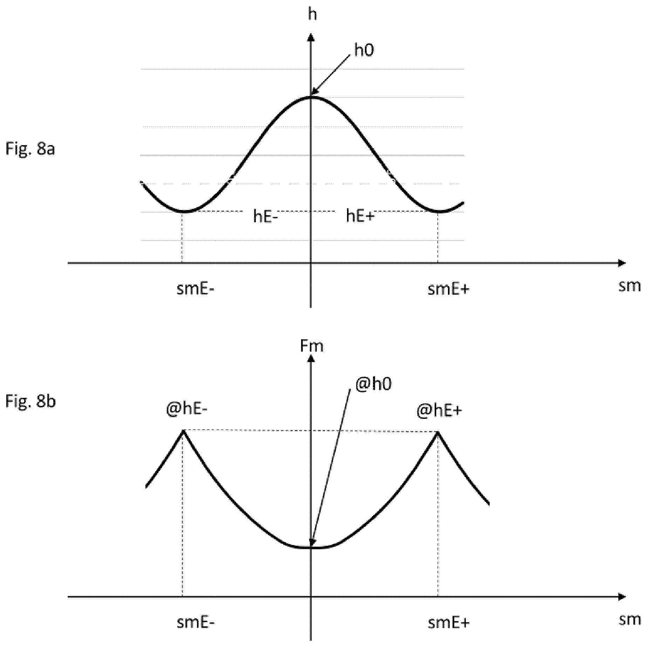

- Fig 8a: den Verlauf des dynamischen Luftspalts h in Abhängigkeit von der Auslenkung sm,
- Fig 8b: den Verlauf der magnetischen Kraftwirkung Fm in Abhängigkeit von der Auslenkung sm,

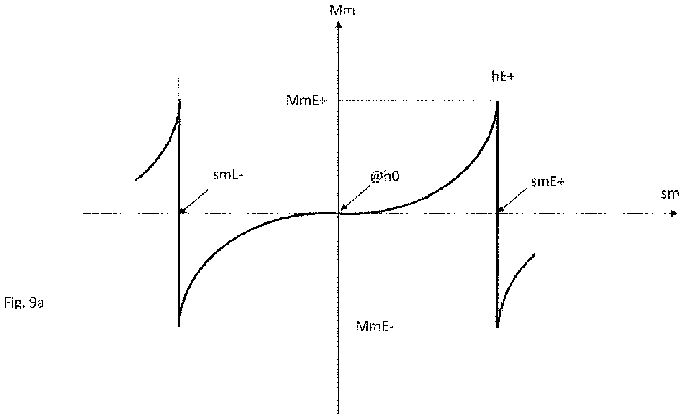

- Fig 9a: den Verlauf des magnetischen Bewegungsmoments Mm in Abhängigkeit von der Auslenkung sm des Pendelhebels,

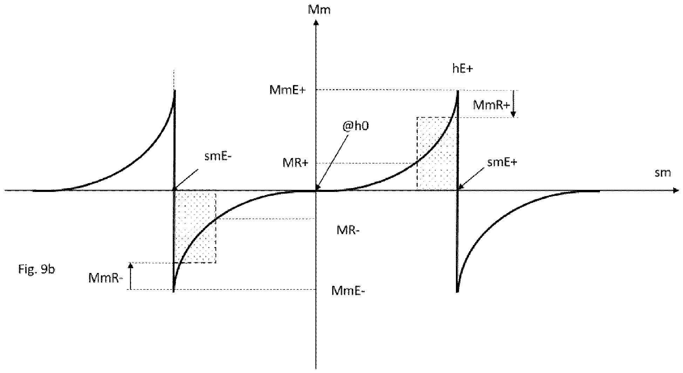

- Fig 9b: den Verlauf des magnetischen Bewegungsmoments Mm in Abhängigkeit von der Auslenkung sm des Pendelhebels und den für eine Umsteuerung erforderlichen Ansteuerbereichen,

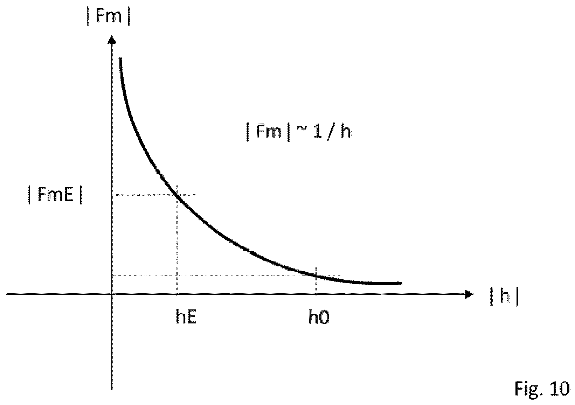

- Fig. 10: den prinzipiellen Zusammenhang zwischen dem Betrag der magnetischen Kraftwirkung und dem Betrag der Luftspaltbreite,

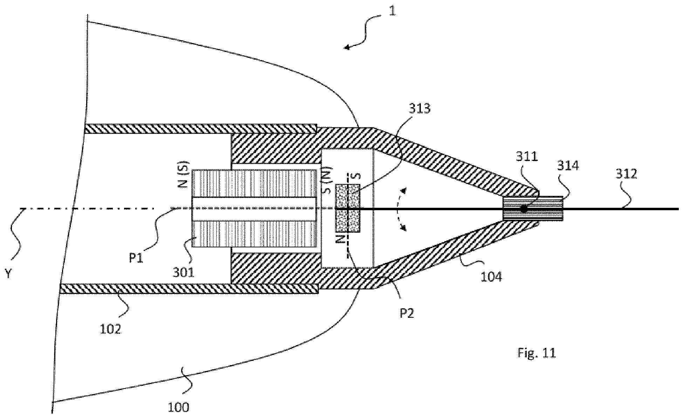

- Fig. 11: die Anordnung des elektromagnetischen Pendelantriebs innerhalb des Köderkörpers,

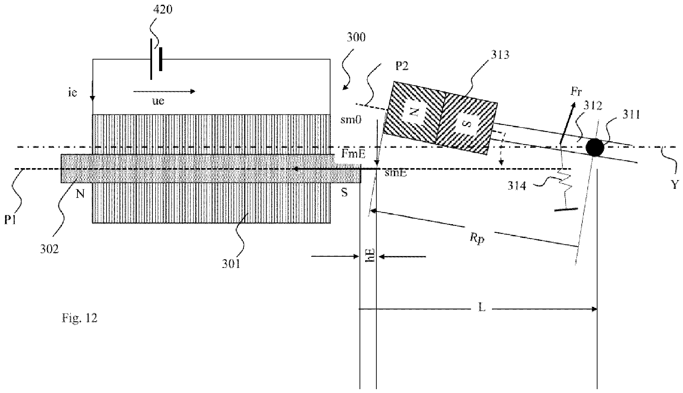

- Fig. 12: schematisch den Elektromagneten und die Komponenten des Pendelaktors eines Ausführungsbeispiels der ersten Ausführungsform mit einer zweiten Polachse P2, welche in einem Winkelbereich von 0° +/- 40° zur Längsachse des Köderkörpers angeordnet ist,

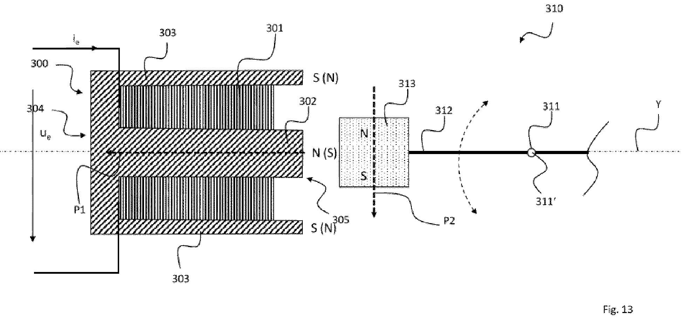

- Fig. 13: das Schnittbild eines Angelköderantriebs mit E-förmigem Polschuh oder Joch aus ferromagnetischem Material,

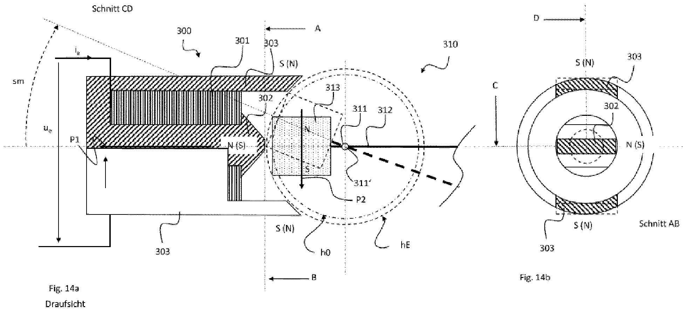

- Fig. 14a und Fig. 14b: ein Ausführungsbeispiel mit partiell topfförmigem Polschuh oder Joch aus ferromagnetischem Material,

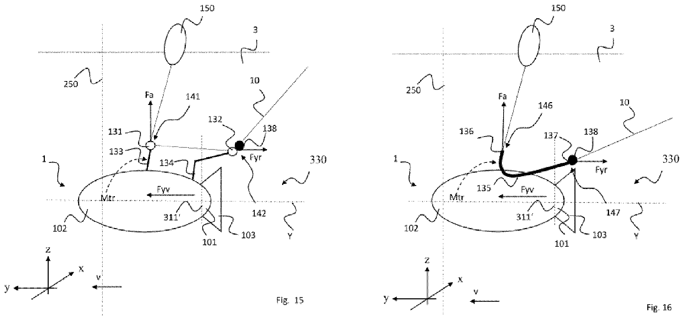

- Fig. 15: ein Montagebeispiel mit Schnurstopper bei externer Schnurführung und
- Fig. 16: ein Montagebeispiel mit Schnurstopper bei interner Schnurführung.

### Detaillierte Beschreibung bevorzugter Ausführungsbeispiele

Im Folgenden werden gegenwärtig bevorzugte Ausführungsbeispiele der vorliegenden Erfindung anhand der begleitenden Figuren näher erläutert. Gleiche Bauteile weisen gleiche Bezugszeichen auf.

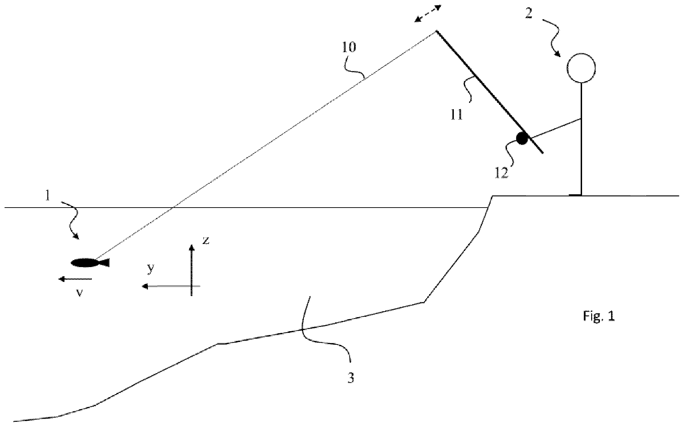

Fig. 1 zeigt die Situation eines Anglers 2 mit Angelmontage 10, 11, 12 und einem in ein Gewässer 3 eingebrachten Angelköder 1. Die Angelmontage umfasst eine Aufrolleinrichtung 12, eine Angelrute 11 und eine Verbindungsschnur 10 zwischen dem Angler 2 und dem Angelköder 1. In dem dargestellten Beispiel bewegt sich der Angelköder 1 mit einer Relativgeschwindigkeit v in Richtung y im umgebenden Wasser 3 und schleppt die Verbindungsschnur 10 hinter sich her. Alternativ kann der Angelköder 1 ausgeworfen und mit oder ohne Relativgeschwindigkeit v gesteuert bewegt werden, um einen bewegten Beutefisch nachzuahmen. Der erfahrene Angler 2 wird in der Praxis darauf achten, dass die Verbindungsschnur 10 ausreichend straff geführt ist, um bei einem Biss durch einen zu fangenden Fisch gezielt die Angelmontage anschlagen zu können, das heißt durch eine ruckartige Bewegung der Verbindungsschnur 10 zu sich sicherzustellen, dass ein Fanghaken des Angelköders 1 im zu fangenden Fisch festgesetzt wird.

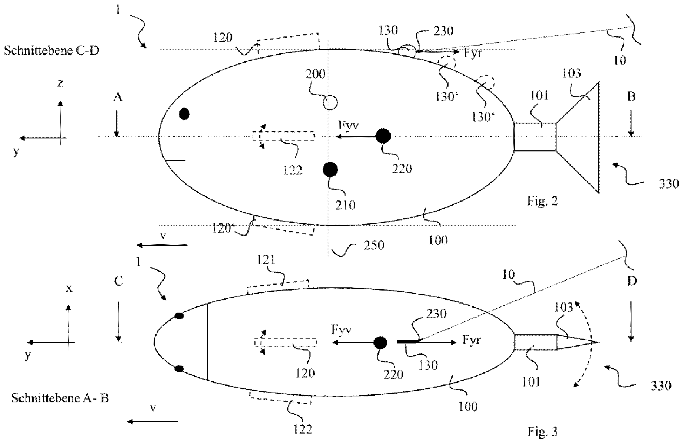

In Fig. 2 ist ein Ausführungsbeispiel eines Angelköders 1 mit einem schwanzseitigen Antrieb 330 und einer vertikal orientierten Schwanzflosse 103 zum Antrieb mit dem elektromagnetischen Angelköderantrieb in der Schnittebene C-D der Seitenansicht dargestellt. Statt einer vertikal orientierten Schwanzflosse 103 kann auch eine horizontal orientierte Schwanzflosse 103 zum Antrieb mit dem elektromagnetischen Angelköderantrieb angeordnet sein. An einem Befestigungsmittel 130 ist an einem Befestigungspunkt 230 eine Verbindungsschnur 10 zu einem Angler 2 (siehe Fig. 1) befestigt. In diesem Punkt greift eine träge Kraftkomponente Fyr ein, die im Falle einer Vorwärtsbewegung des Angelköders von der rückwärts gerichteten Kraft der Verbindungsschnur 10 zum Angler 2 verursacht wird, die einerseits von Reibung der Verbindungsschnur 10 zum Angler 2 am umgebenden Wasser 3 (siehe Fig. 1) und andererseits von rückwärtsgerichteter Krafteinwirkung der Angelrutenmontage herrührt.

Optional können mehrere Befestigungsmittel 130, 130' an unterschiedlichen Positionen vorgesehen sein, um die Position des Befestigungspunktes 230 der Verbindungsschnur 10 zum Angler 2 an unterschiedliche Steuerungssituationen anzupassen. Optional kann wenigstens ein Befestigungsmittel 130, 130' verstellbar und feststellbar am Angelköder 1 angeordnet sein.

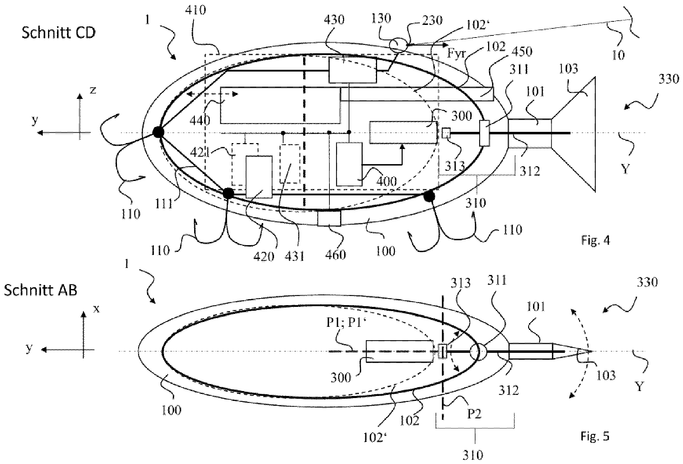

Der Angelköder 1 weist einen Formschwerpunkt 200 auf, in welchem der in umgebendes Wasser 3 getauchte Angelköder 1 durch Verdrängung von Wasservolumen eine nach oben zur Wasseroberfläche hin gerichtete Auftriebskraft erfährt. Die Lage des Formschwerpunktes 200 kann bei im Wesentlichen fester Formgebung des Angelköders 1 durch eine im Angelköder 1 angeordnete künstliche Schwimmblase 440 (vergleiche Fig. 4) über deren Position und/oder Volumen verändert werden.

Der Angelköder 1 weist ferner einen Gewichtsschwerpunkt 210 auf, in welchem der in umgebendes Wasser 3 eingebrachte Angelköder 1 eine von der Erdanziehung verursachte nach unten zum Boden des Gewässers hin gerichtete Gewichtskraft erfährt. Die Position des Gewichtsschwerpunktes 210 kann durch Veränderung der Position von relativ schweren Elementen des Angelköders 1 wie beispielsweise der elektrischen Energiequelle 420 (vergleiche Fig. 4) oder von optional vorhandenen Ballastgewichten (nicht dargestellt) verändert werden.

Der Angelköder 1 ist bezüglich der Lage des Formschwerpunktes 200 und des Gewichtsschwerpunktes 210 so ausgelegt, dass sich beim in umgebendes Wasser 3 getauchten Angelköder 1 der Formschwerpunkt 200 oberhalb des Gewichtsschwerpunktes 210 befindet. Dadurch ist eine stabile Lage des Angelköders 1 gewährleistet. Optional kann eine Schwimmpose den Auftrieb erzeugen oder ergänzen. Vorteilhaft ist dabei, dass zusätzlich zum erzeugten Auftrieb die Position des Angelköders 1 an der Wasseroberfläche angezeigt wird. Die Verbindungslinie, welche durch den Formschwerpunkt 200 und durch den Gewichtsschwerpunkt 210 führt, wird im Folgenden als Lotachse 250 bezeichnet. Bei statischer Trimmung des Angelköders 1 zeigt die Lotachse 250 in Richtung des Gewichtsschwerpunktes der Erde, also in Richtung auf den Boden des Gewässers, in welchem der selbstbewegbare künstliche Köderfisch 1 schwimmt.

Zur dynamischen Steuerung bei vorhandener Relativgeschwindigkeit v zwischen Angelköder 1 und dem umgebenden Wasser 3 können als Steuerungsmittel Strömungskörper, wie die optional dargestellten Höhenruder 122 und 121 (siehe Fig. 3) und/oder optional ein Seitenruder 120 oben und/oder optional ein Seitenruder 120' unten an der Körperhülle 100 des Angelköders 1 angeordnet sein. Die Steuerungsmittel 120, 120', 121, 122 sind, sofern vorhanden, fest eingestellt oder entweder manuell verstellbar beispielsweise über manuell bedienbare Steuerungsaktoren 450 (siehe Fig. 4) und/oder über elektrische Steuerungsaktoren (nicht dargestellt) des Angelköders 1.

In dem dargestellten Ausführungsbeispiel ist die Schwanzflosse 103 vertikal ausgerichtet. Dabei erfolgt die oszillierende Bewegung quer zur Bewegungsrichtung y in positiver und negativer Richtung der horizontalen x-Achse (siehe beispielsweise Fig. 3 oder Fig. 5).

Fig. 3 zeigt die Schnittebene A-B des Ausführungsbeispiels eines Angelköders 1 aus Fig. 2 mit schwanzseitigem Antrieb 330 und vertikal orientierter Schwanzflosse 103 in Draufsicht.

Fig. 4 zeigt eine Anordnung von Steuerungsmitteln und von Antriebsmitteln im Angelköder 1 in der Darstellung der Schnittebene C-D einer Seitenansicht.

Der Köderkörper 102 ist in einer Ausführung mit einem innerhalb des Köderkörpers angeordneten Dauermagneten 313 mit einer durchgehenden Linie symbolisiert. Alternativ ist der Köderkörper 102' in einer Ausführung mit einem außerhalb des Köderkörpers 102, 102' angeordneten Dauermagneten 313 mit einer unterbrochenen Linie symbolisiert.

Neben dem Köderkörper 102, 102' umfasst der elektromagnetische Angelköderantrieb einen elektromagnetischen Pendelantrieb. Der elektromagnetische Pendelantrieb umfasst eine elektrische Energiequelle 420, einen Elektromagneten 300, eine elektronische Steuerungseinheit 410 und einen Pendelaktor 310, umfassend einen Dauermagneten 313 der quer zur Längsachse des Köderkörpers Y beweglich angeordnet ist und einen Pendelhebel 312, auf dem in einem Pendelradius Rp um ein Pendellager 311 der Dauermagnet 313 gelagert ist und eine oszillierende Bewegung des Schwanzes des toten natürlichen Angelköders 1 oder des künstlichen Angelköders 1 mit einer definierten Auslenkung sm (siehe Fig. 7a bis Fig. 9b) quer zur Längsachse des Köderkörpers Y erzeugt.

Der Elektromagnet 300, welcher eine elektromagnetische Kraftwirkung auf den Dauermagneten 313 ausübt, erzeugt eine oszillierende Bewegung quer zur Längsachse des Köderkörpers Y, welche über einen Pendelhebel 312 und einen Übergangsbereich 101 der Schwanzflosse auf eine Schwanzflosse 103 übertragen wird. Dabei kann vorteilhaft ein Bewegungsmoment über das Pendellager 311 erzeugt werden und eine Über- oder Untersetzung der Antriebskraft erfolgen.

Der Elektromagnet 300 umfasst eine Erregerspule 301 (siehe Fig. 6a beziehungsweise 6a' bis Fig. 7d sowie Fig. 11 und Fig. 12) aus N Windungen mit oder ohne einen Kern 302 aus ferromagnetischem Material. Bei Erregung durch eine Erregerspannung ue (siehe Fig. 7a bis Fig. 7d) fließt durch die Windungen der Erregerspule 301 ein elektrischer Erregerstrom ie und erzeugt an den Enden der Erregerspule 301 beziehungsweise an den Enden des Kerns aus ferromagnetischem Material 302 je nach Richtung des Stromflusses ein austretendes magnetisches Feld mit definierter Polarität N, S.

Zur Steuerung des elektromagnetischen Pendelantriebs über den Elektromagneten 300 ist ein Antriebstreiber 400 als Teil der elektronischen Steuerungseinheit 410 vorgesehen, der die Umsetzung von Steuerungssignalen einer elektronischen Steuerungseinheit 410 in das für die Antriebserregung 300 erforderliche Signal mit einem definierten zeitabhängigen Kurvenverlauf der elektrischen Erregerspannung ue beziehungsweise des elektrischen Erregerstromes ie bereitstellt. Vorteilhaft umfasst die elektronische Steuerungseinheit 410 diskrete und/oder teilweise integrierte elektronische Bauelemente und/oder einen programmierbaren Mikrocontroller. Das Steuerungssignal der elektronischen Steuerungseinheit 410 wird entweder als digitales Signal oder als analoges Signal an den Antriebstreiber 400 bereitgestellt. Der Antriebstreiber 400 setzt dieses Signal in eine elektrisch unipolare Erregerspannung ue oder in eine bipolare Erregerspannung ue beziehungsweise in einen unipolaren Erregerstrom ie oder in eine bipolaren elektrischen Erregerstrom ie um. Eine elektrische Energiequelle 420 liefert dazu entweder eine unipolare Versorgungsspannung oder eine gesplittete, das heißt bipolare Versorgungsspannung, welche bezüglich eines zwischen der Gesamtspannung liegenden elektrischen Potentialpunktes positiv und negativ orientiert ist. Im Falle einer bipolaren Ansteuerung umfasst der Antriebstreiber 400 Mittel wie beispielsweise eine Brückenschaltung zum Wechseln der Polarität der Erregerspannung ue und des Erregerstromes ie. Vorzugsweise umfasst der Antriebstreiber 400 eine elektronische H-Brücke zur Erzeugung einer bipolaren Erregerspannung ue beziehungsweise eines bipolaren Erregerstromes ie.

Als Nachrichtenerfassungsmittel kann in der elektronischen Steuerungseinheit 410 optional ein Schnursensor 430 und/oder ein Beschleunigungssensor 431 vorgesehen sein. Ein Nachrichtenerfassungsmittel erfasst die für die Übertragung von Nachrichten als Signal optional vorgesehenen Veränderungen in der rückwärts gerichteten Kraftkomponente Fyr im Befestigungspunkt 230 oder von rückwärtsgerichteten zeitlichen Geschwindigkeitsänderungen dv/dt als negative Beschleunigungswerte des Angelköders 1, wandelt diese in ein elektrisches Signal um und liefert dieses an die elektronische Steuerungseinheit 410 zur weiteren Auswertung der zeitlichen Folge von Signalen und gegebenenfalls zur Dekodierung.

Nachrichtenerfassungsmittel können beispielsweise einen Beschleunigungssensor 431, beispielsweise einen integrierten MEMS-Sensor und/oder einen Schnursensor 430, umfassen.

Bei einem Beschleunigungssensor 431 erfolgt die Erfassung über einen Feder-Masse-Beschleunigungssensor im Angelköder 1. Derartige inertiale Sensoren werten die auf eine Masse wirkende Trägheitskraft aus und lassen sich sehr gut auf Siliziumbasis mit so genannten MEMS-Strukturen innerhalb eines integrierten elektronischen Bauteils kompakt und kostengünstig realisieren. Beim Überschreiten eines definierten Schwellwerts der so erfassten Beschleunigung dv/dt wird ein Signal erkannt, welches dem Dekoder zum Dekodieren bereitgestellt wird.

Der Schnursensor 430 umfasst entweder einen Schalter mit kraftspezifisch definiertem Schaltpunkt, der bei einer definierten mechanischen trägen Kraftkomponente im Befestigungspunkt Fyr definiert seinen elektrischen Schaltkontakt wechselt und dadurch bei einer definierten trägen Kraftkomponente im Befestigungspunkt Fyr ein elektrisches Signal erzeugt oder einen Sensor zur analogen Umwandlung der trägen Kraftkomponente im Befestigungspunkt Fyr in einen elektrischen Wert wandelt, wie beispielsweise dem Ergebnissignal eines Piezoelements, eines Dehnmesstreifens, eines optoelektronischen Sensors, eines induktiven Sensors, eines kapazitiven Sensors oder eines Drucksensors.

Die elektrische Versorgung der elektrischen Komponenten des elektromagnetischen Pendelantriebs mit Energie erfolgt über eine unipolare elektrische Energiequelle 420 oder über eine gesplittete, bipolare elektrische Energiequelle 420. Als elektrische Energiequelle 420 zur Versorgung der elektronischen Steuerungseinheit 410 der Steuerungsaktoren, des Antriebstreibers 400 und des Elektromagneten 300 können Batteriezellen oder wiederaufladbare elektrische Energiequellen wie beispielsweise Akkumulatoren oder Kondensatoren, beispielsweise so genannte "Supercaps", vorgesehen sein. Im Fall einer wiederaufladbaren elektrische Energiequelle 420 kann der Ladevorgang über eine externe elektrische Energiequelle wie beispielsweise über den Zigarettenanzünder einer Autobatterie oder von einem externen Akkumulator / "Powerpack" und über die drahtgebundene Schnittstelle 460 erfolgen.

Vorteilhaft ist zwischen der elektrischen Energiequelle 420 und der elektronischen Steuerungseinheit 410 und dem Elektromagneten 300 ein Gleichspannungswandler 421 angeordnet, der die Spannung der elektrischen Energiequelle 420 auf eine höhere Spannung zur Versorgung der elektrischen Komponenten des elektromagnetischen Pendelantriebs anpasst. Vorzugsweise ist der Spannungswandler als induktiver Hochsetzsteller, beispielsweise in Form eines sogenannten Boost-Converters oder Step-Up-Converters, ausgeführt. Dabei wird ein niedriger Eingangsspannungsbereich von 0,8 V bis 3,8 V auf eine höhere Ausgansspannung von 2,0 V bis 18 V hochgesetzt.

Der Vorteil dieser Anordnung besteht darin, dass als Energieversorgung einzelne oder mehrere einfache beispielsweise Alkali/Mangan-Zellen oder beispielsweise Lithium-Zellen, welche in verschiedenen Formaten, beispielsweise im AAA- oder im AA- Format oder als Knopfzelle in unterschiedlichen Größen kostengünstig und weit verbreitet mit hoher Ladungskapazität verfügbar sind, um zum Betrieb des Antriebs und der elektronischen Steuerungseinheit eingesetzt werden können. Die Zellenspannung einer einzelnen Alkaline-Zelle beträgt 1,5 V. Der praktisch verwertbare Spannungsbereich von Alkali/Mangan-Zellen oder von Lithium-Eisensulfid-Zellen, liegt zwischen 1,2 V und 1,7 V. Der praktisch verwertbare Spannungsbereich von anderen Lithium-Zellen reicht von 2,0 V bis 3,8 V.

Ferner besteht der Vorteil dieser Anordnung darin, dass als Energieversorgung einzelne oder mehrere einfache wiederaufladbare Akkumulator-Zellen, beispielsweise in NiCd- oder NiMh- oder Lithium-Ionen- oder NiZk-Technologie der Folge als Akkumulator Zellen bezeichnet, welche in verschiedenen Formaten, beispielsweise im AAA- oder im AA-Format oder als Knopfzelle in unterschiedlichen Größen kostengünstig und verbreitet mit hoher Ladungskapazität verfügbar sind, um zum Betrieb des Antriebs und der elektronischen Steuerungseinheit eingesetzt werden können. Die Zellenspannung einer einzelnen NiCd- oder NiMh-Zelle beträgt 1,2 V, der einer NiZk-Zelle beträgt 1,6 V. Der praktisch verwertbare Spannungsbereich dieser Zellen liegt zwischen 0,8 V und 1,7 V. Die Zellenspannung einer einzelnen Lithium-Ionen-Zelle beträgt 3,7 V. Der praktisch verwertbare Spannungsbereich dieser Zelle liegt zwischen 3,0 V und 3,8 V.

Daraus ergeben sich aus dem Bereich der Eingangsspannung von 0,8 V bis 3,8 V folgende besonders vorteilhafte Eingangsspannungsbereiche für den Gleichspannungswandler:
- 0,8V bis 1,7V
- 2,0V bis 2,8V
- 3,0V bis 3,8V

Es sind auch Reihenschaltungen einzelner Zellen möglich. Daraus können sich jeweils ganzzahlige Vielfache der genannten Zellenspannungen als Eingangsspannungsbereiche ergeben.

Um für die Ansteuerung des elektromagnetischen Antriebs auch unter Verwendung einer H-Brücke einen genügend hohen Spannungshub zur Verfügung zu haben, kommen bipolare integrierte Schaltungen mit einer unteren Betriebsspannung von 4,5 V (selektiert ab 3,5 V) oder integrierte CMOS-Schaltungen mit einer unteren Betriebsspannung von 2,5 V (selektiert ab 2,0 V) in Betracht. Der obere Grenzwert der Versorgungsspannung dieser Schaltungen liegt in der Regel bei 18 V. Daraus ergibt sich der Ausgangsspannungsbereich des Gleichspannungswandlers mit 2,0 V bis 18 V. Vorzugsweise liegt der Ausgangsspannungsbereich zwischen 4,0 V und 6 V und besonders bevorzugt zwischen 4,5 V und 5,5 V.

Zur Verlagerung des Gewichtsschwerpunktes 210 (vgl. Fig. 2) kann optional die Masse der elektrischen Energiequelle 420 und/oder der Masse eines Ballastkörpers (nicht dargestellt) über elektrische Steuerungsaktoren (nicht dargestellt) und/oder manuell über ein von außen bedienbares und nach innen in die Körperhülle 100 reichendes abgedichtetes manuelles Steuerungsmittel wie beispielsweise einen manuell bedienbaren Steuerungsaktor 450 in ihrer Position innerhalb der Körperhülle 100 des Angelköders 1 verändert werden. Ein manuell bedienbarer Steuerungsaktor 450 umfasst beispielsweise mechanische Einstellmittel wie eine Schraube, eine Klemme, einen Schieber, ein Ventil oder dergleichen oder elektrische Einstellmittel wie ein Potentiometer, einen Schalter, einen elektrischen oder magnetisch aktivierbaren Kontakt/Messpunkt oder dergleichen.

Als Schnittstelle 460 kann eine drahtgebundene Schnittstelle wie beispielsweise eine USB-Schnittstelle oder eine RS232-Schnittstelle oder eine sonstige proprietäre Schnittstelle am Angelköder 1 mit abdichtbaren Kontakten oder eine drahtlose Schnittstelle im Angelköder 1, wie beispielsweise eine Bluetooth-Schnittstelle oder eine WiFi-Schnittstelle, vorgesehen sein. Zur Programmierung der elektronischen Steuerungseinheit 410 kann von einem Angler 2 ein Computer wie beispielsweise ein stationärer Computer, ein tragbarer Computer, ein Tablet oder ein Smartphone verwendet werden. Vorteilhaft verfügt dieser Computer über eine weitere Schnittstelle zu einem entfernten Computer oder dem Internet, um sich von dort fertige Programme oder Updates zur Programmierung der elektronischen Steuerungseinheit 410 des Angelköders 1 herunterladen zu können.

Der selbstbewegbare Angelköder 1 umfasst wenigstens einen Fanghaken 110, um im Falle eines erfolgreichen Bisses eines zu fangenden Raubfisches diesen am Angelköder 1 festzuhaken. Vorteilhafter Weise ist der Fanghaken 110 über eine Fanghakenbewehrung 111 mit der Befestigungseinrichtung 130 widerstandsfähig verbunden, um auch bei heftigem Drill zwischen dem zu fangenden Raubfisch und dem Angler 2 über die Verbindungsschnur 10 zum Angler 2 eine sichere mechanische Verbindung zu gewährleisten und den Fang durch den Angler 2 einholen zu können.

Eine optional angeordnete künstliche Schwimmblase 440 dient zur definierten Positionierung des Formschwerpunktes 200 (vgl. Fig. 2) in der Körperhülle 100 des Angelköders 1. Zur Verlagerung des Formschwerpunktes 200 kann optional das Volumen der künstlichen Schwimmblase 440 und/oder die Position des Formschwerpunktes 200 innerhalb der Körperhülle 100 über elektrische Steuerungsaktoren (nicht dargestellt) oder manuell über einen manuell bedienbaren Steuerungsaktor 450 verändert werden. Durch Verlagerung des Formschwerpunktes 200 relativ zum Gewichtsschwerpunkt 210 verändert sich die Lage der Lotachse 250 relativ zur Bewegungsrichtung y und damit die statische Lage (Trimmung) beziehungsweise der Winkel der Lotachse 250 des Angelköders 1 beispielsweise gegenüber der vertikalen z-Richtung im umgebenden Wasser 3. Optional kann alternativ oder zusätzlich eine Schwimmpose den Auftrieb erzeugen oder ergänzen. Im Fall einer dynamischen Bewegung v des Angelköders 1 relativ zum umgebenden Wasser 3 kann zusammen mit einem oder mehreren Strömungskörpern, beispielsweise einem oder mehreren Höhenrudern 121, 122 (siehe Fig. 3 und Fig. 4), bestimmt werden, in welche vertikale z-Richtung der selbstbewegbare künstliche Köderfisch 1 schwimmt.

Optional kann an der elektronischen Steuerungseinheit 410 ein Drucksensor (nicht dargestellt) zur Erfassung des statischen Wasserdrucks der aktuellen Tauchtiefe angeordnet sein, wobei in Verbindung mit der elektronischen Steuerungseinheit 410 die Mittel zur Steuerung der Tauchtiefe so steuerbar sind, dass eine bestimmte, aufgrund der Programmierung oder in Reaktion auf eine dekodierte Nachricht vom Angler hin, vorgegebene Tauchtiefe gehalten wird.

Optional können an der elektronischen Steuerungseinheit 410 Mittel (nicht dargestellt) zur Abgabe von akustischen Lockmitteln und/oder optischen Lockmitteln und/oder geschmacklichen Lockmitteln zum Anlocken von Beutefischen vorgesehen sein, welche optional durch die Steuerungseinheit 410 aktivierbar und deaktivierbar sind. Mittel zur Abgabe von akustischen Lockmitteln können einen elektromechanischen Vibrator umfassen, der Schwingungen, insbesondere einen kranken Köderfisch simulierend an das umgebende Wasser, abgibt. Mittel zur Abgabe von optischen Lockmitteln können beispielsweise eine blinkende Leuchtdiode oder eine ein Dauersignal abgebende Leuchtdiode umfassen, die anlockende optische Signale an das umgebende Wasser abgibt. Mittel zur Abgabe von geschmacklichen Lockmitteln können einen manuell befüllbaren und per Steuersignal entleerbaren Lockmitteltank oder einen dauerhaft entleerbaren Lockmitteltank im selbstbewegbaren künstlichen Köderfisch umfassen, der eine geschmackliche Lockmittelsubstanz, beispielsweise eine Körperflüssigkeit eines kranken oder toten Köders simulierend oder eine aromatische Substanz, an das umgebende Wasser abgibt.

Vorteilhafter Weise ist im selbstbewegbaren Angelköder 1 optional wenigstens ein Mittel zur Ortung (nicht dargestellt) vorgesehen. Als Mittel zur Ortung sind insbesondere GPS-Ortungsmittel und/oder akustische Ortungsmittel, beispielsweise Ultraschallgeber, und/oder optische Ortungsmittel, beispielsweise eine blinkende Leuchtdiode, vorgesehen. Mittel zur Ortung dienen bevorzugt dem Wiederauffinden eines eventuell verloren gegangenem Angelköders 1.

Fig. 5 stellt eine prinzipielle Anordnung von Antriebsmitteln im Angelköder in der Darstellung der Schnittebene A-B einer Draufsicht dar. Der Elektromagnet 300 innerhalb des Köderkörpers 102, 102' bewirkt dabei aufgrund einer elektromagnetischen Kraftwirkung eine oszillierende Bewegung des Dauermagneten quer zur Längsachse des Köderkörpers Y. Die Bewegung wird über den Pendelhebel 312 und den Antriebslagerpunkt 311 auf den Übergangsbereich der Schwanzflosse 101 und auf die Schwanzflosse 103 übertragen. Der Pendelhebel 312, der Übergangsbereich der Schwanzflosse 101 und die Schwanzflosse 103 werden dadurch direkt in oszillierende Bewegung quer zur Längsachse des Köderkörpers Y versetzt. Daher entsteht eine natürliche Bewegung des Angelköders 1, ohne dass es dabei zu unnatürlichen mechanischen Schwingungen aufgrund von Berührung, Drehbewegung, Kommutierung, Lagerung eines Antriebsmotors oder von einem Getriebe, beziehungsweise von einer Exzentermechanik oder dergleichen käme. Der Antrieb ist weitgehend geräuschlos und emittiert bei der Bewegung der Schwanzflosse 103 im umgebenden Wasser 3 die gleichen Schwingungen wie ein lebender Fisch in seinen natürlichen Bewegungssituationen vom Stehen im Wasser 3 bis hin zur Fluchtbewegung oder bei Bewegungen im verletzten oder kranken Zustand.

Fig 6a zeigt einen Querschnitt durch die Körperhülle und den Köderkörper des Angelköders in der Schnittebene E-F gemäß einer ersten alternativen Ausführungsform. Die Schnittebene E-F zeigt einen Schnitt durch eine zylindrisch geformte Erregerspule 301 und einen ferromagnetischen Kern 302, welche innerhalb eines runden Rohres des Köderkörpers 102 zentral angeordnet sind.

Fig. 6b zeigt einen Längsschnitt durch die Körperhülle und den Köderkörper des Angelköders gemäß einer ersten alternativen Ausführungsform. Die Körperhülle 100 des Angelköders 1 nimmt den Köderkörper 102 entlang der Längsachse des Köderkörpers Y in sich auf. Der rohrförmige Köderkörper 102 ist an seinem Kopfende durch die vordere Außenwand des Köderkörpers 105 und an seinem Schwanzende durch die hintere Außenwand des Köderkörpers 104 wasserdicht abgeschlossen. Vorteilhaft kann der Köderkörper 102 aus der Körperhülle 100 entnommen oder innerhalb der Körperhülle 100 geöffnet werden, beispielsweise durch eine Möglichkeit die Körperhülle 100 an ihrem vorderen Ende aufzutrennen. Durch Entnahme der vorderen Außenwand des Köderkörpers 105 kann der Köderkörper 102 geöffnet werden, um die elektrische Energiequelle 420 auszutauschen oder um Zugang zu einer innerhalb des Köderkörpers 102 angeordneten Schnittstelle 460' der elektronischen Steuerungseinheit 410 zu erlangen, über welche die elektronische Steuerungseinheit 410 steuerbar und/oder programmierbar ist. Ein Mittel zur Steuerung besteht beispielsweise in einem manuell bedienbaren Steuerungselement 422, welches entweder bei geöffnetem Köderkörper 102 für den Benutzer zugänglich ist oder wasserdicht verschlossen von außerhalb des Köderkörpers 102 bedienbar ist. Das manuell bedienbare Steuerungselement 422 umfasst beispielsweise einen Ein/Aus-Schalter mit dem die Versorgung der elektrischen Energiequelle 420 zu den elektrischen Komponenten des elektromagnetischen Pendelantriebs hergestellt oder unterbrochen werden kann. Das manuell bedienbare Steuerungselement 422 kann ferner beispielsweise einen Stufenschalter oder einen Einstellregler oder andere Bedienelemente zur manuellen Veränderung der Steuerungsparameter wie beispielsweise der Frequenz, der Pausenzeiten etc. der Steuerung des elektromechanischen Pendelantriebs ermöglichen. Der Köderkörper 102 nimmt die elektronische Steuerungseinheit 410 mit ihren elektrischen Komponenten, die elektrische Energiequelle 420 und die Erregerspule 301 mit ihrem Kern aus ferromagnetischen Material 302 in sich auf. Das hintere Ende des Kerns aus ferromagnetischem Material 302 ist in diesem Ausführungsbeispiel wasserdicht durch die hintere Außenwand des Köderkörpers 104 geführt und bildet das hintere Ende des Elektromagneten 300. Alternativ kann das hintere Ende des Kerns aus ferromagnetischem Material 302 auch innerhalb des Köderkörpers 102 angeordnet sein.

Der Dauermagnet 313 ist in diesem Ausführungsbeispiel außerhalb des Köderkörpers 102 im Abstand h vom Elektromagneten 300, umfassend einen Kern aus ferromagnetischem Material 302 der Erregerspule 301, angeordnet. In diesem Fall ist der Pendelhebel 312 beweglich außerhalb des Köderkörpers 102 gelagert, und ist berührungslos vom Magnetfeld der Erregerspule 301 hin und her bewegbar. Der Pendelhebel geht in die Schwanzflosse (nicht dargestellt) über, die er in mechanisch oszillierende Bewegung versetzt. Der Dauermagnet 313 ist in diesem Beispiel durch zwei gestapelte würfelförmige Dauermagneten zusammengesetzt, die eine gemeinsame Polachse P2 quer zur Längsachse des Köderkörpers Y bilden. Der Dauermagnet 313 ist an dem außerhalb des Köderkörpers 102 angeordneten Pendelhebel 312 des dauermagnetischen Pendelaktors angebracht. Alternativ kann der Dauermagnet 313 im Bereich der Schwanzflosse in die Körperhülle 100 des künstlichen Angelköders 1 oder im Bereich der Schwanzflosse des toten Angelköders lintegrierbar sein.

Das Pendellager 311 befindet sich in diesen Ausführungsbeispielen außerhalb des Köderkörpers 102 in der Körperhülle 100 des künstlichen Angelköders 1 oder des toten natürlichen Angelköders 1. Das Pendellager 314 des künstlichen Angelköders 1 umfasst vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A.

Fig. 6c zeigt als Detail des Schnitts G-H ausschnittsweise den Elektromagneten und die Komponenten des Pendelaktors gemäß einer ersten alternativen Ausführungsform. Dargestellt ist in der Draufsicht der Elektromagnet 300, umfassend die Erregerspule 301 und den Kern aus ferromagnetischem Material 302.

Die erste Polachse P1 des Elektromagneten verläuft parallel zur Längsachse des Köderkörpers Y. Das Pendellager 311 ist im Abstand L vom Elektromagneten 300 angeordnet. Der Pendelaktor, umfassend den Dauermagneten 313 und den Pendelhebel 312, ist in seiner Nulllage dargestellt, in der kein Erregerstrom ie durch die Erregerspule 301 fließt. Der Pendelhebel 312 wird durch das elastische Rückstellelement 314 in die Nulllage versetzt. Die Polachse P2 ist quer im rechten Winkel zur Längsachse des Köderkörpers Y ausgerichtet. Der Dauermagnet 313 weist in der Nulllage den Luftspalt h0 zum Kern aus ferromagnetischem Material 302 des Dauermagneten 300 auf. Die Kanten eines aus zwei würfelförmigen Dauermagneten gebildeten Quaders verlaufen bei einer Drehung des Pendelhebels 312 um das Pendellager 311 entlang der unterbrochenen Linie in einem Abstand Rp vom Pendellager. Dabei weisen die Kanten einen minimalen Luftspalt he auf.

Fig 6a' zeigt einen Querschnitt durch die Körperhülle und den Köderkörper des Angelköders in der Schnittebene E-F eines Ausführungsbeispiels gemäß einer zweiten alternativen Ausführungsform, Die Schnittebene E-F zeigt einen Schnitt durch eine zylindrisch geformte Erregerspule 301 und einen ferromagnetischen Kern 302 und einem Polschuh oder Joch aus ferromagnetischem Material 303, welche innerhalb eines runden Rohres des Köderkörpers 102 angeordnet sind.

Fig. 6b' zeigt einen Längsschnitt durch die Körperhülle und den Köderkörper des Angelköders eines Ausführungsbeispiels gemäß einer zweiten alternativen Ausführungsform. Die Körperhülle 100 des Angelköders 1 nimmt den Köderkörper 102 entlang der Längsachse des Köderkörpers Y in sich auf. Der rohrförmige Köderkörper 102 ist an seinem Kopfende durch die vordere Außenwand des Köderkörpers 105 und an seinem Schwanzende durch die hintere Außenwand des Köderkörpers 104 wasserdicht abgeschlossen. Vorteilhaft kann der Köderkörper 102 aus der Körperhülle 100 entnommen oder innerhalb der Körperhülle 100 geöffnet werden, beispielsweise durch eine Möglichkeit die Körperhülle 100 an ihrem vorderen Ende aufzutrennen. Durch Entnahme der vorderen Außenwand des Köderkörpers 105 kann der Köderkörper 102 geöffnet werden, um die elektrische Energiequelle 420 auszutauschen oder um Zugang zu einer innerhalb des Köderkörpers 102 angeordneten Schnittstelle 460' der elektronischen Steuerungseinheit 410 zu erlangen, über welche die elektronische Steuerungseinheit 410 steuerbar und/oder programmierbar ist oder die elektrische Energiequelle 410 ladbar ist. Ein Mittel zur Steuerung besteht beispielsweise in einem manuell bedienbaren Steuerungselement 422, welches entweder bei geöffnetem Köderkörper 102 für den Benutzer zugänglich ist oder wasserdicht verschlossen von außerhalb des Köderkörpers 102 bedienbar ist. Das manuell bedienbare Steuerungselement 422 umfasst beispielsweise einen Ein/Aus-Schalter mit dem die Versorgung der elektrischen Energiequelle 420 zu den elektrischen Komponenten des elektromagnetischen Pendelantriebs hergestellt oder unterbrochen werden kann. Das manuell bedienbare Steuerungselement 422 kann ferner beispielsweise einen Stufenschalter oder einen Einstellregler oder andere Bedienelemente zur manuellen Veränderung der Steuerungsparameter wie beispielsweise der Frequenz, der Pausenzeiten etc. der Steuerung des elektromechanischen Pendelantriebs ermöglichen. Der Köderkörper 102 nimmt die elektronische Steuerungseinheit 410 mit ihren elektrischen Komponenten, die elektrische Energiequelle 420 und die Erregerspule 301 mit ihrem Kern aus ferromagnetischen Material 302 und den Polschuh oder das Joch aus ferromagnetischen Material 303 in sich auf. Das hintere Ende des Kerns aus ferromagnetischem Material 302 ist in diesem Ausführungsbeispiel wasserdicht durch die hintere Außenwand des Köderkörpers 104 geführt und bildet das hintere Ende des Elektromagneten 300. Alternativ kann das hintere Ende des Kerns aus ferromagnetischem Material 302 wasserdicht innerhalb des Köderkörpers 104 ausgeführt sein und bildet das hintere Ende des Elektromagneten 300.

Der Dauermagnet 313 ist in diesem Ausführungsbeispiel außerhalb des Köderkörpers 102 im Abstand h vom Elektromagneten 300, umfassend einen Kern aus ferromagnetischem Material 302 der Erregerspule 301, angeordnet. In diesem Fall ist der Pendelhebel 312 beweglich außerhalb des Köderkörpers 102 gelagert, und ist berührungslos vom Magnetfeld der Erregerspule 301 hin und her bewegbar. Der Pendelhebel geht in die Schwanzflosse (nicht dargestellt) über, die er in mechanisch oszillierende Bewegung versetzt. Der Dauermagnet 313 ist in diesem Beispiel durch zwei gestapelte würfelförmige Dauermagneten zusammengesetzt, die eine gemeinsame Polachse P2 quer zur Längsachse des Köderkörpers Y bilden. Der Dauermagnet 313 ist an dem außerhalb des Köderkörpers 102 angeordneten Pendelhebel 312 des dauermagnetischen Pendelaktors angebracht. Alternativ kann der Dauermagnet 313 im Bereich der Schwanzflosse in die Körperhülle 100 des künstlichen Angelköders 1 oder im Bereich der Schwanzflosse des toten Angelköders 1integrierbar sein.

Das Pendellager 311 befindet sich in diesen Ausführungsbeispielen außerhalb des Köderkörpers 102 in der Körperhülle 100 des künstlichen Angelköders 1 oder des toten natürlichen Angelköders 1.

Das Pendellager 314 des künstlichen Angelköders 1 umfasst vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A.

Fig. 6c' zeigt als Detail des Schnitts G-H ausschnittsweise den Elektromagneten und die Komponenten des Pendelaktors eines Ausführungsbeispiels gemäß einer zweiten alternativen Ausführungsform. Dargestellt ist in der Draufsicht der Elektromagnet 300, umfassend die Erregerspule 301 und den Kern aus ferromagnetischem Material 302.

Die erste Polachse P1 ist über wenigstens einen Polschuh oder ein Joch aus ferromagnetischen Material 303 schwanzseitig nach hinten geführt und bildet eine weitere erste Polachse P1' des Polschuhes oder des Jochs aus ferromagnetischem Material 303 aus, welche zur Längsachse des Köderkörpers Y bevorzugt einen Winkel im Bereich von 0° +/-30°, vorzugsweise von 0° +/- 10°, insbesondere im Bereich von 0° +/5° auf und verläuft deshalb im Wesentlichen parallel zur Längsachse des Köderkörpers Y.

Die weitere erste Polachse P1' verläuft parallel zur Längsachse des Köderkörpers Y. Das Pendellager 311 ist im Abstand L vom Elektromagneten 300 angeordnet. Der Pendelaktor, umfassend den Dauermagneten 313 und den Pendelhebel 312, ist in einer Nulllage dargestellt, in der kein Erregerstrom ie durch die Erregerspule 301 fließt. Der Pendelhebel 312 wird durch das elastische Rückstellelement 314 in die Nulllage versetzt. Die Polachse P2 ist quer im rechten Winkel zur Längsachse des Köderkörpers Y ausgerichtet. Der Dauermagnet 313 weist in der Nulllage den Luftspalt h0 zum Kern aus ferromagnetischem Material 302 des Dauermagneten 300 auf. Die Kanten eines aus zwei würfelförmigen Dauermagneten gebildeten Quaders verlaufen bei einer Drehung des Pendelhebels 312 um das Pendellager 311 entlang der unterbrochenen Linie in einem Abstand Rp vom Pendellager. Dabei weisen die Kanten einen minimalen Luftspalt he auf.

Fig. 7a zeigt schematisch den Elektromagneten und die Komponenten des Pendelaktors gemäß einem Ausführungsbeispiel der ersten Ausführungsform in einer Nulllage. Dargestellt ist in der Draufsicht der Elektromagnet 300, umfassend die Erregerspule 301 und den Kern aus ferromagnetischem Material 302.

Die Polachse P1 verläuft parallel zur Längsachse des Köderkörpers Y. Das Pendellager 311 ist im Abstand L vom Elektromagneten 300 angeordnet. Der Pendelaktor, umfassend den Dauermagneten 313 und den Pendelhebel 312, ist in einer Nulllage dargestellt, in der kein Erregerstrom ie durch die Erregerspule 301 fließt. Die Verbindung der Energiequelle 420 zur Erregerspule 301 ist durch ein manuell bedienbare Steuerungselement 422 unterbrochen. Der Pendelhebel 312 wird in diesem Ausführungsbeispiel durch ein optionales elastisches Rückstellelement 314 in die Nulllage versetzt. Die Rückstellkraft Fr ist in dieser Position 0. Die Polachse P2 ist quer im rechten Winkel zur Längsachse des Köderkörpers Y ausgerichtet. Der Dauermagnet 313 weist in der Nulllage den Luftspalt h0 zum Kern aus ferromagnetischem Material 302 des Dauermagneten 300 auf. Das Rückstellelement 314 kann optional entfallen, weil die Rückstellkraft durch die Umsteuerung bei innerhalb einer Auslenkungsperiode kontinuierlicher oder ausreichend langer umsteuernder Erregung des Elektromagneten 300 und/oder durch eine Krafteinwirkung des an der Flosse angreifenden vorbeifließenden umgebenden Wassers 3 erfolgt.

In der Nulllage befindet sich die magnetische Mitte des Dauermagneten 313 im Abstand h0 vom ferromagnetischen Kern 302 der Erregerspule 301 und ist ausgerichtet auf die Polachse P1. In dieser Position übt der Dauermagnet 313 eine minimale Kraft Fm0 auf einen im Abstand h0 von der magnetischen Mitte, das ist die magnetisch neutrale Zone des Dauermagneten seitlich des Dauermagneten beabstandeten Kerns aus ferromagnetischem Material 302 der elektromagnetischen Erregerspule 301 aus. Der Pendelantrieb befindet sich in einer labilen bis leicht stabilen Gleichgewichtsposition und kann bereits mit einem schwachen positiven elektromagnetischen Impuls in die positive Richtung sm+ oder mit einem schwachen negativen elektromagnetischen Impuls in die negative Richtung sm- abgelenkt werden. Die Auslenkung sm des Pendelhebels 312 ist in dieser Position 0.

Fig. 7b zeigt schematisch den Elektromagneten und die Komponenten des Pendelaktors gemäß einem Ausführungsbeispiel der ersten Ausführungsform in teilweise positiv ausgelenktem Zustand.

Der Stromkreis zwischen der Energiequelle 420 und der Erregerspule 301 ist geschlossen. Die Ansteuerung des Elektromagneten 300 erfolgt mit wechselnder Polarität (vgl. Fig. 7b versus Fig. 7c), umfassend eine elektrisch bipolare Wechselspannung als Ansteuerspannung ue an der Erregerspule 301 und einen bipolar fließenden Wechselstrom als Erregerstrom ie durch die Erregerspule 301 des Elektromagneten 300.

An der Erregerspule 301 liegt die Erregerspannung ue in positiver Richtung an und es fließt ein positiver Erregerstrom ie durch die Erregerspule 301. Dadurch bildet sich entlang der ersten Polachse P1 am hinteren Ende des Kerns aus ferromagnetischem Material 302 ein Südpol S und am vorderen Ende des Kerns aus ferromagnetischem Material 302 ein Nordpol N aus. Die Polaritäten sind beispielhaft gewählt und können auch umgekehrte Polarität aufweisen. In der dargestellten Position des Pendelhebels 312 hat dieser die Nulllage in positiver sm-Richtung verlassen und hat eine Auslenkung sm, jedoch noch nicht seine positive Endposition smE+ erreicht.

Der wirksame Luftspalt hi zwischen dem Elektromagneten 300 und dem Dauermagneten 313 verringert sich nach dem Verlassen der Nulllage dabei dynamisch in Abhängigkeit von der Auslenkung sm des Pendelhebels 312, wenn der Pendelantrieb seiner jeweiligen Endposition smE zustrebt. Die magnetische Kraftwirkung fm des Dauermagneten 313 konzentriert sich auf die Kante des Dauermagneten 313, welche den geringsten Luftspalt hi ausbildet. Mit sinkendem Luftspalt hi nimmt die magnetische Kraftkomponente zu und nimmt in der Endposition smE ein relatives Minimum ein und die magnetische Kraftwirkung Fm erreicht ein relatives Maximum. Bis zum Erreichen der Endposition bildet die magnetische Kraftkomponente eine senkrecht auf den Pendelhebel wirkende Kraftkomponente Fmd aus. Dadurch entsteht das auf den Pendelhebel im Abstand Rp wirkende magnetische Bewegungsmoment Mm.

Beim Überschreiten der jeweiligen Endposition smE nimmt der wirksame Luftspalt h wieder zu, die magnetische Kraftwirkung Fm auf den dauermagnetischen Pendelaktor nimmt ab und die Richtung des Kraftvektors Fmd kehrt sich um, wodurch das Pendel wieder zurück in die Endposition smE gelenkt wird, in welcher die magnetische Kraftwirkung Fm ein relatives Maximum aufweist. Der Abstand h und die magnetische Kraftwirkung Fm sind deshalb relativ, weil der Pendelradius und der Abstand des Pendeldrehpunkts vom Elektromagneten, beziehungsweise vom Kern des Elektromagneten in unterschiedlichen Ausführungsbeispielen unterschiedlich gewählt werden kann.

Mit zunehmender Auslenkung sm steigt auch die Rückstellkraft Fr des elastischen Rückstellelements 314 und erzeugt ein im Vergleich zum magnetischen Bewegungsmoment Mm geringes Gegenmoment.

Fig. 7c zeigt schematisch den Elektromagneten und die Komponenten des Pendelaktors gemäß einem Ausführungsbeispiel der ersten Ausführungsform in seiner positiven Endposition der Auslenkung.

Einmal abgelenkt beginnt das Magnetfeld des Dauermagneten 313 seine Kraftwirkung Fm auf das Magnetfeld des Kerns aus ferromagnetischem Material 302 der elektromagnetischen Erregerspule 301 zu entfalten und bewirkt eine zunehmende Ablenkung des Pendelantriebes, bis dieser eine positive Endposition smE+ oder eine negative Endposition smE- erreicht, bei der der Luftspalt hE ein Minimum erreicht und damit die Kraftwirkung Fm des Magnetfeldes des Dauermagneten 313 auf das Magnetfeld des Kerns aus ferromagnetischem Material 302 der elektromagnetischen Erregerspule 301 ein Maximum erreicht. Die Endposition des Pendels, beispielsweise die positive Endposition smE+ wird dabei je nach Dämpfungswirkung eines optionalen elastischen Rückstellelements 314 des Pendellagers 311 und/oder der auf die Schwanzflosse wirkenden Strömungskräfte beim Einsatz im Wasser 3 (vgl. Fig. 1) entweder gedämpft einer e-Funktion folgend, aperiodisch einschwingend oder nach einem gedämpften Einschwingvorgang erreicht.

Dabei wird zusätzlich zur Rückstellkraft der Schwanzflosse im stehenden oder bewegten Wasser 3 eine geschwindigkeitsabhängige, von der Relativbewegung der Schwanzflosse zum umgebenden Wasser resultierende Dämpfung und/oder durch das elastische Rückstellelement eine Rückstellkraft Fr erzeugt, welche den Pendelausschlag dämpft und/oder das Pendel bei ausstehender Erregung in seine Nulllage zurückstellt und so den Umpolungsvorgang unterstützt.

Fig. 7d zeigt schematisch den Elektromagneten und die Komponenten des Pendelaktors gemäß einem Ausführungsbeispiel der ersten Ausführungsform in seiner negativen Endposition der Auslenkung.

Aus der in Fig. 7c dargestellten Position wird der Pendelantrieb umgesteuert, indem durch Umpolen der an der Erregerspule 301 des Elektromagneten 300 angelegten Spannung ue durch die Erregerspule 301 des Elektromagneten 300 ein entgegengesetzter Strom ie fließt und dadurch die Polarität des Elektromagneten 300 umgedreht wird. Das damit erzeugte entgegengesetzt polarisierte magnetische Kraftfeld des Elektromagneten 300 wirkt dem magnetischen Kraftfeld des Dauermagneten 313 entgegen und unterstützt die durch das elastische Rückstellelement 314 verursachte Rückstellkraft Fr eine Beschleunigung des Pendelhebels 312 in Richtung der entgegengesetzten Endposition. Dabei wird der Pendelhebel 312 über die Nulllage hinaus vom Kraftfeld des Elektromagneten 300 und des Dauermagneten in entgegengesetzter Richtung abgelenkt. Dabei beginnt das Magnetfeld Fm des Dauermagneten 313 erneut seine Kraftwirkung auf das Magnetfeld des Kerns aus ferromagnetischem Material 302 zu entfalten und bewirkt eine zunehmende Ablenkung des Pendelhebels 312, bis dieser eine negative Endposition smE- erreicht, bei der der Luftspalt hE ein Minimum erreicht und damit die Kraftwirkung Fm des Magnetfeldes des Dauermagneten auf das Magnetfeld des Kerns aus ferromagnetischem Material 302 ein Maximum erreicht. Die Endposition des Pendelhebels 312 wird dabei je nach Dämpfungswirkung des elastischen Rückstellelements 314 und/oder von den auf die Schwanzflosse wirkenden Strömungskräften beim Einsatz im Wasser 3 entweder gedämpft einer e-Funktion folgend, aperiodisch einschwingend oder nach einem gedämpften Einschwingvorgang erreicht.

Fig 8a zeigt den Verlauf des dynamischen Luftspalts h in Abhängigkeit von der Auslenkung sm. In den vorgenannten Ausführungsbeispielen weist der Luftspalt h in den Endpositionen des Pendelhebels 312 smE ein Minimum und in der Nulllage des Pendelhebels 312 sm0 ein Maximum auf.

Der Luftspalt h ist der kürzeste Abstand zwischen dem Dauermagneten 313 des dauermagnetischen Pendelaktors und dem Pol des Elektromagneten 300 des elektromagnetischen Pendelantriebs. Ein dynamischer Luftspalt h ist der bei einer Bewegung des dauermagnetischen Pendelaktors in Abhängigkeit von der Auslenkung des dauermagnetischen Pendelaktors aus seiner Ruhelage gebildete Luftspalt h. Der Luftspalt h variiert vorteilhaft im Bereich zwischen 20 mm und 0,05 mm, insbesondere zwischen 5 mm und 0,05 mm und bevorzugt zwischen 2 mm und 0, 5 mm.

Fig 8b zeigt den Verlauf der magnetischen Kraftwirkung Fm in Abhängigkeit von der Auslenkung sm. Die magnetische Kraftwirkung Fm hat beim größten Luftspalt h0 in Nulllage des Pendelhebels 312 ein Minimum und nimmt beim kleinsten Luftspalt in den jeweiligen Endpositionen des Pendelhebels 312 smE ein Maximum an. Je kleiner der Luftspalt h in Synergie zum Pendelradius, dem elastischen und dynamischen Rückstellmoment, der Windungszahl N und der Höhe des Erregerstromes ie gewählt werden kann, desto größer ist das dabei erreichbare Bewegungsmoment des dauermagnetischen Pendelaktors und damit das Bewegungsmoment des Angelköderantriebs.

Fig 9a stellt den Verlauf des magnetischen Bewegungsmoments Mm in Abhängigkeit von der Auslenkung sm des Pendelhebels dar. Mit steigender Auslenkung sm des Pendelhebels in positiver oder in negativer Richtung nimmt der Luftspalt ab (vgl. Fig. 8a). Mit sinkendem Luftspalt hi nimmt die magnetische Kraftkomponente Fm ~ 1/h hyperbolisch zu und nimmt in der Endposition smE ein relatives Maximum ein. Bis zum Erreichen der Endposition bildet die magnetische Kraftkomponente eine senkrecht auf den Pendelhebel wirkende Kraftkomponente Fmd aus. Dadurch entsteht das auf den Pendelhebel im Abstand Rp wirkende magnetische Bewegungsmoment Mm. Das magnetische Bewegungsmoment erreicht in der jeweiligen Endposition ein relatives Maximum MmE. Beim Überschreiten der jeweiligen Endposition smE nimmt der wirksame Luftspalt h wieder zu, die magnetische Kraftwirkung Fm auf den Pendelhebel 312 nimmt ab und die Richtung des Kraftvektors Fmd kehrt sich um, wodurch das Pendel wieder zurück in die Endposition smE gelenkt wird, in welcher die magnetische Kraftwirkung Fm ein relatives Maximum aufweist. Der Zusammenhang von Mm in Abhängigkeit von der Auslenkung sm weist jeweils in den Endpositionen smE des Pendelhebels 312 eine Polstelle auf, welche den Pendelhebel 312 in den Endpositionen smE bis zur Umsteuerung durch den Elektromagneten in den Endpunkten smE stabilisiert. Daraus resultiert eine maximale Kraftwirkung Fm und es kann eine anschlagslose und deshalb geräuschfreie Begrenzung der Auslenkung sm des Pendelhebels 312 erfolgen, weil die Anziehung zwischen dem Dauermagneten 313 und dem Polschuh oder dem Joch aus ferromagnetischem Material oder dem Kern aus ferromagnetischem Material 302 in den Endpositionen ein stabilisierendes kritisches Maximum MmE erreicht. Zur Begrenzung des Pendelausschlags kann optional ein elastischer Anschlag vorgesehen werden.

Fig 9b stellt den Verlauf des magnetischen Bewegungsmoments Mm in Abhängigkeit von der Auslenkung sm des Pendelhebels und den für eine Umsteuerung erforderlichen Ansteuerbereichen dar. Der Pendelhebel 312 des Pendelantriebs wird umgesteuert (vgl. Fig. 7d), indem durch Umpolen der an der Erregerspule 301 des Elektromagneten 300 angelegten Spannung ue durch die Erregerspule 301 des Elektromagneten 300 ein entgegengesetzter Strom ie fließt und dadurch die Polarität des Elektromagneten 300 umgedreht wird. Das damit erzeugte entgegengesetzt polarisierte magnetische Kraftfeld des Elektromagneten 300 wirkt dem magnetischen Kraftfeld des Dauermagneten 313 entgegen und unterstützt die durch das elastische Rückstellelement 314 verursachte Rückstellkraft Fr eine Beschleunigung des Pendelhebels 312 in Richtung der entgegengesetzten Endposition.

Das dafür aufzuwendende rückstellende magnetische Bewegungsmoment Mm muss die durch den Dauermagneten 313 bei der Anziehung zum Kern aus ferromagnetischem Material 302 und/oder zum Polschuh oder dem Joch aus ferromagnetischem Material 303 verursachte Kraftwirkung und das daraus resultierende Bewegungsmoment Mm überwinden, um die Umsteuerung des Pendelhebels 312 einzuleiten. Dabei wird das erforderliche Rückstellmoment MmR unterstützt durch ein vom elastischen Rückstellmittel verursachtes dauerelastisches Rückstellmoment und von einem Rückstellmoment, welches durch das umgebende Wasser 3 auf die Schwanzflosse wirkt. Das magnetische rückstellende Bewegungsmoment MmR kann um den Betrag dieser zusätzlichen Rückstellmomente reduziert werden. Ferner ist bei der Umsteuerung vorteilhaft nur so lange eine umsteuernde Erregung des Elektromagneten 300 erforderlich, bis der Pendelhebel den Bereich erreicht, in welchem das dauerelastische Rückstellmoment alleine ausreicht, das restliche anziehende Moment des Dauermagneten 313 zu überwinden. Durch die beschleunigte Masse des Dauermagneten 313 wird vorteilhaft eine ausreichende Bewegungsenergie auf den Pendelhebel 312 ausgeübt, dass dieser über die Nulllage hinaus in Richtung der entgegengesetzten Endposition weiterbewegt wird, wo er vom erneut einsetzenden gegenpolig erregten Elektromagneten aufgenommen und stabilisiert wird.

Dabei wird der Pendelhebel 312 über die Nulllage hinaus vom Kraftfeld des Elektromagneten 300 und des Dauermagneten in entgegengesetzter Richtung abgelenkt.

Zum Umsteuern vorteilhaft wird die Beschleunigung aus einer Endposition in Richtung der anderen Endposition durch einen Stromimpuls eingeleitet, der gegenüber der Antriebsfrequenz bzw. der Periodendauer des Pendelantriebs ein definiertes Tastverhältnis aufweist. Der dabei zur Erregung der Erregerspule 301 eingetragene Stromimpuls ie weist vorteilhaft über die Zeit ein kleineres Integral auf als jeweils bei symmetrischer oder asymmetrischer Ansteuerung. Das Integral des Stroms ie über der Zeit repräsentiert die Ladung, welche der mitgeführten elektrischen Energiequelle 420 zur Ansteuerung zu entnehmen ist. Durch eine reduzierte Impulsbreite des Erregerstromes ie kann entweder bei gleicher Ladungsmenge die Amplitude des Stromimpulses ie und damit das Rückstellmoment erhöht werden, was das Bewegungsmoment des Antriebs erhöht, oder es kann bei gleichbleibendem Bewegungsmoment die der elektrischen Energiequelle 420 zu entnehmende Ladung reduziert werden, was die Laufzeit einer bestimmten elektrischen Energiequelle 420 erhöht oder es gestattet, dass bei vergleichbarer Laufzeit eine kleinere elektrische Energiequelle 420 zum Einsatz kommen kann.

Vorteilhaft ist optional ein Sensor angeordnet, der die aktuelle Position des Pendelhebels 312 erfasst und an die elektronische Steuerungseinheit 410 (vgl. Fig. 4) weitergibt. Die elektronische Steuerungseinheit 410 bestimmt aus der aktuellen Position des Pendelhebels 312, ob eine Erregung des Elektromagneten 300 zur Umsteuerung erforderlich ist, ob der Erregerstrom ie erforderlich ist oder ob der Erregerstrom ie reduziert oder abgeschaltet werden kann, ohne den Umsteuerungsvorgang zu behindern oder zu unterstützen.

Fig. 10 zeigt den prinzipiellen Zusammenhang zwischen dem Betrag der magnetischen Kraftwirkung und dem Betrag der Luftspaltbreite. Die Darstellung zeigt den grundsätzlich hyperbolischen Zusammenhang zwischen dem Betrag der magnetischen Kraftwirkung und dem Betrag der Luftspaltbreite, welcher sich aus dem Zusammenhang der magnetischen Kraft im Luftspalt nach der Gleichung $Fm ∼ K * {\left(ie*N/h\right)}^{2} ,$ darstellen lässt. Mit abnehmendem Luftspalt h nimmt die magnetische Kraftwirkung Fm quadratisch-hyperbolisch zu.

Durch die vorteilhafte Anordnung des Elektromagneten 300 (vgl. Fig. 4 bis Fig. 7d und Fig. 11) wird einerseits die hohe magnetische Haltekraft des Dauermagneten 313 zum Erzeugen eines hohen magnetischen Bewegungsmoments Mm in Synergie mit der bei der Auslenkung sm anziehenden und bei der Umsteuerung kompensierenden Wirkung des elektromagnetischen Kraftfeldes des Elektromagneten 300 genutzt, um mit möglichst geringem Erregerstrom ie und damit energiesparend hinsichtlich der mitgeführten Energiequelle 420 eine zur Umsteuerung erforderliche Kompensation des Magnetfeldes zu bewirken und damit eine energiesparende Umsteuerung des Pendelaktors einzuleiten.

Fig. 11 zeigt eine Anordnung des elektromagnetischen Pendelantriebs innerhalb des Köderkörpers. Der Dauermagnet 313 ist innerhalb des Köderkörpers 102 angeordnet. Der Köderkörper 102 wird schwanzseitig von der Körperhölle 100 des künstlichen oder toten natürlichen Angelköders 1 umschlossen. Dabei ist der Pendelhebel 312 innerhalb des Köderkörpers 102 in dessen hinterer Außenwand 104 gelagert und wird berührungslos vom Magnetfeld der Erregerspule 301 hin und her bewegt. Ein dadurch gebildeter Pendelaktor ist beweglich und gegen Eindringen von Wasser abgedichtet aus dem hinteren Ende des Köderkörpers 102 durchgeführt und geht in die Schwanzflosse über, die er in mechanisch oszillierende Bewegung quer zur Längsachse Y des Köderkörpers versetzt. Vorteilhaft umfasst die Durchführung des Pendelhebels 312 durch die hintere Wand des Köderkörpers 104 das dauerelastische Rückstellelement 314, ferner vorteilhaft umfassend ein dauerelastisches Dichtmittel, beispielsweise aus Gummi oder Silikon oder einem anderen Elastomer und bildet vorteilhaft das Pendellager 311, um welches der Pendelhebel 312 des Pendelaktors drehbar gelagert bewegbar ist. Das Pendellager 311 und die Abdichtung durch das dauerelastische Rückstellelement 314 umfassen vorteilhafter Weise ein elastisches Material wie zum Beispiel Kunststoff, insbesondere Elastomere, Gummi oder Silikon, mit einem definierten Elastizitätsmodul im Bereich zwischen 0,5 MPa bis 100 MPa, beziehungsweise einer Shore-Härte A nach DIN ISO 7619-1 im Bereich von 50 bis 95 Shore 00 oder von 10 Shore A bis 90 Shore A, vorzugsweise im Bereich von 10 Shore A bis 60 Shore A. Die Körperhülle 100 kann im Fall eines toten natürlichen Angelköders 1 den Pendelaktor vollständig umhüllen, sodass der Pendelaktor eine seitliche Bewegung des Körpers des Angelköders und/oder seiner Schwanzflosse 103 bewirkt.

Fig. 12 zeigt schematisch den Elektromagneten und die Komponenten des Pendelaktors eines Ausführungsbeispiels der ersten Ausführungsform mit einer zweiten Polachse P2, welche in einem Winkelbereich von 0° +/- 40° zur Längsachse des Köderkörpers angeordnet ist.

Dabei ist die Erregerspule 301 mit der ersten Polachse P1 in einem Winkelbereich von 0° +/- 40° zur Längsachse des Köderkörpers Y angeordnet und es ist der Dauermagnet 313 mit der zweiten Polachse P2 in einem Winkelbereich von 0° +/- 40° zur Längsachse des Köderkörpers Y angeordnet. Dabei kommt vorteilhaft eine bipolare Ansteuerung zum Einsatz. Alternativ kann in diesem Ausführungsbeispiel optional auch weniger vorteilhaft eine unipolare Ansteuerung vorgesehen werden. Die Nulllage befindet sich in diesem Ausführungsbeispiel in einer der Endpositionen smE und wird von dem elastischen Rückstellelement 314 aus einer möglicherweise vorherigen Ablenkung in eine Nulllage übergeführt, wenn der Elektromagnet 300 nicht erregt ist, das heißt, wenn kein Strom ie durch die Erregerspule 301 des Elektromagneten 300 fließt. Das elastische Rückstellelement 314 umfasst beispielsweise ein Elastomer, Gummi oder Silikon oder eine oder mehrere dauerelastische Federn aus Metall oder aus Kunststoff. Bei der bipolaren Ansteuerung erfolgt bei gegenpoliger Erregung durch den Erregerstrom ie im Elektromagneten 300 bezüglich der Polarität des Dauermagneten 313 eine Anziehung des Dauermagneten 313 hin zum Pol des Elektromagneten 300, wodurch der Pendelhebel 312 aus seiner Nulllage wegbewegt wird. Besonders vorteilhaft ist, wenn eine Erregerspule mit ferromagnetischem Kern 302 angeordnet ist, weil der Dauermagnet 313 auf den Kern aus ferromagnetischem Material 302 im Luftspalt h durch eine dauermagnetische Anziehungskraft eine zusätzliche magnetische Kraftwirkung Fm ausübt. Umgekehrt erfolgt bei gleichpoliger Erregung durch den Erregerstrom ie im Elektromagneten 300 bezüglich der Polarität des Dauermagneten 313 eine Abstoßung des Dauermagneten 313 weg vom Pol des Elektromagneten 300, wodurch der Pendelhebel 312 in seine Nulllage zurückbewegt wird. Wenn eine Erregerspule 301 mit Kern aus ferromagnetischem Material 302 angeordnet ist, muss dabei die zusätzliche magnetische Kraftwirkung des Dauermagneten 313 überwunden werden, welche der Dauermagnet 313 auf den Kern aus ferromagnetischem Material im Luftspalt h ausübt. Um eine symmetrische Bewegung der Schwanzflosse 103 bezüglich der Längsachse des Köderkörpers Y zu erreichen ist bei diesem Ausführungsbeispiel eine seitlich versetzte Anordnung des Pendelaktors und/oder des Elektromagneten 300 bezüglich der Längsachse des Pendelaktors Y vorteilhaft.

Fig. 13 zeigt das Schnittbild eines Angelköderantriebs mit einem Elektromagnet 300 umfassend eine Erregerspule 301 mit einer ersten Polachse P1 und einen Pendelaktor umfassend einen Dauermagneten 313 mit einer zweiten Polachse P2 und einen Pendelhebel 312, wobei aufgrund einer magnetischen Krafteinwirkung durch ein magnetisches Kraftfeld des Elektromagneten 300 der Dauermagnet 313 quer zur Längsachse des Köderkörpers Y bewegbar ist, wobei die Erregerspule 301 mit der ersten Polachse P1 zur Längsachse des Köderkörpers Y in einen Winkel im Bereich von 0° +/- 30° angeordnet ist, mit einem E-förmigem Polschuh oder Joch 303 aus ferromagnetischem Material, wobei ein mittlerer Kern 302 aus ferromagnetischem Material innerhalb der Erregerspule 301 angeordnet ist und über ferromagnetisches Material außerhalb an der Erregerspule 301 vorbei von einem ersten Polende 304 des mittleren Kerns aus ferromagnetischem Material 302 zu einem zweiten Polende 305 des mittleren Kerns aus ferromagnetischem Material 302 geführt ist und ein Polschuh oder Joch aus ferromagnetischem Material 303 ausbildet, welches am zweiten Polende 305 des mittleren Kerns aus ferromagnetischem Material 302 einen Luftspalt zum mittleren Kern aus ferromagnetischem Material 302 aufweist in welchem der Dauermagnet 313 beweglich derart angeordnet ist, dass sich die Projektion der ersten Polachse P1 durch die Erregerspule 301 und der zweiten Polachse P2 durch den Dauermagneten 313 in wenigstens einer Position in einem definierten Winkel schneiden.

Der Kern, umfassend den mittleren Kern aus ferromagnetischem Material 302 und wenigstens ein seitlicher Polschuh oder Joch aus ferromagnetischem Material 303 kann als flacher E-förmiger oder U-förmiger förmiger Kern oder als rotationssymmetrischer zylindrisch topfförmiger oder als zylindrisch topfförmiger und an den Enden jeweils ausgeschnittenem Polschuh oder Joch aus ferromagnetischem Material 303 wie beispielsweise in Fig. 14a und Fig. 14b dargestellt ausgebildet sein.

Fig. 14a und Fig. 14b zeigen ein Ausführungsbeispiel mit partiell topfförmigem Polschuh oder Joch aus ferromagnetischem Material 303 jeweils als Schnittbild und Fig. 14a zeigt ein Ausführungsbeispiel, bei welchem der mittlere Kern 302 und die seitlichen Enden des Polschuhs oder Jochs aus ferromagnetischem Material 303 sind in diesem Ausführungsbeispiel so ausgelegt sind, dass der Dauermagnet 313 bei seiner Drehung im Pendellager 311 um die Pendellagerdrehachse 311' die kreisbogenförmigen Abstandslinien h0 und he derart durchfährt, dass der Dauermagnet in seiner jeweiligen Endposition einen jeweils minimalen Abstand zum mittleren Kern aus ferromagnetischem Material 302 und zum Polschuh oder Joch aus ferromagnetischem Material 303 einnimmt und in dieser Position die höchste magnetische Anziehungskraft ausübt. Vorteilhaft verharrt der Dauermagnet auch ohne einen optional möglichen mechanischen Anschlag bis zum Umsteuervorgang in dieser Position (vgl. Fig. 9a). Der Antrieb ist dadurch besonders geräuscharm betreibbar.

Fig. 14b zeigt im Schnittbild den Querschnitt die den Luftspalt bildenden Enden des mittleren Kerns aus ferromagnetischem Material 302 und die Enden des Polschuhs oder Jochs aus ferromagnetischem Material 303. Vorteilhafter Weise weist der Querschnitt eine Breite auf, die mit der Form der magnetisch wirksamen Kante des Dauermagneten korrespondiert.

Die Enden eines topfförmigen Polschuhs oder Jochs aus ferromagnetischem Material 303 können optional gerade ausgeführt werden, um beispielsweise mit der geraden Kante eines würfel- oder quaderförmigen Dauermagneten 313 zu korrespondieren. Im Fall von stab- oder zylinderförmigen Dauermagneten können die Enden jeweils bogenförmig ausgeführt sein, sodass in jedem der genannten Fälle ein möglichst homogener Luftspalt zwischen der Kante des Dauermagneten 313 und dem mittleren Kern aus ferromagnetischem Material 302 und dem Polschuh oder Joch aus ferromagnetischem Material 303 gebildet wird. Dadurch wird einerseits eine hohe Kraftwirkung des Dauermagneten 313 in den Endpositionen erreicht und es ist andererseits eine hohe magnetische Flussdichte zur Umsteuerung des Pendelhebels 312 bereitstellbar.

Fig. 15 zeigt ein Montagebeispiel mit Schnurstopper bei externer Schnurführung. Mit der zunehmenden Masse an Komponenten wie beispielsweise der Erregerspule 301 mit den ferromagnetischen Komponenten und der Energiequelle des Angelköders 1 nimmt die nach unten gerichtete Gewichtskraft auf den Angelköder 1 zu. Um diese beim Tauchvorgang des Angelköders 1 im umgebenden Wasser 3 so auszugleichen, dass der Angelköder 1 im umgebenden Wasser 3 eine stabile Position einnimmt, wird vorteilhaft am Köderkörper 102 ein Schwimmkörper 150 angebracht, der einerseits die Neigung des Köderkörpers 102 und die Tauchtiefe im umgebenden Wasser 3 statisch bestimmt und andererseits dem Angler an der Oberfläche des umgebenden Wassers 3 die aktuelle Position des Angelköders 1 anzeigt. Im dargestellten Ausführungsbeispiel ist an der Verbindungsschnur zum Angler 10 ein an der Schnur verstellbarer und feststellbarer Schnurstopper 138 angebracht. Die Verbindungsschnur zum Angler 10 ist von hinten durch ein hinteres zweites Befestigungsmittel 132 geschleift, welches einen hinteren zweiten Umlenkpunkt 142 bereitstellt. Die Verbindungsschnur zum Angler 10 ist weiter durch ein vorderes erstes Befestigungsmittel 131 geschleift, welches einen vorderen ersten Umlenkpunkt 141 bereitstellt. Von dort aus ist die Verbindungsschnur zum Angler 10 weiter geführt zum Schwimmkörper 150 an dessen Unterseite sie befestigt ist.

Durch die Gewichtskraft gleitet der Angelköder 1 entlang der Verbindungsschnur zum Angler 10 zunächst im umgebenden Wasser 3 nach unten, bis er am hinteren zweiten Umlenkpunkt 142 des hinteren zweiten Befestigungsmittels 132 die Position des Schnurstoppers 138 erreicht. Eine vom Angelköderantrieb erzeugte vorwärts in y-Richtung gerichteten Summe der Kraftkomponenten Fyv bewirkt zunächst, dass der Angelköder 1 diese Position wieder verlässt, bis die vom Angelköderantrieb erzeugte Bewegung über den zwischen Angelköder 1 und Schwimmkörper 150 liegenden Teil der Verbindungsschnur zum Angler 10 den Schwimmkörper 150 in Bewegung setzt und dadurch eine nach oben gerichtete Kraftkomponente Fa im Gleichgewicht zu einer nach unten gerichteten Gewichtskraft erfährt, welche den Schnurstopper 138 wieder an den hinteren zweiten Umlenkpunkt 142 des hinteren zweiten Befestigungsmittels 132 am Köderkörper 102 heranzieht und die Position des Angelköders 1 an der Verbindungsschnur zum Angler 10 und damit die Tiefe, in welcher sich der Angelköder bewegt stabilisiert.

Optional ist das vordere erste Befestigungsmittel 131 an einem vorderen ersten Verlängerungselement 133 angebracht. Vorteilhaft umfasst das vordere erste Verlängerungselement 133 elastisch verformbares Material, beispielsweise Metall oder Kunststoff und verbleibt bis zur nächsten Verformung in der eingestellten Form. Durch diese Maßnahmen ist der Angelköder 1 in der Neigung der Längsachse des Köderkörpers Y bezüglich der Lotachse 250 im umgebenden Wasser 3 in Synergie mit der Gewichtskraft des Angelköderantriebs und der Komponenten des Angelköders 1 statisch und in Synergie mit der vom Angelköderantrieb erzeugten vorwärts in y-Richtung gerichteten Summe von Kraftkomponenten Fyv in seiner Neigung bezüglich der Lotachse 250 dynamisch trimmbar und der Angelköder 1 ist in seiner Position in der Tiefe bezüglich der Oberfläche des umgebenden Wassers 3 definiert einstellbar.

Die Verbindungsschnur zum Angler 10 kann je nach gewünschter seitlicher und/oder vorwärts gerichteter Bewegung v im umgebenden Wasser 3 an einer beliebigen Stelle des Köderkörpers 102 befestigt werden. Wenn eine definiert steuerbare Vorwärtsbewegung v, weggerichtet vom Angler mit natürlichem Bewegungsablauf des Köderkörpers erzielt werden soll, ist die Verbindungsschnur zum Angler 10 hinter dem Antriebspunkt zu befestigen, vorzugsweise hinter dem Pendellager 311 oder einer Hilfsgeraden, der Pendellagerdrehachse 311', welche axial innerhalb des Pendellagers 311 verläuft.

In diesem Beispiel ist die Verbindungsschnur zum Angler 10 von einem Schwimmkörper 150 durch ein vorderes erstes Befestigungsmittel 131, welches einen vorderen ersten Umlenkpunkt 141 bildet zu einem hinteren zweiten Befestigungsmittel 132, welches einen hinteren zweiten Umlenkpunkt 142 bildet, schleifbar, wo die Verbindungsschur zum Angler 10 über einen Schnurstopper 138 in seiner Bewegung relativ zu den Umlenkpunkten begrenzbar ist. Vorteilhaft ist der hintere zweite Umlenkpunkt 142 hinter der Pendeldrehachse 311' des Angelköderantriebs angeordnet.

In einem bevorzugten Ausführungsbeispiel ist die Verbindungsschnur zum Angler 10 vom Kopfende des Köderkörpers aus gesehen hinter der Pendellagerachse 311' des Antriebs befestigt.

Fig. 16 zeigt ein Montagebeispiel mit Schnurstopper 138 entsprechend Fig. 15 bei interner Schnurführung. Vorteilhaft ist in diesem Ausführungsbeispiel innerhalb des Köderkörpers 102 ein Verbindungsrohr 135 angeordnet, durch welches die Verbindungsschnur zum Angler 10 geschleift wird und dessen hintere zweite Öffnung 137 einen hinteren zweiten Umlenkpunkt 147 bildet und dessen vordere erste Öffnung 136 einen vorderen zweiten Umlenkpunkt 146 bildet.

In diesem Ausführungsbeispiel ist die Verbindungsschnur zum Angler 10 von einem Schwimmkörper 150 durch ein Verbindungsrohr 135 innerhalb des Köderkörpers 102 schleifbar.

Man versteht, dass die obige Beschreibung von bevorzugten Ausführungsbeispielen nur beispielhaft ist, und dass verschiedene Modifikationen von Fachleuten auf dem Gebiet der Technik ausgeführt werden können. Obwohl verschiedene Ausführungsbeispiele oben mit einem gewissen Grad an Genauigkeit beschrieben wurden, oder mit Bezug auf eine oder mehrere einzelne Ausführungsbeispiele, könnten Fachleute auf dem Gebiet zahlreiche Änderungen an den offenbarten Ausführungsbeispielen vornehmen, ohne dabei vom Wesen oder dem Schutzbereich dieser Erfindung abzuweichen. Aspekte beliebiger der oben beschriebenen Beispiele können mit Aspekten beliebiger anderer beschriebener Beispiele kombiniert werden, um weitere Beispiele zu bilden, ohne eine Wirkung zu verlieren.

### Bezugszeichenliste

- 1: Angelköder
- 2: Angler
- 3: umgebendes Wasser
- 10: Verbindungsschnur zum Angler
- 11: Angelrute
- 12: Aufrollvorrichtung
- 100: Körperhülle
- 101: Übergangsbereich der Schwanzflosse
- 102: Köderkörper
- 103: Schwanzflosse
- 104: hintere Außenwand des Köderkörpers
- 105: vordere Außenwand des Köderkörpers
- 110: Fanghaken
- 111: Fanghakenbewehrung
- 120; 120': Seitenruder
- 121: rechtes Höhenruder
- 122: linkes Höhenruder
- 130; 130': Befestigungsmittel
- 131: vorderes erstes Befestigungsmittel
- 132: hinteres zweites Befestigungsmittel
- 133: vorderes erstes Verlängerungselement
- 134: hinteres zweites Verlängerungselement
- 135: Verbindungsrohr
- 136: vordere erste Öffnung
- 137: hintere zweite Öffnung
- 138: Schnurstopper
- 141: vorderer erster Umlenkpunkt
- 142: hinterer zweiter Umlenkpunkt
- 146: vorderer erster Umlenkpunkt
- 147: hinterer zweiter Umlenkpunkt
- 150: Schwimmkörper
- 200: Formschwerpunkt
- 210: Gewichtsschwerpunkt
- 220: Antriebspunkt
- 230: Befestigungspunkt
- 250: Lotachse
- 300: Elektromagnet
- 301: Erregerspule
- 302: Kern aus ferromagnetischem Material
- 303: Polschuh oder Joch aus ferromagnetischem Material
- 304: erstes Polende
- 305: zweites Polende
- 310: Pendelaktor
- 311: Pendellager
- 311': Pendellagerdrehachse
- 312: Pendelhebel
- 313: Dauermagnet
- 314: elastisches Rückstellelement
- 330: schwanzseitiger Antrieb
- 400: Antriebstreiber
- 410: elektronische Steuerungseinheit
- 420: elektrische Energiequelle
- 421: optionaler Gleichspannungswandler
- 422: manuell bedienbares Steuerungselement
- 430: Schnursensor
- 431: Beschleunigungssensor
- 440: künstliche Schwimmblase
- 450: manuell bedienbarer Steuerungsaktor
- 460, 460': Schnittstelle
- Y: Längsachse des Köderkörpers
- S: magnetischer Südpol
- N: magnetischer Nordpol
- P1: erste Polachse
- P1': weitere erste Polachse
- P2: zweite Polachse des Dauermagneten
- sm: Auslenkung
- h: Luftspalt
- hi: aktueller Luftspalt als Funktion von s
- h0: Luftspalt in Nulllage
- hE: Luftspalt in Endlage
- Mtr: dynamisches Trimm-Moment
- Rp: Pendelradius
- L: Abstand des Pendellagers vom Elektromagneten
- Fm: resultierende magnetische Kraft
- Fmd: magnetische Kraftkomponente quer zum Pendelhebel
- FmE: resultierende magnetische Kraft in Endlage
- Fr: rückstellende Kraftkomponente
- Mm: magnetisches Bewegungsmoment = Rp*Fmd
- y: optionale Bewegungsrichtung vorwärts
- x: horizontale Bewegungsrichtung rechts / links quer zur optionalen Bewegungsrichtung y
- z: vertikale Richtung auf / ab quer zur optionalen Bewegungsrichtung y
- v: Geschwindigkeit bei Bewegung in Bewegungsrichtung y, relativ zum umgebenden Wasser
- Fyv: vorwärts in y-Richtung gerichtete Summe der Kraftkomponenten im Angriffspunkt
- Fyr: träge Kraftkomponente im Befestigungspunkt oder im hinteren zweiten Umlenkpunkt
- ue: elektrische Erregerspannung
- ie.: elektrischer Erregerstrom

## Patentansprüche

1. Elektromagnetischer Pendelantrieb umfassend eine elektrische Energiequelle (420), eine elektronische Steuerungseinheit (410), einen Elektromagnet (300) umfassend eine Erregerspule (301) mit einer ersten Polachse (P1; P1') und einen Pendelaktor umfassend einen Dauermagneten (313) mit einer zweiten Polachse (P2) und einen Pendelhebel (312), wobei aufgrund einer magnetischen Krafteinwirkung durch ein magnetisches Kraftfeld des Elektromagneten (300) der Dauermagnet (313) quer zur Längsachse des Körpers (Y) bewegbar ist, **dadurch gekennzeichnet, dass** die Erregerspule (301) mit der ersten Polachse (P1; P1') zur Längsachse des Körpers (Y) in einen Winkel im Bereich von 0° +/- 30° angeordnet ist und der Dauermagnet (313) mit der zweiten Polachse (P2) zur Längsachse des Köderkörpers (Y) innerhalb eines Winkelbereichs von 90° +/- 40° angeordnet ist.

2. Elektromagnetischer Pendelantrieb nach Anspruch 1, **gekennzeichnet dadurch, dass** die Erregerspule (301) einen Kern aus ferromagnetischem Material (302) umfasst.

3. Elektromagnetischer Pendelantrieb nach Anspruch 2, **gekennzeichnet dadurch, dass** ein mittlerer Kern aus ferromagnetischem Material (302) innerhalb der Erregerspule (301) angeordnet ist und über ferromagnetisches Material außerhalb an der Erregerspule (301) vorbei von einem ersten Polende (304) des mittleren Kerns aus ferromagnetischem Material (302) zu einem zweiten Polende (305) des mittleren Kerns aus ferromagnetischem Material (302) geführt ist und einen Polschuh oder ein Joch aus ferromagnetischem Material (303) ausbildet, welches am zweiten Polende (305) des mittleren Kerns aus ferromagnetischem Material (302) einen Luftspalt zum mittleren Kern aus ferromagnetischem Material (302) aufweist in welchem der Dauermagnet (313) beweglich derart angeordnet ist, dass sich die Projektion der ersten Polachse (P1) durch die Erregerspule (301) und der zweiten Polachse (P2) durch den Dauermagneten (313) in wenigstens einer Position in einem definierten Winkel schneiden.

4. Elektromagnetischer Pendelantrieb nach Anspruch 3, **gekennzeichnet dadurch, dass** der Polschuh oder das Joch aus ferromagnetischem Material (303) U-förmig oder E-förmig oder vollständig oder wenigstens teilweise topfförmig ausgebildet ist.

5. Elektromagnetischer Pendelantrieb nach Anspruch 1, **gekennzeichnet dadurch, dass** die Ansteuerung des Elektromagneten (300) mit wechselnder Polarität umfassend eine elektrisch bipolare Wechselspannung als Ansteuerspannung (ue) an der Erregerspule (301) und einen bipolar fließenden Wechselstrom als Erregerstrom (ie) durch die Erregerspule (301) des Elektromagneten (300), erfolgt.

6. Elektromagnetischer Pendelantrieb nach Anspruch 1, **gekennzeichnet dadurch, dass** ein Umsteuerungsvorgang des Pendelhebels (312) von einer Endposition (smE+, smE-) durch einen Erregerstrom (ie) durch die Erregerspule (301) des Elektromagneten (300) erfolgt, wobei der Erregerstrom (ie) abgeschaltet oder reduziert wird, wenn der Pendelhebel (312) eine definierte Position zwischen den Endpositionen (smE+; smE-) erreicht hat.

7. Elektromagnetischer Pendelantrieb nach Anspruch 1 oder 6, **gekennzeichnet dadurch, dass** Mittel zur Erfassung der Position des Pendelhebels (312) angeordnet sind, wobei die Mittel über die elektronische Steuerungseinheit (410) eine Abschaltung oder Reduzierung des Erregerstroms (ie) veranlassen.

8. Elektromagnetischer Pendelantrieb nach Anspruch 1, **gekennzeichnet dadurch, dass** die Ansteuerung der Erregerspule (301) des Elektromagneten (300) über einen elektrischen Hochpass erfolgt, wobei dynamisch hohe Impulse des Erregerstromes (ie) in der Erregerspule (301) des Elektromagneten (300) erzeugbar sind und dadurch die aus der elektrischen Energiequelle (420) entnommene elektrische Ladung begrenzbar ist.

9. Elektromagnetischer Pendelantrieb nach einem der vorhergehenden Ansprüche, **gekennzeichnet dadurch, dass** zwischen dem Elektromagneten (300) und dem Dauermagneten (313) ein Luftspalt (h) angeordnet ist, wobei der Luftspalt (h) bei einer Auslenkung (sm) des Pendelhebels (312) in Abhängigkeit von der Auslenkung (sm) des Pendelhebels (312) aus seiner Nulllage kleiner wird, in einer Endposition (smE+; smE-) ein Minimum erreicht und beim Überschreiten einer Endposition ( smE+; smE- ) größer wird.

## Claims

1. An electromagnetic pendulum drive comprising an electrical power source (420), an electronic control unit (410), an electromagnet (300) comprising an excitation coil (301) with a first pole axis (P1; P1'), and a pendulum actuator comprising a permanent magnet (313) with a second pole axis (P2) and a pendulum lever (312), wherein, due to the magnetic force exerted by a magnetic field of the electromagnet (300), the permanent magnet (313) is movable transversely to the longitudinal axis of the body (Y), **characterized in that** the excitation coil (301), with its first pole axis (P1; P1') is arranged at an angle in the range of 0° +/- 30° relative to the longitudinal axis of the body (Y), and the permanent magnet (313), with its second pole axis (P2), is arranged within an angular range of 90° +/- 40° relative to the longitudinal axis of the lure body (Y).

2. An electromagnetic pendulum drive according to claim 1, **characterized in that** the excitation coil (301) comprises a core made of ferromagnetic material (302).

3. An electromagnetic pendulum drive according to claim 2, **characterized in that** a central core made of ferromagnetic material (302) is arranged inside the excitation coil (301) and, via ferromagnetic material outside the excitation coil (301), extends past the excitation coil (301) from the first pole end (304) of the central core made of ferromagnetic material (302) to a second pole end (305) of the central core made of ferromagnetic material (302) via ferromagnetic material on the outside of the excitation coil (301), and forms a pole shoe or yoke made of ferromagnetic material (303), which, at the second pole end (305) of the central core made of ferromagnetic material (302) and forms an air gap with respect to the central core made of ferromagnetic material (302), within which the permanent magnet (313) is movably arranged such that the projection of the first pole axis (P1) through the excitation coil (301) and the projection of the second pole axis (P2) through the permanent magnet (313) intersect at a defined angle in at least one position.

4. An electromagnetic pendulum drive according to claim 3, **characterized in that** the pole shoe or yoke, made of ferromagnetic material (303), is U-shaped, E-shaped, or completely or at least partially pot-shaped.

5. An electromagnetic pendulum drive according to claim 1, **characterized in that** the control of the electromagnet (300) includes an electrically bipolar alternating voltage as a control voltage (ue) applied to the excitation coil (301) and a bipolar alternating current as the excitation current (ie) flowing through the excitation coil (301) of the electromagnet (300).

6. An electromagnetic pendulum drive according to claim 1, **characterized in that** the pendulum lever (312) undergoes a reversing operation from an end position (smE+, smE-) by an excitation current (ie) flowing through the excitation coil (301) of the electromagnet (300), wherein the excitation current (ie) is turned off or reduced when the pendulum lever (312) has reached a defined position between the end positions (smE+; smE-).

7. An electromagnetic pendulum drive according to claim 1 or 6, **characterized in that** means for detecting the position of the pendulum lever (312) are located, wherein the means cause the excitation current (ie) to be shut off or reduced via the electronic control unit (410).

8. An electromagnetic pendulum drive according to claim 1, **characterized in that** the control of the electromagnet (300) involves controlling the excitation coil (301) via an electrical high-pass filter, whereby dynamically high pulses of the excitation current (ie) can be generated in the excitation coil (301) of the electromagnet (300), thereby limiting the electrical charge drawn from the electrical power source (420).

9. An electromagnetic pendulum drive according to one of the preceding claims, **characterized in that** an air gap (h) is arranged between the electromagnet (300) and the permanent magnet (313), wherein the air gap (h) decreases as the pendulum lever (312) is deflected (sm) in accordance with the deflection (sm) of the pendulum lever (312) from its zero position, reaches a minimum in an end position (smE+; smE-), and becomes larger upon passing an end position (smE+; smE-).

## Revendications

1. Entraînement électromagnétique à pendule comprenant une source d'énergie électrique (420), une unité de commande électronique (410), un électroaimant (300) comprenant une bobine d'excitation (301) avec un premier axe polaire (P1 ; P1') et un actionneur à pendule comprenant un aimant permanent (313) présentant un deuxième axe polaire (P2) et un levier de pendule (312), dans lequel, sous l'effet d'une force magnétique générée par un champ magnétique de l'électroaimant (300), l'aimant permanent (313) est mobile transversalement à l'axe longitudinal du corps (Y), **caractérisé en ce que** la bobine d'excitation (301), dont le premier axe polaire (P1 ; P1') forme un angle compris entre 0° et ± 30° par rapport à l'axe longitudinal du corps (Y), et l'aimant permanent (313) présente un deuxième axe polaire (P2) formant un angle compris entre 90° et ± 40° par rapport à l'axe longitudinal du corps (Y).

2. Entraînement électromagnétique à pendule selon la revendication 1, **caractérisé en ce que** la bobine d'excitation (301) comprend un noyau en matériau ferromagnétique (302).

3. Entraînement électromagnétique à pendule selon la revendication 2, **caractérisé en ce qu'**un noyau central en matériau ferromagnétique (302) est disposé à l'intérieur de la bobine d'excitation (301) et qu'un circuit magnétique est établi, via du matériau ferromagnétique situé à l'extérieur, en contournant la bobine d'excitation (301), depuis une première extrémité polaire (304) du noyau central en matériau ferromagnétique (302) vers une deuxième extrémité polaire (305) du noyau central en matériau ferromagnétique (302) et forme une pièce polaire ou une culasse en matériau ferromagnétique (303), qui présente, au niveau de la deuxième extrémité polaire (305) du noyau central en matériau ferromagnétique (302) présente un entrefer par rapport au noyau central en matériau ferromagnétique (302), dans lequel l'aimant permanent (313) est disposé de manière mobile, de telle sorte que la projection du premier axe polaire (P1) à travers la bobine d'excitation (301) et celle du deuxième axe polaire (P2) à travers l'aimant permanent (313) se coupent selon un angle défini dans au moins une position.

4. Entraînement électromagnétique à pendule selon la revendication 3, **caractérisé en ce que** la pièce polaire ou la culasse en matériau ferromagnétique (303) est réalisée en forme de U ou de E, ou entièrement ou au moins partiellement en forme de pot.

5. Entraînement électromagnétique à pendule selon la revendication 1, **caractérisé en ce que** la commande de l'électroaimant (300) à polarité alternée comprend une tension alternative électriquement bipolaire servant de tension de commande (ue) aux bornes de la bobine d'excitation (301) et d'un courant alternatif bipolaire (ie) traversant la bobine d'excitation (301) de l'électroaimant (300).

6. Entraînement électromagnétique à pendule selon la revendication 1, **caractérisé en ce qu'**une opération de commutation du levier à pendule (312) d'une position extrême (smE+, smE-) s'effectue par un courant d'excitation (ie) traversant la bobine d'excitation (301) de l'électroaimant (300), le courant d'excitation (ie) étant coupé ou réduit lorsque le levier pendulaire (312) a atteint une position définie entre les positions extrêmes (smE+ ; smE-).

7. Entraînement à pendule électromagnétique selon la revendication 1 ou 6, **caractérisé en ce que** des moyens de détection de la position du levier pendulaire (312) sont prévus, lesquels moyens provoquent, via l'unité de commande électronique (410), une coupure ou une réduction du courant d'excitation (ie).

8. Entraînement électromagnétique à pendule selon la revendication 1, **caractérisé en ce que** la commande de la bobine d'excitation (301) de l'électroaimant (300) s'effectue par l'intermédiaire d'un filtre passe-haut électrique, des impulsions dynamiques élevées du courant d'excitation (ie) peuvent être générées dans la bobine d'excitation (301) de l'électroaimant (300), ce qui permet de limiter la charge électrique prélevée sur la source d'énergie électrique (420).

9. Entraînement électromagnétique à pendule selon l'une des revendications précédentes, **caractérisé en ce qu'**un entrefer (h) est disposé entre l'électroaimant (300) et l'aimant permanent (313), l'entrefer (h) diminuant lors d'une déviation (sm) du levier pendulaire (312) en fonction de la déviation (sm) du levier pendulaire (312) par rapport à sa position zéro, atteint un minimum dans une position finale (smE+ ; smE-) et augmente lorsque la position finale ( smE+ ; smE-) est dépassée.
